(19) Europäisches Patentamt / European Patent Office / Office européen des brevets

(11) **EP 4 742 602 A1**

(12) **EUROPEAN PATENT APPLICATION**
published in accordance with Art. 153(4) EPC

(43) Date of publication:
**13.05.2026 Bulletin 2026/20**

(21) Application number: **24848051.9**

(22) Date of filing: **19.07.2024**

(51) International Patent Classification (IPC):
**H04L 25/02** $^{(2006.01)}$

(52) Cooperative Patent Classification (CPC):
**H04L 25/02; H04L 27/26**

(86) International application number:
**PCT/CN2024/106501**

(87) International publication number:
**WO 2025/026092 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.07.2023 CN 202310952235**

(71) Applicant: **Huawei Technologies Co., Ltd.**
**Shenzhen, Guangdong 518129 (CN)**

(72) Inventors:
• **LIU, Chenchen**
**Shenzhen, Guangdong 518129 (CN)**
• **MAO, Zhi**
**Shenzhen, Guangdong 518129 (CN)**
• **GAN, Ming**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND COMMUNICATION APPARATUS**

(57) This application provides a communication method and apparatus. The method may be applied to a WLAN system supporting 802.11 series protocols such as a next-generation Wi-Fi protocol of IEEE 802.11ax like 802.11be, Wi-Fi 7, or EHT, and a next-generation protocol of 802.11be like Wi-Fi 8, and may also be applied to a UWB-based wireless personal area network system, a sensing system, and the like. The method includes: A transmit end generates a physical layer protocol data unit PPDU, and sends the PPDU to a receive end. The PPDU includes a first field, the first field is used to carry a first sequence, the first sequence is used by the receive end to perform channel estimation, the first sequence corresponds to a first bandwidth, and the first bandwidth is greater than 320 MHz. In the solutions of this application, a channel estimation sequence corresponding to a bandwidth greater than 320 MHz is designed, to support signal transmission in a large-bandwidth (for example, 640 MHz or 480 MHz) scenario.

400

Transmit end → S410: Generate a PPDU → S420: PPDU → Receive end

S430: Perform channel estimation based on a first sequence that passes through a wireless channel and a preset first sequence

FIG. 4

EP 4 742 602 A1

## Description

This application claims priority to Chinese Patent Application No. 202310952235.X, filed with the China National Intellectual Property Administration on July 29, 2023 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

As wireless traffic increases at an ultra-high speed, users have increasingly high requirements on communication quality of service, such as a low latency and ultra-reliability. As a key technology for carrying a wireless traffic service, a wireless local area network (wireless local area network, WLAN) continuously develops and evolves to meet increasingly high requirements of people for wireless transmission.

Since the 802.11a/g standard, the WLAN has experienced standard evolution processes such as the 802.11n standard, 802.11ac standard, 802.11ax standard, and 802.11be standard. 802.11be uses an orthogonal frequency division multiple access (orthogonal frequency division multiple access, OFDMA) technology, and supports transmission of a physical layer protocol data unit (physical layer protocol data unit, PPDU) with a maximum bandwidth of 320 MHz, to implement an ultra-high transmission rate and support an ultra-massive user scenario. However, more subcarriers in a large bandwidth bring a higher peak to average power ratio (peak to average power ratio, PAPR), resulting in non-linear distortion of a signal and reducing system performance.

## SUMMARY

This application provides a communication method and a communication apparatus. A channel estimation sequence corresponding to a large bandwidth (a bandwidth greater than 320 MHz, for example, a 640 MHz bandwidth or a 480 MHz bandwidth) is designed, to support large-bandwidth communication.

According to a first aspect, a communication method is provided. The method may be performed by a transmit end, or may be performed by a component (for example, a chip, a circuit, or a module) configured in the transmit end. This is not limited in this application.

The method includes: generating a physical layer protocol data unit PPDU, where the PPDU includes a first field, the first field is used to carry a first sequence, the first sequence is used by a receive end to perform channel estimation, the first sequence corresponds to a first bandwidth, and the first bandwidth is greater than 320 MHz; and sending the PPDU to the receive end.

Optionally, if the first bandwidth is 640 MHz or 480 MHz, the first sequence may be understood as a channel estimation sequence in a 640 MHz PPDU or a 480 MHz PPDU.

For example, the transmit end may be an access point (access point, AP) or a non-access point (non-access point, non-AP) station (station, STA). The receive end may be an AP or a STA. This is not limited in this application. For example, in a communication scenario, the transmit end is an AP, and the receive end is a STA; or in a communication scenario, the transmit end is a STA, and the receive end is an AP; or in a communication scenario, the transmit end is a STA, and the receive end is a STA; or in a communication scenario, the transmit end is an AP, and the receive end is an AP.

According to the foregoing solution, the first sequence (namely, a long training field (long training field, LTF) sequence) corresponding to the bandwidth greater than 320 MHz is designed, to support signal transmission in a future large-bandwidth (for example, 640 MHz or 480 MHz) scenario. The first sequence has a low PAPR in the entire bandwidth and also has a low PAPR on an RU/MRU. The first sequence also has a low PAPR on a plurality of spatial streams in a multi-spatial-stream transmission scenario. Therefore, system transmission performance can be ensured.

With reference to the first aspect, in some implementations of the first aspect, the first sequence includes N subsequences, and any one of the N subsequences is obtained based on a base sequence and a parameter corresponding to the subsequence, for example, is obtained by multiplying the base sequence by the parameter corresponding to the subsequence. The base sequence includes a first base sequence and a second base sequence. For example, the first base sequence is LTF80MHz_4x_left, and the second base sequence is LTF80MHz_4x_right. The parameter corresponding to the any subsequence may be ±1.

According to the foregoing solution, the first base sequence and the second base sequence are used as base sequences, and any one of the N subsequences in the first sequence is obtained by multiplying the base sequence by ±1. It can be ensured that the first sequence has a low PAPR in the entire bandwidth and also has a low PAPR on each RU/MRU. The first sequence also has a low PAPR on a plurality of spatial streams in a multi-spatial-stream transmission scenario, to fully ensure communication performance of all users.

With reference to the first aspect, in some implementations of the first aspect, when the first bandwidth is 640 MHz, parameters $[c_1, ..., c_{16}]$ corresponding to the N subsequences satisfy one or more of the following:

$$[c_9, c_{10}, c_{11}, c_{12}] = \pm[-c_8, c_7, -c_6, c_5];$$

$$[c_{13}, c_{14}, c_{15}, c_{16}] = \pm[-c_4, c_3, -c_2, c_1];$$

$$[c_1, c_2, c_3, c_4] = \pm[-c_8, c_7, -c_6, c_5];$$

and

$$[c_9, c_{10}, c_{11}, c_{12}] = \pm[-c_{13}, c_{14}, -c_{15}, c_{16}].$$

For example, $[c_1, c_2, c_3, c_4]$ corresponds to a first 160 MHz bandwidth, $[c_5, c_6, c_7, c_8]$ corresponds to a second 160 MHz bandwidth, $[c_9, c_{10}, c_{11}, c_{12}]$ corresponds to a third 160 MHz bandwidth, and $[c_{13}, c_{14}, c_{15}, c_{16}]$ corresponds to a fourth 160 MHz bandwidth. Parameters $c_i$ corresponding to at least two 160 MHz bandwidths are limited to meet a feature of the foregoing combined sequence, so that a longer LTF sequence has a low PAPR in the entire bandwidth and also has a low PAPR on an RU/MRU. The first sequence has a low PAPR on each spatial stream for multi-spatial-stream transmission. In addition, elements in the parameters $[c_1, ..., c_{16}]$ provided in this application meet a symmetric splicing condition of the combined sequence. This can reduce a large amount of calculation, reduce calculation difficulty and complexity, to more quickly and accurately obtain the LTF sequence of the 640 MHz PPDU provided above.

Optionally, the parameters $c_i$ corresponding to the at least two 160 MHz bandwidths are located at a symmetric position, and a symmetric point is not within any of the 160 MHz bandwidths. A relationship between $[c_1, c_2, c_3, c_4]$ and $[c_9, c_{10}, c_{11}, c_{12}]$ and a relationship between $[c_5, c_6, c_7, c_8]$ and $[c_{13}, c_{14}, c_{15}, c_{16}]$ are not limited in this application.

According to the foregoing solution, when parameters corresponding to the first sequence meet the foregoing symmetric splicing condition, the 640 MHz LTF sequence has a low PAPR in the entire bandwidth and also has a low PAPR on a corresponding RU/MRU. The first sequence also has a low PAPR on a plurality of spatial streams in a multi-spatial-stream transmission scenario, so that signal transmission quality can be ensured, and system transmission performance can be improved.

With reference to the first aspect, in some implementations of the first aspect, when the first bandwidth is 640 MHz, parameters corresponding to the N subsequences satisfy any one of the following:

$$[c_1, \cdots, c_{16}] = \pm[1, -1, 1, 1, 1, -1, -1, -1, -1, 1, -1, -1, -1, 1, 1, 1];$$

or

$$[c_1, \cdots, c_{16}] = \pm[1, 1, 1, -1, -1, -1, 1, -1, -1, -1, -1, 1, 1, 1, -1, 1];$$

or

$$[c_1, \cdots, c_{16}] = \pm[1, 1, -1, 1, -1, -1, -1, 1, -1, -1, 1, -1, 1, 1, 1, -1];$$

or

$$[c_1, \cdots, c_{16}] = \pm[-1, 1, 1, 1, -1, 1, -1, -1, 1, -1, -1, -1, 1, -1, 1, 1];$$

or

$$[c_1, \cdots, c_{16}] = \pm[1, 1, -1, 1, -1, -1, -1, 1, -1, 1, 1, -1, 1, 1, 1, -1];$$

or

3

$$[c_1, \cdots, c_{16}] = \pm[-1, \ 1, 1, \ 1, -1, 1, 1, -1, 1, -1, -1, -1, \ 1, -1, \ 1, 1];$$

or

$$[c_1, \cdots, c_{16}] = \pm[1, \ 1, -1, \ 1, -1, -1, -1, \ 1, \ 1, -1, \ 1, -1, -1, \ 1, -1, -1];$$

or

$$[c_1, \cdots, c_{16}] = \pm[-1, -1, 1, -1, -1, 1, -1, \ 1, \ 1, -1, -1, -1, 1, -1, 1, 1];$$

or

$$[c_1, \cdots, c_{16}] = \pm[1, -1, \ 1, \ 1, \ 1, -1, -1, -1, -1, \ 1, \ 1, \ 1, \ 1, \ 1, -1, \ 1];$$

or

$$[c_1, \cdots, c_{16}] = \pm[1, -1, \ 1, \ 1, \ 1, 1, 1, -1, -1, -1, -1, \ 1, \ 1, \ 1, -1, \ 1];$$

or

$$[c_1, \cdots, c_{16}] = \pm[1, -1, \ 1, -1, -1, \ 1, -1, -1, \ 1, \ 1, \ 1, \ 1, -1, -1, -1, -1];$$

or

$$[c_1, \cdots, c_{16}] = \pm[-1, -1, -1, -1, 1, \ 1, 1, 1, -1, -1, \ 1, -1, -1, 1, -1, 1];$$

or

$$[c_1, \cdots, c_{16}] = \pm[1, -1, -1, -1, -1, \ 1, \ 1, -1, \ 1, \ 1, \ 1, \ 1, -1, \ 1, -1, -1];$$

or

$$[c_1, \cdots, c_{16}] = \pm[-1, -1, 1, -1, 1, \ 1, \ 1, 1, -1, \ 1, \ 1, -1, -1, -1, -1, 1];$$

or

$$[c_1, \cdots, c_{16}] = \pm[1, -1, \ 1, -1, -1, -1, -1, -1, \ 1, \ 1, -1, \ 1, -1, \ 1, \ 1, -1];$$

or

$$[c_1, \cdots, c_{16}] = \pm[-1, 1, 1, -1, 1, -1, \ 1, 1, -1, -1, -1, -1, -1, \ 1, -1, 1].$$

According to the foregoing solution, the foregoing provided parameters [$c_1$, ... , $c_{16}$] corresponding to the the N subsequences are used, so that the corresponding first sequence has a low PAPR in the entire bandwidth or on each RU/MRU. In addition, the first sequence has a low PAPR on a plurality of spatial streams in a multi-spatial-stream transmission scenario, so that a subsequent channel estimation result of the receive end is accurate, to ensure system transmission performance.

With reference to the first aspect, in some implementations of the first aspect, when the first bandwidth is 480 MHz, parameters [$c_1$, ..., $c_{12}$] corresponding to the first subsequence satisfy any one of the following:

$$[c_1, \cdots, c_{12}] = \pm[1, -1, \ 1, \ 1, \ 1, -1, -1, -1, -1, \ 1, -1, -1];$$

or

$$[c_1, \cdots, c_{12}] = \pm[-1, -1, \ 1, -1, -1, -1, -1, 1, \ 1, \ 1, -1, 1];$$

or

$$[c_1, \cdots, c_{12}] = \pm[1, \ 1, -1, \ 1, -1, -1, -1, \ 1, -1, -1, \ 1, -1];$$

or

$$[c_1, \cdots, c_{12}] = \pm[-1, 1, -1, -1, 1, -1, -1, -1, \ 1, -1, \ 1, 1];$$

or

$$[c_1, \cdots, c_{12}] = \pm[1, \ 1, -1, \ 1, -1, -1, -1, \ 1, -1, \ 1, \ 1, -1];$$

or

$$[c_1, \cdots, c_{12}] = \pm[-1, 1, 1, -1, 1, -1, -1, -1, \ 1, -1, \ 1, 1];$$

or

$$[c_1, \cdots, c_{12}] = \pm[1, \ 1, -1, \ 1, -1, -1, -1, \ 1, \ 1, -1, \ 1, -1];$$

or

$$[c_1, \cdots, c_{12}] = \pm[-1, 1, -1, \ 1, \ 1, -1, -1, -1, 1, -1, 1, 1];$$

or

$$[c_1, \cdots, c_{12}] = \pm[1, -1, \ 1, \ 1, \ 1, -1, -1, -1, -1, \ 1, \ 1, \ 1];$$

or

$$[c_1, \cdots, c_{12}] = \pm[1, 1, 1, -1, -1, -1, -1, \ 1, \ 1, \ 1, -1, \ 1];$$

or

$$[c_1, \cdots, c_{12}] = \pm[1, -1, \ 1, -1, -1, \ 1, -1, -1, \ 1, \ 1, \ 1, \ 1];$$

or

$$[c_1, \cdots, c_{12}] = \pm[1, \ 1, 1, 1, -1, -1, \ 1, -1, -1, 1, -1, 1];$$

or

$$[c_1, \cdots, c_{12}] = \pm[1, -1, -1, -1, -1, \ 1, \ 1, -1, \ 1, \ 1, \ 1, \ 1];$$

or

$$[c_1, \cdots, c_{12}] = \pm[1, \ 1, \ 1, 1, -1, \ 1, \ 1, -1, -1, -1, -1, 1];$$

or

$$[c_1, \cdots, c_{12}] = \pm[1, -1, \ 1, -1, -1, -1, -1, -1, \ 1, \ 1, -1, \ 1];$$

or

$$[c_1, \cdots, c_{12}] = \pm[1, -1, \ 1, 1, -1, -1, -1, -1, -1, \ 1, -1, 1];$$

or

$$[c_1, \cdots, c_{12}] = \pm[1, -1, -1, -1, -1, \ 1, -1, -1, -1, \ 1, \ 1, \ 1];$$

or

$$[c_1, \cdots, c_{12}] = \pm[1, \ 1, \ 1, -1, -1, -1, \ 1, -1, -1, -1, -1, 1];$$

or

$$[c_1, \cdots, c_{12}] = \pm[-1, -1, -1, \ 1, -1, -1, \ 1, -1, \ 1, \ 1, \ 1, -1];$$

or

$$[c_1, \cdots, c_{12}] = \pm[-1, \ 1, 1, \ 1, -1, 1, -1, -1, 1, -1, -1, -1];$$

or

$$[c_1, \cdots, c_{12}] = \pm[-1, -1, -1, \ 1, -1, \ 1, \ 1, -1, \ 1, \ 1, \ 1, -1];$$

or

$$[c_1, \cdots, c_{12}] = \pm[-1, \ 1, 1, \ 1, -1, 1, 1, -1, 1, -1, -1, -1];$$

or

$$[c_1, \cdots, c_{12}] = \pm[-1, -1, -1, \ 1, \ 1, -1, \ 1, -1, -1, \ 1, -1, -1];$$

or

$$[c_1, \cdots, c_{12}] = \pm[-1, -1, 1, -1, -1, 1, -1, \ 1, \ 1, -1, -1, -1];$$

or

$$[c_1, \cdots, c_{12}] = \pm[1, -1, -1, -1, -1, \ 1, \ 1, \ 1, \ 1, \ 1, -1, \ 1];$$

or

$$[c_1, \cdots, c_{12}] = \pm[1, -1, \ 1, \ 1, \ 1, 1, 1, -1, -1, -1, -1, \ 1];$$

or

$$[c_1, \cdots, c_{12}] = \pm[-1, \ 1, -1, -1, \ 1, \ 1, \ 1, \ 1, -1, -1, -1, -1];$$

or

$$[c_1, \cdots, c_{12}] = \pm[-1, -1, -1, -1, 1, \ 1, 1, 1, -1, -1, \ 1, -1];$$

or

$$[c_1, \cdots, c_{12}] = \pm[-1, \ 1, \ 1, -1, \ 1, \ 1, \ 1, \ 1, -1, \ 1, -1, -1];$$

or

$$[c_1, \cdots, c_{12}] = \pm[-1, -1, 1, -1, 1, \ 1, \ 1, 1, -1, \ 1, \ 1, -1];$$

or

$$[c_1, \cdots, c_{12}] = \pm[-1, -1, -1, -1, \ 1, \ 1, -1, \ 1, -1, \ 1, \ 1, -1];$$

or

$$[c_1, \cdots, c_{12}] = \pm[-1, 1, 1, -1, 1, -1, \ 1, 1, -1, -1, -1, -1].$$

For example, for the 480 MHz bandwidth, some MRU patterns and the LTF sequence that are designed for the 640 MHz bandwidth may be reused. For example, an RU/MRU less than or equal to 5x996 in a 640 MHz RU/MRU is considered, and pilot phase rotation caused by different P matrices is considered. In this case, an LTF sequence corresponding to the first 480 MHz or the last 480 MHz may be extracted from an LTF sequence of a 640 MHz PPDU, and used as an LTF sequence of a 480 MHz PPDU. According to the foregoing solution, a low-PAPR sequence applicable to the 480 MHz bandwidth can be quickly obtained, so that signal transmission quality can be improved while large-bandwidth signal transmission is supported.

According to a second aspect, a communication method is provided. The method may be performed by a receive end, or may be performed by a component (for example, a chip, a circuit, or a module) configured in the receive end. This is not limited in this application.

The method includes: receiving a physical layer protocol data unit PPDU, where the PPDU includes a first field, the first field carries a first sequence that passes through a wireless channel, the first sequence that passes through t the wireless channel corresponds to a first bandwidth, and the first bandwidth is greater than 320 MHz; and performing channel estimation based on the first sequence that passes through the wireless channel and a preset first sequence.

For example, the first bandwidth is 640 MHz or 480 MHz.

According to the foregoing solution, the first sequence (namely, the LTF sequence) in a bandwidth greater than 320 MHz is designed, to support signal transmission in a future large-bandwidth (for example, 640 MHz or 480 MHz) scenario. In addition, the first sequence has a low PAPR in the entire bandwidth and also has a low PAPR on an RU/MRU. In addition, the first sequence has a low PAPR on a plurality of spatial streams in a multi-spatial-stream transmission scenario. This helps the receive end obtain an accurate channel estimation result through channel estimation performed based on the first sequence that passes through the wireless channel and the preset first sequence, to ensure system transmission performance.

With reference to the second aspect, in some implementations of the second aspect, the preset first sequence includes N subsequences, and any one of the N subsequences is obtained based on a base sequence and a parameter corresponding to the subsequence, for example, is obtained by multiplying the base sequence by the parameter corresponding to the subsequence. The base sequence includes a first base sequence and a second base sequence. For example, the first base sequence is LTF80MHz_4x_left, and the second base sequence is LTF80MHz_4x_right. The parameter corresponding to the any subsequence may be $\pm$ 1.

With reference to the second aspect, in some implementations of the second aspect, when the first bandwidth is 640 MHz, parameters $[c_1, ..., c_{16}]$ corresponding to the first subsequence satisfy one or more of the following:

$$[c_9, c_{10}, c_{11}, c_{12}] = \pm[-c_8, c_7, -c_6, c_5];$$

$$[c_{13}, c_{14}, c_{15}, c_{16}] = \pm[-c_4, c_3, -c_2, c_1];$$

$$[c_1, c_2, c_3, c_4] = \pm[-c_8, c_7, -c_6, c_5];$$

and

$$[c_9, c_{10}, c_{11}, c_{12}] = \pm[-c_{13}, c_{14}, -c_{15}, c_{16}].$$

With reference to the second aspect, in some implementations of the second aspect, when the first bandwidth is 640 MHz, parameters $[c_1, \ldots, c_{16}]$ corresponding to the first subsequence satisfy one or more of the following:

$$[c_1, \cdots, c_{16}] = \pm[1, -1, 1, 1, 1, -1, -1, -1, -1, 1, -1, -1, -1, 1, 1, 1];$$

or

$$[c_1, \cdots, c_{16}] = \pm[1, 1, 1, -1, -1, -1, 1, -1, -1, -1, -1, 1, 1, 1, -1, 1];$$

or

$$[c_1, \cdots, c_{16}] = \pm[1, 1, -1, 1, -1, -1, -1, 1, -1, -1, 1, -1, 1, 1, 1, -1];$$

or

$$[c_1, \cdots, c_{16}] = \pm[-1, 1, 1, 1, -1, 1, -1, -1, 1, -1, -1, -1, 1, -1, 1, 1];$$

or

$$[c_1, \cdots, c_{16}] = \pm[1, 1, -1, 1, -1, -1, -1, 1, -1, 1, 1, -1, 1, 1, 1, -1];$$

or

$$[c_1, \cdots, c_{16}] = \pm[-1, 1, 1, 1, -1, 1, 1, -1, 1, -1, -1, -1, 1, -1, 1, 1];$$

or

$$[c_1, \cdots, c_{16}] = \pm[1, 1, -1, 1, -1, -1, -1, 1, 1, -1, 1, -1, -1, 1, -1, -1];$$

or

$$[c_1, \cdots, c_{16}] = \pm[-1, -1, 1, -1, -1, 1, -1, 1, 1, -1, -1, -1, 1, -1, 1, 1];$$

or

$$[c_1, \cdots, c_{16}] = \pm[1, -1, 1, 1, 1, -1, -1, -1, -1, 1, 1, 1, 1, 1, -1, 1];$$

or

$$[c_1, \cdots, c_{16}] = \pm[1, -1, 1, 1, 1, 1, 1, -1, -1, -1, -1, 1, 1, 1, -1, 1];$$

or

$$[c_1, \cdots, c_{16}] = \pm[1, -1, 1, -1, -1, 1, -1, -1, 1, 1, 1, 1, -1, -1, -1, -1];$$

or

$$[c_1, \cdots, c_{16}] = \pm[-1, -1, -1, -1, 1, \; 1, 1, 1, -1, -1, \; 1, -1, -1, 1, -1, 1];$$

or

$$[c_1, \cdots, c_{16}] = \pm[1, -1, -1, -1, -1, \; 1, \; 1, -1, \; 1, \; 1, \; 1, \; 1, -1, \; 1, -1, -1];$$

or

$$[c_1, \cdots, c_{16}] = \pm[-1, -1, 1, -1, 1, \; 1, \; 1, 1, -1, \; 1, \; 1, -1, -1, -1, -1, 1];$$

or

$$[c_1, \cdots, c_{16}] = \pm[1, -1, \; 1, -1, -1, -1, -1, -1, \; 1, \; 1, -1, \; 1, -1, \; 1, \; 1, -1];$$

or

$$[c_1, \cdots, c_{16}] = \pm[-1, 1, 1, -1, 1, -1, \; 1, 1, -1, -1, -1, -1, -1, \; 1, -1, 1].$$

With reference to the second aspect, in some implementations of the second aspect, when the first bandwidth is 480 MHz, parameters $[c_1, \dots, c_{12}]$ corresponding to the first subsequence satisfy any one of the following:

$$[c_1, \cdots, c_{12}] = \pm[1, -1, \; 1, \; 1, \; 1, -1, -1, -1, -1, \; 1, -1, -1];$$

or

$$[c_1, \cdots, c_{12}] = \pm[-1, -1, \; 1, -1, -1, -1, -1, 1, \; 1, \; 1, -1, 1];$$

or

$$[c_1, \cdots, c_{12}] = \pm[1, \; 1, -1, \; 1, -1, -1, -1, \; 1, -1, -1, \; 1, -1];$$

or

$$[c_1, \cdots, c_{12}] = \pm[-1, 1, -1, -1, 1, -1, -1, -1, \; 1, -1, \; 1, 1];$$

or

$$[c_1, \cdots, c_{12}] = \pm[1, \; 1, -1, \; 1, -1, -1, -1, \; 1, -1, \; 1, \; 1, -1];$$

or

$$[c_1, \cdots, c_{12}] = \pm[-1, 1, 1, -1, 1, -1, -1, -1, \; 1, -1, \; 1, 1];$$

or

$$[c_1, \cdots, c_{12}] = \pm[1, \; 1, -1, \; 1, -1, -1, -1, \; 1, \; 1, -1, \; 1, -1];$$

or

$$[c_1, \cdots, c_{12}] = \pm[-1, 1, -1, \; 1, \; 1, -1, -1, -1, 1, -1, 1, 1];$$

or

$$[c_1, \cdots, c_{12}] = \pm[1, -1, \ 1, \ 1, \ 1, -1, -1, -1, -1, \ 1, \ 1, \ 1];$$

or

$$[c_1, \cdots, c_{12}] = \pm[1, 1, 1, -1, -1, -1, -1, \ 1, \ 1, \ 1, -1, \ 1];$$

or

$$[c_1, \cdots, c_{12}] = \pm[1, -1, \ 1, -1, -1, \ 1, -1, -1, \ 1, \ 1, \ 1, \ 1];$$

or

$$[c_1, \cdots, c_{12}] = \pm[1, \ 1, 1, 1, -1, -1, \ 1, -1, -1, 1, -1, 1];$$

or

$$[c_1, \cdots, c_{12}] = \pm[\ 1, -1, -1, -1, -1, \ 1, \ 1, -1, \ 1, \ 1, \ 1, \ 1];$$

or

$$[c_1, \cdots, c_{12}] = \pm[1, \ 1, \ 1, 1, -1, \ 1, \ 1, -1, -1, -1, -1, 1];$$

or

$$[c_1, \cdots, c_{12}] = \pm[1, -1, \ 1, -1, -1, -1, -1, -1, \ 1, \ 1, -1, \ 1];$$

or

$$[c_1, \cdots, c_{12}] = \pm[1, -1, \ 1, 1, -1, -1, -1, -1, -1, \ 1, -1, 1];$$

or

$$[c_1, \cdots, c_{12}] = \pm[1, -1, -1, -1, -1, \ 1, -1, -1, -1, \ 1, \ 1, \ 1];$$

or

$$[c_1, \cdots, c_{12}] = \pm[1, \ 1, \ 1, -1, -1, -1, \ 1, -1, -1, -1, -1, 1];$$

or

$$[c_1, \cdots, c_{12}] = \pm[-1, -1, -1, \ 1, -1, -1, \ 1, -1, \ 1, \ 1, \ 1, -1];$$

or

$$[c_1, \cdots, c_{12}] = \pm[-1, \ 1, 1, \ 1, -1, 1, -1, -1, 1, -1, -1, -1];$$

or

$$[c_1, \cdots, c_{12}] = \pm[-1, -1, -1, \ 1, -1, \ 1, \ 1, -1, \ 1, \ 1, \ 1, -1];$$

or

$$[c_1, \cdots, c_{12}] = \pm[-1, \ 1, 1, \ 1, -1, 1, 1, -1, 1, -1, -1, -1];$$

or

$$[c_1, \cdots, c_{12}] = \pm[-1, -1, -1, \ 1, \ 1, -1, \ 1, -1, -1, \ 1, -1, -1];$$

or

$$[c_1, \cdots, c_{12}] = \pm[-1, -1, 1, -1, -1, 1, -1, \ 1, \ 1, -1, -1, -1];$$

or

$$[c_1, \cdots, c_{12}] = \pm[1, -1, -1, -1, -1, \ 1, \ 1, \ 1, \ 1, \ 1, -1, \ 1];$$

or

$$[c_1, \cdots, c_{12}] = \pm[1, -1, \ 1, \ 1, \ 1, 1, 1, -1, -1, -1, -1, \ 1];$$

or

$$[c_1, \cdots, c_{12}] = \pm[-1, \ 1, -1, -1, \ 1, \ 1, \ 1, \ 1, -1, -1, -1, -1];$$

or

$$[c_1, \cdots, c_{12}] = \pm[-1, -1, -1, -1, 1, \ 1, 1, 1, -1, -1, \ 1, -1];$$

or

$$[c_1, \cdots, c_{12}] = \pm[-1, \ 1, \ 1, -1, \ 1, \ 1, \ 1, \ 1, -1, \ 1, -1, -1];$$

or

$$[c_1, \cdots, c_{12}] = \pm[-1, -1, 1, -1, 1, \ 1, \ 1, 1, -1, \ 1, \ 1, -1];$$

or

$$[c_1, \cdots, c_{12}] = \pm[-1, -1, -1, -1, \ 1, \ 1, -1, \ 1, -1, \ 1, \ 1, -1];$$

or

$$[c_1, \cdots, c_{12}] = \pm[-1, 1, 1, -1, 1, -1, \ 1, 1, -1, -1, -1, -1].$$

For beneficial effect of the second aspect and some implementations of the second aspect, correspondingly refer to the related descriptions of the first aspect. Details are not described herein again.

According to a third aspect, a communication apparatus is provided. The apparatus may be a transmit end, or may be a component (for example, a chip, a circuit, or a module) in the transmit end. This is not limited in this application.

The apparatus includes: a processing unit, configured to generate a physical layer protocol data unit PPDU, where the PPDU includes a first field, the first field is used to carry a first sequence, the first sequence is used by a receive end to perform channel estimation, the first sequence corresponds to a first bandwidth, and the first bandwidth is greater than 320 MHz; and a transceiver unit, configured to send the PPDU to the receive end.

The transceiver unit may perform receiving and sending in the first aspect, and the processing unit may perform processing other than receiving and sending in the first aspect.

For technical effect of the apparatus shown in the third aspect, refer to the technical effect in the first aspect and the possible designs of the first aspect.

According to a fourth aspect, a communication apparatus is provided. The apparatus may be a receive end, or may be a component (for example, a chip, a circuit, or a module) in the receive end. This is not limited in this application.

The apparatus includes: a transceiver unit, configured to receive a physical layer protocol data unit PPDU, where the PPDU includes a first field, the first field carries a first sequence that passes through a wireless channel, the first sequence that passes through the wireless channel corresponds to a first bandwidth, and the first bandwidth is greater than 320 MHz; and a processing unit, configured to perform channel estimation based on the first sequence that passes through the wireless channel and a preset first sequence.

The transceiver unit may perform receiving and sending in the second aspect, and the processing unit may perform processing other than receiving and sending in the second aspect.

For technical effect of the apparatus shown in the fourth aspect, refer to the technical effect in the second aspect and the possible designs of the second aspect.

According to a fifth aspect, a communication apparatus is provided. The apparatus includes a processor, configured to: invoke a computer program stored in a memory and run the computer program, and control a transceiver to receive and send a signal, so that the communication apparatus performs the method according to either the first aspect or the second aspect, or any one of the possible implementations of these aspects. Optionally, the communication apparatus may further include the memory, configured to store the computer program. The communication apparatus may further include the transceiver.

According to a sixth aspect, a communication apparatus is provided, and includes a processor. The processor is configured to process data and/or information, so that the method according to either the first aspect or the second aspect, or any one of the possible implementations of these aspects is performed. Optionally, the communication apparatus may further include a communication interface. The communication interface is configured to: receive data and/or information, and transmit the received data and/or information to the processor. Optionally, the communication interface is further configured to output data and/or information processed by the processor.

According to a seventh aspect, a chip is provided, and includes a processor. The processor is configured to run a program or instructions, so that the chip performs the method according to either the first aspect or the second aspect, or any one of the possible implementations of these aspects. Optionally, the chip may further include a memory, and the memory is configured to store the program or the instructions. Optionally, the chip may further include a transceiver.

According to an eighth aspect, a computer-readable storage medium is provided. The computer-readable storage medium stores computer instructions, and the computer instructions are used to implement the method according to either the first aspect or the second aspect, or any one of the possible implementations of these aspects.

According to a ninth aspect, a computer program product is provided. The computer program product includes computer program code, and the computer program code is used to implement the method according to either the first aspect or the second aspect, or any one of the possible implementations of these aspects.

According to a tenth aspect, a communication system is provided, and includes the communication apparatuses according to the third aspect and the fourth aspect.

## BRIEF DESCRIPTION OF DRAWINGS

FIG. 1 is a diagram of an application scenario to which an embodiment of this application is applicable;

FIG. 2 is a diagram of a corresponding MRU pattern in an 80 MHz bandwidth according to an embodiment of this application;

FIG. 3 is a diagram of a structure of a multi-stream LTF sequence according to an embodiment of this application;

FIG. 4 is a schematic flowchart of a communication method 400 according to an embodiment of this application;

FIG. 5(a) to FIG. 5(i) are diagrams of MRU patterns in a 640 MHz bandwidth according to an embodiment of this application;

FIG. 6(a) to FIG. 6(h) are diagrams of MRU patterns in a 480 MHz bandwidth according to an embodiment of this application;

FIG. 7 is a diagram of a structure of a communication apparatus 1000 according to an embodiment of this application;

FIG. 8 is a diagram of a structure of a communication apparatus 2000 according to an embodiment of this application; and

FIG. 9 is a diagram of a structure of a chip system 3000 according to an embodiment of this application.

## DESCRIPTION OF EMBODIMENTS

The following describes technical solutions of this application with reference to accompanying drawings.

The technical solutions provided in embodiments of this application are applicable to a wireless local area network (wireless local area network, WLAN) scenario, for example, supporting the institute of electrical and electronics engineers (institute of electrical and electronics engineers, IEEE) 802.11 related standards, such as the 802.11a/b/g standard, the 802.11n standard, the 802.11ac standard, the 802.11ax standard, the 802.11be standard, the 802.11be next-generation standard, the 802.11ad standard, and the 802.11ay standard, ultra-wideband (UWB) standard 802.15 series standards, and 802.11bf series standards.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a BLUETOOTH (Bluetooth) network, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system, an internet of things (internet of things, IoT), and a vehicle-to-everything (vehicle-to-x, V2X).

The foregoing communication systems applicable to this application are merely examples for description, and are not limited thereto. Unified descriptions are provided herein and details are not described below again.

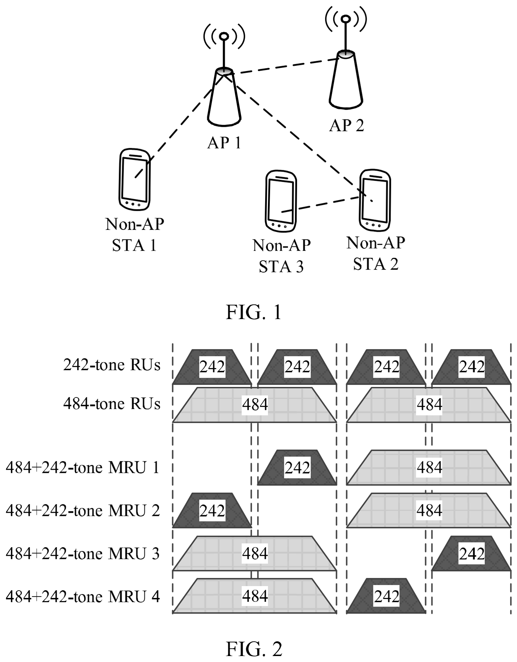

FIG. 1 is a diagram of an application scenario to which an embodiment of this application is applicable. As shown in FIG. 1, a communication method provided in this application is applicable to communication between stations (stations, STAs). The station may be an AP station, or may be a non-access point station (non-access point station, non-AP STA). The AP station and the non-access point station are respectively referred to as an AP and a non-AP station for short. Specifically, the solutions of this application are applicable to communication between an AP and one or more non-AP stations (for example, communication between an AP 1 and both a non-AP STA 1 and a non-AP STA 2), and are also applicable to communication between APs (for example, communication between the AP 1 and an AP 2) and communication between non-AP STAs (for example, communication between the non-AP STA 2 and a non-AP STA 3).

For example, an access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network. A main function of the access point is to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart home device like a smart camera, a smart remote control, or a smart water/electricity meter, or a sensor in a smart city.

The AP or the non-AP station may include a transmitter, a receiver, a memory, a processor, and the like. The transmitter and the receiver are respectively configured to: send and receive a packet structure. The memory is configured to: store signaling information, store a preset value that is agreed in advance, and the like. The processor is configured to parse the signaling information, process related data, and the like.

For ease of understanding of the technical solutions in embodiments of this application, some terms or concepts that may be used in embodiments of this application are first briefly described.

(1) Resource unit (resource unit, RU)

After an OFDMA technology is introduced into the 802.11ax standard, the standard allows a bandwidth to be divided into a plurality of RUs. RU types include a 26-tone RU, a 52-tone RU, a 106-tone RU, a 242-tone RU, a 484-tone RU, a 996-tone RU, a 2×996-tone RU, and the like. Each RU may be allocated to one user, to implement more refined division of spectrum resources, so as to implement more flexible frequency resource scheduling.

(2) Multiple resource unit (multiple resource unit, MRU)

A new frequency resource unit, namely, an MRU, is defined in the 802.11be standard. The standard allows a plurality of RUs to be allocated to a same user, to implement more flexible frequency resource allocation. In the standard, there are two types of small-size MRUs: a 52+26-tone MRU and a 106+26-tone MRU, and large-size MRU types include a 484+242-tone MRU, a 996+484-tone MRU, a 996+484+242-tone MRU, a 2×996+484-tone MRU, a 3×996-tone MRUs, and a 3x996+484-tone MRU.

For different bandwidths such as 20 MHz, 40 MHz, 80 MHz, 160 MHz, and 320 MHz bandwidths, corresponding MRU patterns and LTF sequences have been defined in the standard. For example, FIG. 2 is a diagram of a corresponding MRU pattern in an 80 MHz bandwidth. In the 802.11be standard, 484+242-tone MRU patterns in the 80 MHz bandwidth include a total of four MRU patterns: a 484+242-tone MRU 1, a 484+242-tone MRU 2, a 484+242-tone MRU 3, and a 484+242-tone MRU 4.

(3) Possible future bandwidth

In a future WLAN standard, if a larger bandwidth appears, the larger bandwidth is more likely to exist in a 6 GHz frequency band. Compared with 2.4 GHz and 5 GHz, 6 GHz is a new spectrum and has a larger bandwidth. There are four frequency bands in the 6 GHz frequency band: UNII-5, UNII-6, UNII-7, and UNII-8. However, there is only a 500 MHz bandwidth in UNII-5 in many countries. It may be considered that large bandwidths that may appear in the future standard include but are not limited to 480 MHz and 640 MHz. A maximum bandwidth in a current standard is 320 MHz, and a new bandwidth often appears in a doubling (for example, 2×320 MHz=640 MHz) or half addition (for example, 320 MHz+160 MHz=480 MHz) form. Therefore, future possible bandwidth forms defined in this application include but are not limited to 480 MHz and 640 MHz. For ease of description, two bandwidths, namely, 480 MHz and 640 MHz, are used as an example for description in the following embodiments, and do not constitute a limitation on the technical solutions of this application.

(4) Peak to average power ratio/peak-to-average power ratio PAPR

An amplitude of a radio signal changes constantly in time domain. Therefore, a transmit power of the radio signal is not constant. The PAPR is a ratio of a peak power of a signal to an average power of the signal within a period of time. Because an OFDM symbol is formed by superimposing a plurality of independently modulated subcarrier signals, when phases on subcarriers are the same or similar, the superimposed signals are modulated by using signals with a same initial phase, to generate a large instantaneous power peak, resulting in a large PAPR. Because a dynamic range of an ordinary power amplifier is limited, a MIMO-OFDM signal with a large PAPR is likely to enter a nonlinear region of the power amplifier, causing nonlinear distortion of the signal. As a result, obvious spectrum spreading interference and in-band signal distortion occur, which causes severe performance deterioration of an entire system.

(5) Long training field (long training field, LTF) sequence

The LTF sequence can be used for channel estimation. Different bandwidths correspond to different LTF sequences.

Currently, there are three types of subcarriers: a data subcarrier, a pilot subcarrier, and an unused subcarrier. The data subcarrier is used for actual data transmission; the pilot subcarrier is used to provide phase information and parameter tracking; the unused subcarrier is neither a data subcarrier nor a pilot subcarrier, and includes a central direct current (direct current, DC) subcarrier, a guard subcarrier, and a null subcarrier.

In a multi-stream (stream) scenario, to accurately estimate a spatial stream channel, it is proposed in a Wi-Fi standard that LTF sequences on spatial streams are kept orthogonal by multiplying a P matrix by an LTF sequence on a data subcarrier.

For example, if a number of spatial streams is 2, a corresponding P matrix is:

$$P_{2*2} = \begin{bmatrix} 1 & -1 \\ 1 & 1 \end{bmatrix};$$

or
if a number of spatial streams is 4, a corresponding P matrix is:

$$P_{4*4} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

or
if a number of spatial streams is 6, a corresponding P matrix is:

$$P_{6\times 6} = \begin{bmatrix} 1 & -1 & 1 & 1 & 1 & -1 \\ 1 & -w^1 & w^2 & w^3 & w^4 & -w^5 \\ 1 & -w^2 & w^4 & w^6 & w^8 & -w^{10} \\ 1 & -w^3 & w^6 & w^9 & w^{12} & -w^{15} \\ 1 & -w^4 & w^8 & w^{12} & w^{16} & -w^{20} \\ 1 & -w^5 & w^{10} & w^{15} & w^{20} & -w^{25} \end{bmatrix}.$$

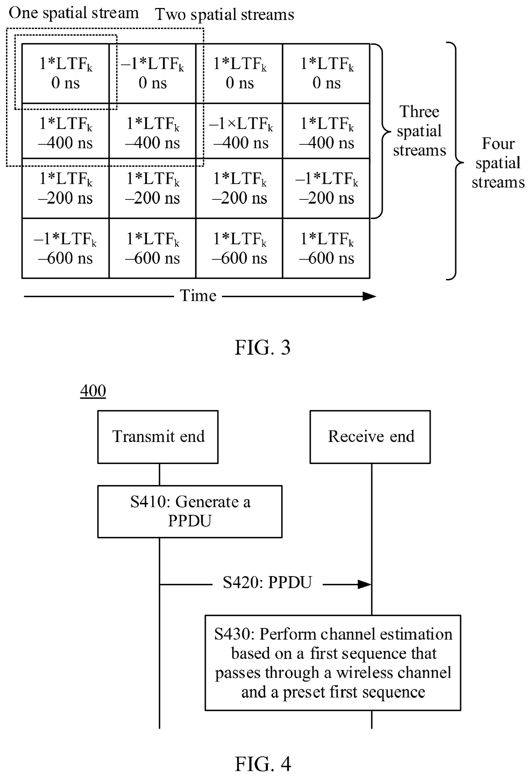

FIG. 3 is a diagram of construction of a multi-stream LTF sequence. As shown in FIG. 3, marked time is a cyclic shift delay (cyclic shift delay, CSD) corresponding to each spatial stream. When a number of spatial streams is less than 4, for an LTF sequence corresponding to the spatial streams, refer to a dashed box shown in FIG. 3. A $k^{th}$ subcarrier carries a $k^{th}$ element $LTF_k$ of the LTF sequence, and an LTF of an $n^{th}$ OFDM symbol corresponding to an $m^{th}$ spatial stream is multiplied by an element in an $m^{th}$ row and $n^{th}$ column of the P matrix. In this way, after the $k^{th}$ element $LTF_k$ passes through a channel $H_k$, a frequency domain signal $Y_k$ received by the non-AP STA may be represented as: $Y_k = H_k P_{4*4} LTF_k$. Because the P matrix is an orthogonal matrix (for example, $P_{4*4} \times P_{4*4}^* = 4I$, where I is a unit matrix, and * is a conjugate transpose of a matrix), a channel on the $k^{th}$ subcarrier is $H_k = Y_k P_{4*4}^* / 4LTF_k$. In this way, a corresponding multiple-input multiple-output (multiple-input multiple-output, MIMO) channel on the $k^{th}$ subcarrier may be estimated.

It should be understood that an RU/MRU includes a data subcarrier and a pilot subcarrier. The LTF construction manner mentioned above is only for data subcarriers. A corresponding LTF construction manner for pilot subcarriers is similar to the LTF construction manner for the data subcarriers. However, a difference between the LTF construction manner for the pilot subcarriers and the LTF construction manner for the data subcarriers lies in that an R matrix instead of the P matrix is used in the LTF construction manner for the pilot subcarriers. A relationship between the R matrix and the P matrix is: $R(m, n) = P(1, n)$, that is, each row in the R matrix is equal to the first row in the P matrix. Therefore, elements of the LTF sequence on the data subcarriers and elements of the LTF sequence on the pilot subcarriers may be multiplied by different values, and therefore, PAPR values of the designed LTF sequences change. For specific content of the P matrix and the R matrix, refer to the 802.11ac standard. Details are not described herein again.

In view of this, this application provides a communication method and apparatus, to design an LTF sequence in a larger bandwidth (for example, 640 MHz or 480 MHz). The LTF sequence has a low PAPR in an entire bandwidth and also has a low PAPR on an RU/MRU. In addition, the LTF sequence also has a low PAPR on a plurality of spatial streams in a multi-spatial-stream transmission scenario, to ensure system transmission performance.

For ease of understanding embodiments of this application, the following descriptions are provided first.

(1) In this application, unless otherwise stated or there is a logic conflict, terms and/or descriptions in different embodiments are consistent and may be mutually referenced, and technical features in different embodiments may be combined into a new embodiment based on an internal logical relationship thereof.

(2) In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be singular or plural.

(3) In this application, "first", "second", and various numbers are used for differentiation for ease of description, and are not used to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.

(4) In this application, the terms "include" and "have" and any other variants thereof are intended to cover the non-exclusive inclusion. For example, a process, method, system, product, or device that includes a list of steps or units is not necessarily limited to those expressly listed steps or units, but may include other steps or units that are not expressly listed or inherent to the process, method, product, or device.

(5) In this application, "indicate" may include "directly indicate" and "indirectly indicate". When a piece of indication information indicates A, the indication information may directly indicate A or indirectly indicate A, but it does not indicate that the indication information definitely carries A.

(6) In this application, "communication" may also be described as "data transmission", "information transmission", "data processing", or the like. "Transmission" includes "sending" and "receiving".

The following describes the technical solutions provided in this application in detail with reference to the accompanying drawings. Embodiments of this application may be applied to a plurality of different scenarios, including but not limited to the scenario shown in FIG. 1.

It should be understood that a specific structure of an entity for performing a method provided in embodiments of this application is not particularly limited in the following embodiments, provided that the entity can run a program that records code of the method provided in embodiments of this application to perform communication according to the method provided in embodiments of this application. For example, the entity for performing the method provided in embodiments of this application may be a receive end device or a transmit end device, or a functional module that is in a receive end device or a transmit end device and that can invoke and execute the program.

Without loss of generality, the following uses interaction between a transmit end and a receive end as an example to describe in detail a communication method provided in embodiments of this application. In embodiments of this application, the transmit end may be an access point (access point, AP) or a non-access point (non-access point, non-AP) station (station, STA), and the receive end may be an AP or a STA. This is not limited in this application. For example, in a communication scenario, the transmit end is an AP, and the receive end is a STA; or in a communication scenario, the transmit end is a STA, and the receive end is an AP; or in a communication scenario, the transmit end is a STA, and the receive end is a STA; or in a communication scenario, the transmit end is an AP, and the receive end is an AP. For ease of understanding and description, an example in which the transmit end may be an AP and the receive end may be a STA is used for description in the following embodiments.

FIG. 4 is a schematic flowchart of a communication method 400 according to an embodiment of this application. As shown in FIG. 4, the communication method includes the following steps.

S410: A transmit end generates a PPDU.

The PPDU includes a first field, and the first field is used to carry a first sequence, for example, a UHR-LTF sequence. The first sequence is used by a receive end to perform channel estimation, the first sequence corresponds to a first bandwidth, and the first bandwidth is greater than 320 MHz.

Optionally, if the first bandwidth is 640 MHz or 480 MHz, the first sequence may be understood as a channel estimation sequence in a 640 MHz PPDU or a 480 MHz PPDU.

Optionally, the first sequence includes N subsequences, and any one of the N subsequences is obtained based on a base sequence and a parameter corresponding to the subsequence, for example, is obtained by multiplying the base sequence by the parameter corresponding to the subsequence. The base sequence includes a first base sequence and a second base sequence. For example, the first base sequence is LTF80MHz_4x_left, and the second base sequence is LTF80MHz_4x_right. The parameter corresponding to the any subsequence may be ±1.

For example, the first base sequence may be a sequence (LTF80MHz_4x_left shown below) corresponding to left 40 MHz in 80 MHz, and the second base sequence may be a sequence (LTF80MHz_4x_right shown below) corresponding to right 40 MHz in 80 MHz. In this case, the first sequence corresponding to 640 MHz includes 16 subsequences, in other words, N=16, and the first sequence corresponding to 480 MHz includes 12 subsequences, in other words, N=12.

In this embodiment of this application, LTF80MHz_4x_left and LTF80MHz_4x_right are used as base sequences, and any one of the N subsequences in the first sequence is obtained by multiplying the base sequence by ±1. In other words, a longer LTF sequence, namely, the first sequence, may be obtained by processing the base sequence, to support signal transmission in a future large-bandwidth (for example, 640 MHz or 480 MHz) scenario. Because at least two subsequences in the first sequence meet a symmetric splicing condition, the first sequence has a low PAPR in the entire bandwidth and also has a low PAPR on an RU/MRU. In addition, the first sequence also has a low PAPR on a plurality of spatial streams in a multi-spatial-stream transmission scenario, to ensure system transmission performance. For a symmetric splicing condition of a combined sequence, refer to the following specific descriptions.

The following describes related content of an LTF sequence of the 640 MHz PPDU and an LTF sequence of the 480 MHz PPDU.

(1) LTF sequence of the 640 MHz PPDU

1. 640 MHz RU/MRU

For a 640 MHz bandwidth, in addition to compatible MRU patterns (such as a 484+242-tone MRU, a 996+484-tone MRU, a 2×996+484-tone MRU, a 3×996-tone MRU, and a 3x996+484-tone MRU) defined in a 320 MHz bandwidth, some MRU patterns are introduced in the following manners.

For example, an 8×996-tone MRU may be considered as a combination of four 2×996-tone RUs; or

an 8×996-tone MRU may be considered as a combination of two 4×996-tone RUs; or
an 8×996-tone MRU may be considered as a combination of one 4×996-tone RU and two 2×996-tone RUs; or the like.

It should be understood that data subcarriers of the 8×996-tone MRU are formed by a combination of data subcarriers of a plurality of RUs that form the 8×996-tone MRU, and pilot subcarriers of the 8×996-tone MRU are formed by pilot subcarriers of the plurality of RUs that form the 8×996-tone MRU. For example, if the 8×996-tone MRU is obtained by combining one 4×996-tone RU and two 2×996-tone RUs, the data subcarriers of the 8×996-tone MRU are formed by a combination of data subcarriers of the one 4×996-tone RU and data subcarriers of the two 2×996-tone RUs, and the pilot subcarriers of the 8×996-tone MRU are formed by a combination of pilot subcarriers of the one 4×996-tone RU and pilot subcarriers of the two 2×996-tone RUs.

For example, a 7×996-tone MRU may be considered as a combination of one 4×996-tone RU, one 2×996-tone RU, and one 996-tone RU; or

a 7×996-tone MRU may be considered as a combination of three 2×996-tone RUs and one 996-tone RU; or
a 7×996-tone MRU may be considered as a combination of seven 996-tone RUs; or
a 7×996-tone MRU may be considered as a combination of two 2×996-tone RUs and three 996-tone RUs; or the like.

It should be understood that data subcarriers of the 7×996-tone MRU are formed by a combination of data subcarriers of a plurality of RUs that form the 7×996-tone MRU, and pilot subcarriers of the 7×996-tone MRU are formed by pilot subcarriers of the plurality of RUs that form the 7×996-tone MRU. For example, if the 7×996-tone MRU is obtained by combining one 4×996-tone RU, one 2×996-tone RU, and one 996-tone RU, the data subcarriers of the 7×996-tone MRU are formed by a combination of data subcarriers of the one 4×996-tone RU, data subcarriers of the one 2×996-tone RU, and data subcarriers of the one 996-tone RU, and the pilot subcarriers of the 7×996-tone MRU are formed by a combination of pilot subcarriers of the one 4×996-tone RU, pilot subcarriers of the one 2×996-tone RU, and pilot subcarriers of the one 996-tone RU.

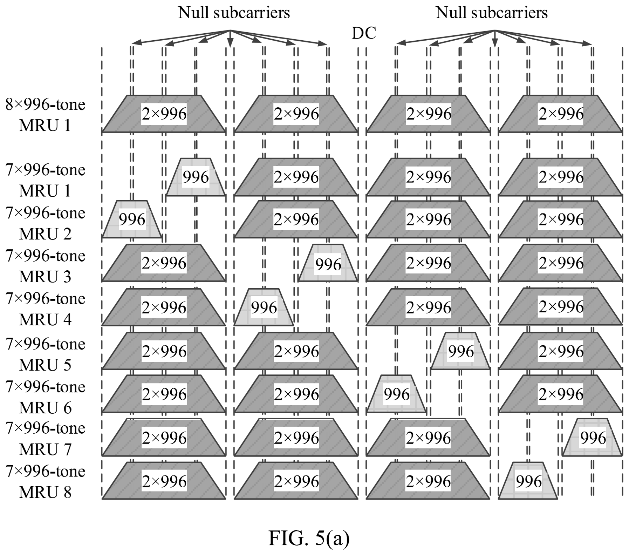

For ease of understanding, the following describes a diagram of an 8×996-tone MRU and a 7×996-tone MRU in the 640 MHz bandwidth with reference to FIG. 5(a). It can be learned from FIG. 5(a) that an 8×996-tone MRU pattern includes an 8×996-tone MRU 1, and 7×996-tone MRU patterns include a total of eight MRU patterns: a 7×996-tone MRU 1, ..., and a 7×996-tone MRU 8. It can be learned that 8×996-tone MRU include an entire bandwidth, the 7×996-tone MRU occupies a part of the 640 MHz bandwidth, and the remaining 996 tones may be used for data transmission of one or more other users.

For example, a 6×996-tone MRU may be considered as a combination of one 4×996-tone RU and one 2×996-tone RU; or

a 6×996-tone MRU may be considered as a combination of three 2×996-tone RUs; or
a 6×996-tone MRU may be considered as a combination of six 996-tone RUs; or
a 6×996-tone MRU may be considered as a combination of two 2×996-tone RUs and two 996-tone RUs; or the like.

It should be understood that data subcarriers of the 6×996-tone MRU are formed by a combination of data subcarriers of a plurality of RUs that form the 6×996-tone MRU, and pilot subcarriers of the 6×996-tone MRU are formed by pilot subcarriers of the plurality of RUs that form the 6×996-tone MRU. For example, if the 6×996-tone MRU is obtained by combining two 2×996-tone RUs and two 996-tone RUs, the data subcarriers of the 6×996-tone MRU are formed by a combination of data subcarriers of the two 2×996-tone RUs and data subcarriers of the two 996-tone RUs, and the pilot subcarriers of the 6×996-tone MRU are formed by a combination of pilot subcarriers of the two 2×996-tone RUs and pilot subcarriers of the two 996-tone RUs.

For example, a 5×996-tone MRU may be considered as a combination of one 4×996-tone RU and one 996-tone RU; or

a 5×996-tone MRU may be considered as a combination of two 2×996-tone RUs and one 996-tone RU; or
a 5×996-tone MRU may be considered as a combination of five 996-tone RUs; or the like.

It should be understood that data subcarriers of the 5×996-tone MRU are formed by a combination of data subcarriers of a plurality of RUs that form the 5×996-tone MRU, and pilot subcarriers of the 5×996-tone MRU are formed by pilot subcarriers of the plurality of RUs that form the 5×996-tone MRU. For example, if the 5×996-tone MRU is obtained by combining two 2×996-tone RUs and one 996-tone RU, the data subcarriers of the 5×996-tone MRU are formed by a combination of data subcarriers of the two 2×996-tone RUs and data subcarriers of the one 996-tone RU, and the pilot subcarriers of the 5×996-tone MRU are formed by a combination of pilot subcarriers of the two 2×996-tone RUs and pilot subcarriers of the one 996-tone RU.

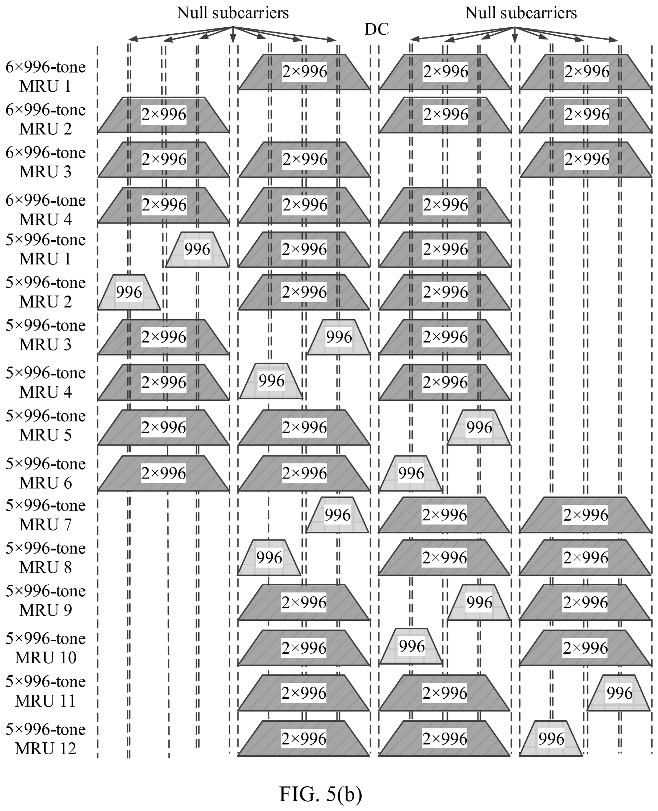

For ease of understanding, the following describes a diagram of a 6×996-tone MRU and a 5×996-tone MRU in the 640 MHz bandwidth with reference to FIG. 5(b). It can be learned from FIG. 5(b) that 6×996-tone MRU patterns include a total of four MRU patterns: a 6×996-tone MRU 1, a 6×996-tone MRU 2, a 6×996-tone MRU 3, and a 6×996-tone MRU 4, and 5×996-tone MRU patterns include a total of 12 MRU patterns: a 5×996-tone MRU 1, ..., and a 5×996-tone MRU 12.

For example, a 4×996-tone MRU may be considered as a combination of two 2×996-tone RUs; or
a 4×996-tone MRU may be considered as a combination of one 2×996-tone RU and two 996-tone RUs; or the like.

It should be understood that data subcarriers of the 4×996-tone MRU are formed by a combination of data subcarriers of a plurality of RUs that form the 4×996-tone MRU, and pilot subcarriers of the 4×996-tone MRU are formed by pilot subcarriers of the plurality of RUs that form the 4×996-tone MRU. For example, if the 4×996-tone MRU is obtained by combining one 2×996-tone RU and two 996-tone RUs, the data subcarriers of the 4×996-tone MRU are formed by a combination of data subcarriers of the one 2×996-tone RU and data subcarriers of the two 996-tone RUs, and the pilot subcarriers of the 4×996-tone MRU are formed by a combination of pilot subcarriers of the one 2×996-tone RU and pilot subcarriers of the two 996-tone RUs.

For example, a 3×996-tone MRU may be considered as a combination of one 2×996-tone RU and one 996-tone RU.

It should be understood that data subcarriers of the 3×996-tone MRU are formed by a combination of data subcarriers of a plurality of RUs that form the 3 ×996-tone MRU, and pilot subcarriers of the 3 ×996-tone MRU are formed by pilot subcarriers of the plurality of RUs that form the 3×996-tone MRU. For example, if the 3×996-tone MRU is obtained by combining one 2×996-tone RU and one 996-tone RU, the data subcarriers of the 3×996-tone MRU are formed by a combination of data subcarriers of the one 2×996-tone RU and data subcarriers of the one 996-tone RU, and the pilot subcarriers of the 3 ×996-tone MRU are formed by a combination of pilot subcarriers of the one 2×996-tone RU and pilot subcarriers of the one 996-tone RU.

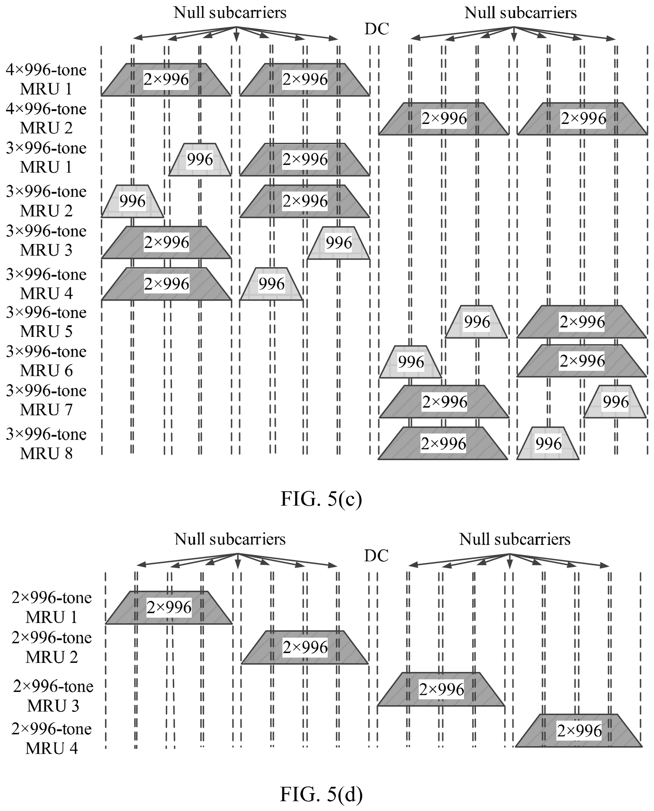

For ease of understanding, the following describes a diagram of a 4×996-tone MRU and a 3×996-tone MRU in the 640 MHz bandwidth with reference to FIG. 5(c). It can be learned from FIG. 5(c) that 4×996-tone MRU patterns include a total of two MRU patterns: a 4×996-tone MRU 1 and a 4×996-tone MRU 2, and 3 ×996-tone MRU patterns include eight MRU patterns: a 3×996-tone MRU 1, ..., and a 3×996-tone MRU 8.

For example, a 2×996-tone MRU may be considered as a combination of two 996-tone RUs.

It should be understood that data subcarriers of the 2×996-tone MRU are formed by a combination of data subcarriers of a plurality of RUs that form the 2×996-tone MRU, and pilot subcarriers of the 2×996-tone MRU are formed by pilot subcarriers of the plurality of RUs that form the 2×996-tone MRU. For example, if the 2×996-tone MRU is obtained by combining two 996-tone RUs, the data subcarriers of the 2×996-tone MRU are formed by a combination of data subcarriers of the two 996-tone RUs, and the pilot subcarriers of the 2×996-tone MRU are formed by a combination of pilot subcarriers of the two 996-tone RUs.

For ease of understanding, the following describes a diagram of a 2×996-tone MRU in the 640 MHz bandwidth with reference to FIG. 5(d). It can be learned from FIG. 5(d) that 2×996-tone MRU patterns include a total of four MRU patterns: a 2×996-tone MRU 1, ..., and a 2×996-tone MRU 4.

For example, a 7×996+484-tone MRU may be considered as a combination of one 4×996-tone RU, one 2×996-tone RU, one 996-tone RU, and one 484-tone RU; or

a 7 ×996+484-tone MRU may be considered as a combination of three 2×996-tone RUs, one 996-tone RU, and one 484-tone RU; or

a 7×996+484-tone MRU may be considered as a combination of seven 996-tone RUs and one 484-tone RU; or

a 7×996+484-tone MRU may be considered as a combination of two 2×996-tone RUs, three 996-tone RUs, and one 484-tone RU; or the like.

It should be understood that data subcarriers of the 7×996+484-tone MRU are formed by a combination of data subcarriers of a plurality of RUs that form the 7×996+484-tone MRU, and pilot subcarriers of the 7×996+484-tone MRU are formed by pilot subcarriers of the plurality of RUs that form the 7×996+484-tone MRU. For example, if the 7×996+484-tone MRU is obtained by combining one 4×996-tone RU, one 2×996-tone RU, one 996-tone RU, and one 484-tone RU, the data subcarriers of the 7×996+484-tone MRU are formed by a combination of data subcarriers of the one 4×996-tone RU, data subcarriers of the one 2×996-tone RU, data subcarriers of the one 996-tone RU, and data subcarriers of the one 484-tone RU, and the pilot subcarriers of the 7×996+484-tone MRU are formed by a combination of pilot subcarriers of the one 4×996-tone RU, pilot subcarriers of the one 2×996-tone RU, pilot subcarriers of the one 996-tone RU, and pilot subcarriers of the one 484-tone RU.

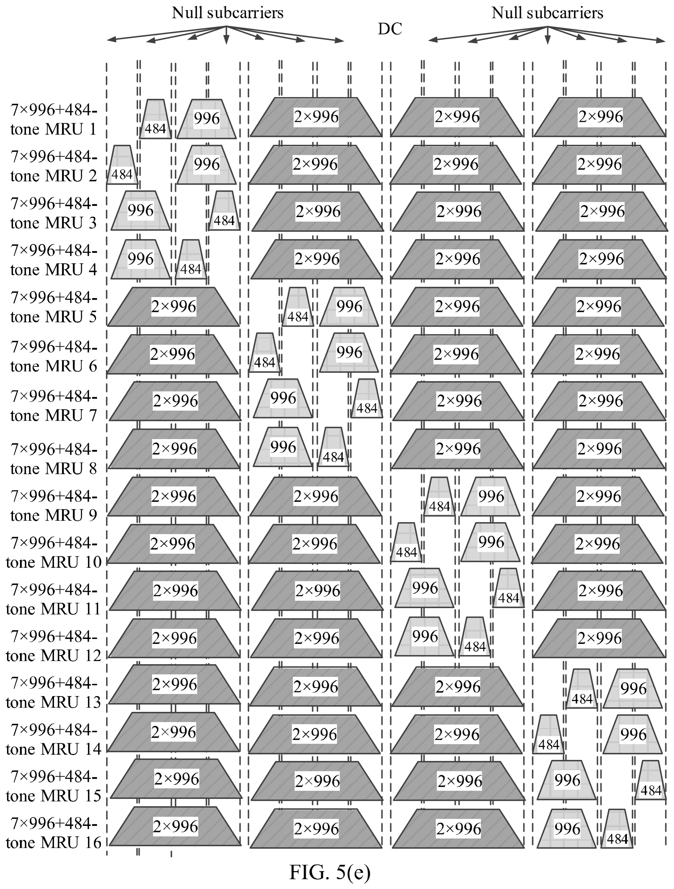

For ease of understanding, the following describes a diagram of a 7×996+484-tone MRU in the 640 MHz bandwidth with reference to FIG. 5(e). It can be learned from FIG. 5(e) that 7×996-tone MRU patterns include a total of 16 MRU patterns: a 7×996+484-tone MRU 1, ..., and a 7×996+484-tone MRU 16.

For example, a 5×996+484-tone MRU may be considered as a combination of one 4×996-tone RU, one 996-tone RU, and one 484-tone RU; or

a 5×996+484-tone MRU may be considered as a combination of two 2×996-tone RUs, one 996-tone RU, and one 484-tone RU; or

a 5×996+484-tone MRU may be considered as a combination of five 996-tone RUs and one 484-tone RU; or the like.

It should be understood that data subcarriers of the 5×996+484-tone MRU are formed by a combination of data subcarriers of a plurality of RUs that form the 5×996+484-tone MRU, and pilot subcarriers of the 5 ×996+484-tone MRU are formed by pilot subcarriers of the plurality of RUs that form the 5×996+484-tone MRU. For example, if the 5×996+484-tone MRU is obtained by combining two 2×996-tone RUs, one 996-tone RU, and one 484-tone RU, the data subcarriers of the 5×996+484-tone MRU are formed by a combination of data subcarriers of the two 2×996-tone RUs, data subcarriers of the one 996-tone RU, and data subcarriers of the one 484-tone RU, and the pilot subcarriers of the 5×996+484-tone MRU are formed by a combination of pilot subcarriers of the two 2×996-tone RUs, pilot subcarriers of the one 996-tone RU, and pilot subcarriers of the one 484-tone RU.

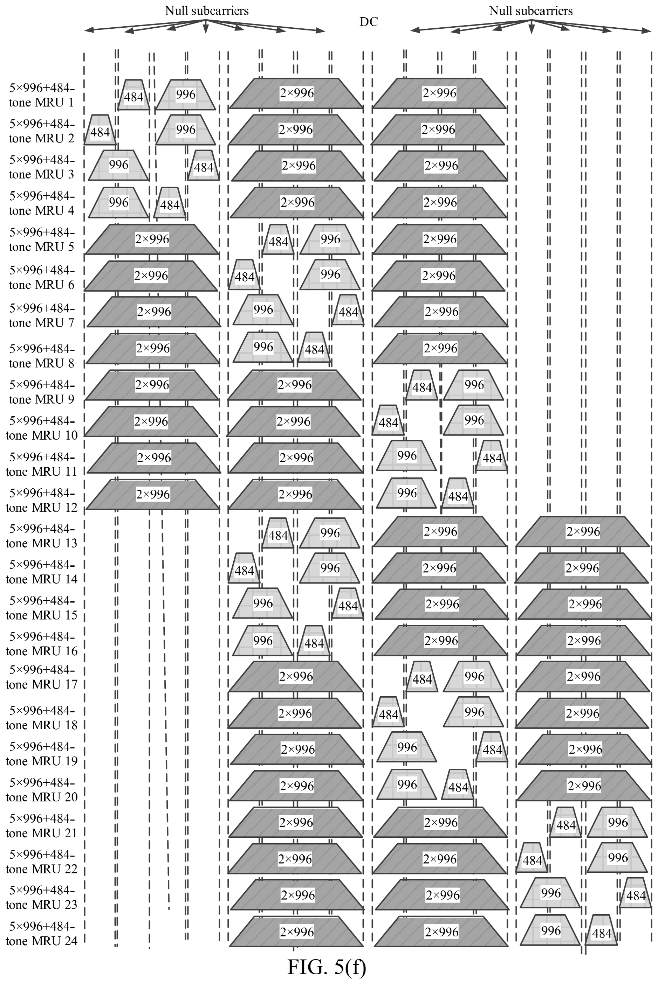

For ease of understanding, the following describes a diagram of a 5×996+484-tone MRU in the 640 MHz bandwidth with reference to FIG. 5(f). It can be learned from FIG. 5(f) that 5×996+484-tone MRU patterns include a total of 24 MRU patterns: a 5×996+484-tone MRU 1, ..., and a 5×996+484-tone MRU 24.

For example, a 3×996+484-tone MRU may be considered as a combination of one 2×996-tone RU, one 996-tone RU, and one 484-tone RU.

It should be understood that data subcarriers of the 3 ×996+484-tone MRU are formed by a combination of data subcarriers of a plurality of RUs that form the 3×996+484-tone MRU, and pilot subcarriers of the 3×996+484-tone MRU are formed by pilot subcarriers of the plurality of RUs that form the 3×996+484-tone MRU. For example, if the 3×996+484-tone MRU is obtained by combining one 2×996-tone RU, one 996-tone RU, and one 484-tone RU, the data subcarriers of the 3×996+484-tone MRU are formed by a combination of data subcarriers of the one 2×996-tone RU, data subcarriers of the one 996-tone RU, and data subcarriers of the one 484-tone RU, and the pilot subcarriers of the 3×996+484-tone MRU are formed by a combination of pilot subcarriers of the one 2×996-tone RU, pilot subcarriers of the one 996-tone RU, and pilot subcarriers of the one 484-tone RU.

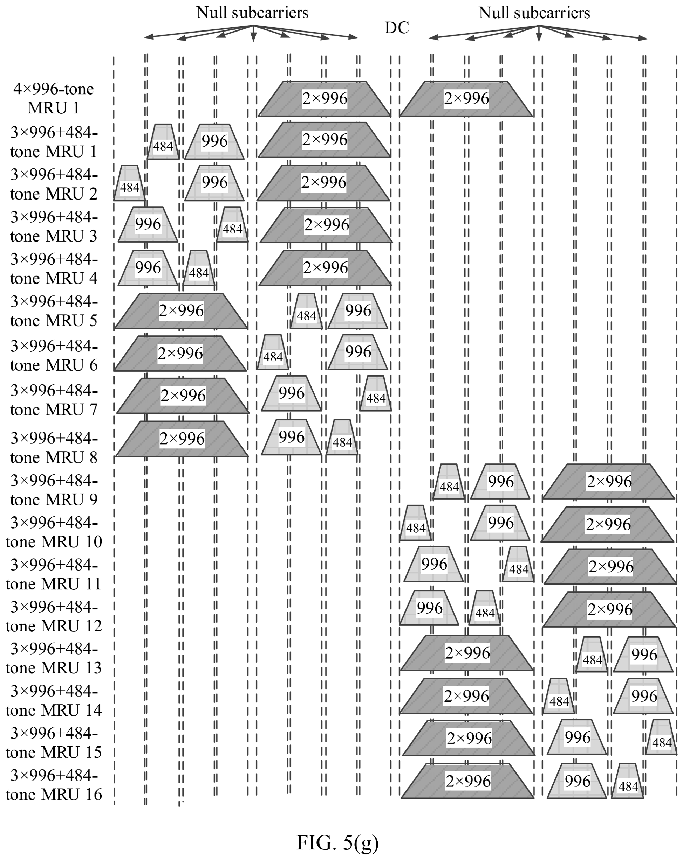

For ease of understanding, the following describes a diagram of a 4×996-tone MRU and a 3×996+484-tone MRU in the 640 MHz bandwidth with reference to FIG. 5(g). It can be learned from FIG. 5(g) that the 4×996-tone MRU includes a 4×996-tone MRU 1 pattern, and 3×996+484-tone MRU patterns include a total of 16 MRU patterns: a 3×996+484-tone MRU 1, ..., and a 3×996+484-tone MRU 16.

For example, a 2×996+484-tone MRU may be considered as a combination of two 996-tone RUs and one 484-tone RU.

It should be understood that data subcarriers of the 2×996+484-tone MRU are formed by a combination of data subcarriers of a plurality of RUs that form the 2×996+484-tone MRU, and pilot subcarriers of the 2×996+484-tone MRU are formed by pilot subcarriers of the plurality of RUs that form the 2×996+484-tone MRU. For example, if the 2×996+484-tone MRU is obtained by combining two 996-tone RUs and one 484-tone RU, the data subcarriers of the 2×996+484-tone MRU are formed by a combination of data subcarriers of the two 996-tone RUs and data subcarriers of the one 484-tone RU, and the pilot subcarriers of the 2 × 996+484-tone MRU are formed by a combination of pilot subcarriers of the two 996-tone RUs and pilot subcarriers of the one 484-tone RU.

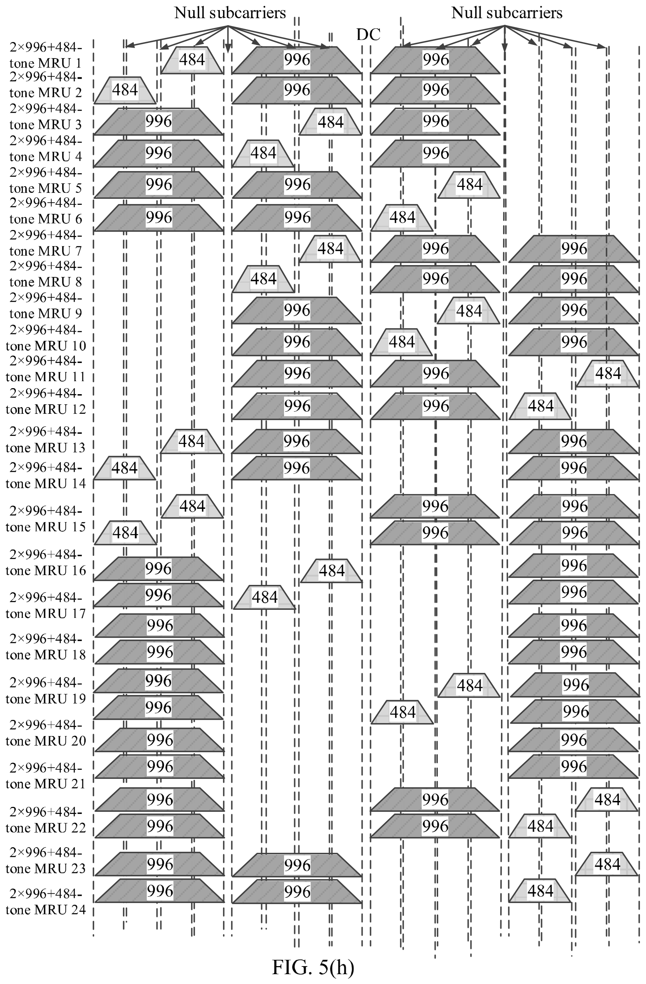

For ease of understanding, the following describes a diagram of a 2×996+484-tone MRU in the 640 MHz bandwidth with reference to FIG. 5(h). It can be learned from FIG. 5(h) that 2×996+484-tone MRU patterns include a total of 24 MRU patterns: a 2×996+484-tone MRU 1, ..., and a 2×996+484-tone MRU 24.

For example, a 996+484-tone MRU may be considered as a combination of one 996-tone RU and one 484-tone RU.

It should be understood that data subcarriers of the 996+484-tone MRU are formed by a combination of data subcarriers of a plurality of RUs that form the 996+484-tone MRU, and pilot subcarriers of the 996+484-tone MRU are formed by pilot subcarriers of the plurality of RUs that form the 996+484-tone MRU. For example, if the 996+484-tone MRU is obtained by combining one 996-tone RU and one 484-tone RU, the data subcarriers of the 996+484-tone MRU are formed by a combination of data subcarriers of the one 996-tone RU and data subcarriers of the one 484-tone RU, and the pilot subcarriers of the 996+484-tone MRU are formed by a combination of pilot subcarriers of the one 996-tone RU and pilot subcarriers of the one 484-tone RU.

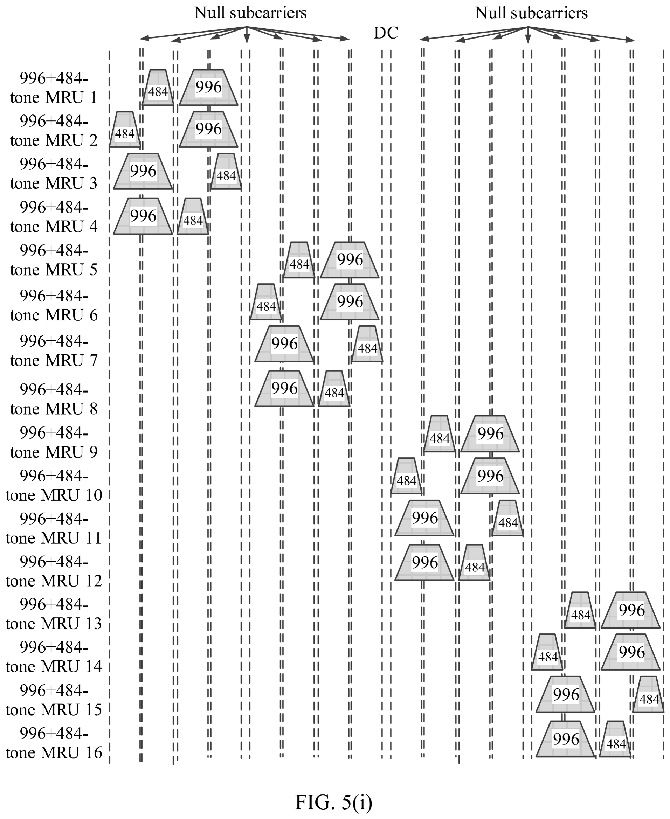

For ease of understanding, the following describes a diagram of a 996+484-tone MRU in the 640 MHz bandwidth with reference to FIG. 5(i). It can be learned from FIG. 5(i) that 996+484-tone MRU patterns include a total of 16 MRU patterns: a 996+484-tone MRU 1, ..., and a 996+484-tone MRU 16.

It should be understood that MRU patterns of the 640 MHz PPDU are described in detail above, a manner of obtaining the MRU patterns is not limited in this embodiment, and the combination manners provided above are merely examples, and do not constitute any limitation on the protection scope of this application.

2. LTF sequence of the 640 MHz PPDU

The following uses LTF80MHz_4x_left and LTF80MHz_4x_right as base sequences to construct a 640 MHz LTF sequence for the foregoing RU/MRU, so that the designed LTF sequence has a low PAPR in the entire 640 MHz bandwidth, and has a low PAPR on the 640 MHz RU/MRU. In addition, the LTF sequence has a low PAPR on a plurality of spatial streams in a multi-spatial-stream transmission scenario, to ensure user transmission performance.

LTF80MHz_4x_left=[+1, −1, −1, −1, −1, +1, −1, −1, +1, −1, −1, −1, +1, +1, −1, −1, −1, +1, −1, −1, +1, −1, +1, +1, +1, −1, +1, −1, +1, −1, −1, −1, −1, +1, +1, +1, +1, +1, −1, −1, +1, −1, +1, −1, −1, −1, +1, +1, −1, −1, +1, −1, −1, −1, +1, +1, +1, −1, −1, +1, +1, −1, −1, +1, −1, +1, +1, −1, +1, −1, +1, +1, +1, −1, +1, −1, +1, +1, +1, +1, +1, +1, −1, −1, −1, +1, −1, +1, −1, −1, −1, +1, −1, −1, +1, +1, +1, +1, +1, +1, +1, −1, +1, −1, +1, +1, −1, +1, −1, +1, −1, +1, −1, +1, −1, +1, −1, −1, +1, +1, +1, +1, −1, −1, −1, −1, −1, −1, −1, −1, +1, −1, −1, +1, −1, −1, +1, +1, +1, −1, +1, −1, −1, −1, +1, +1, +1, −1, +1, +1, −1, −1, +1, −1, −1, −1, +1, +1, +1, +1, −1, +1, +1, +1, +1, +1, +1, −1, +1, −1, −1, +1, −1, +1, −1, −1, +1, +1, +1, +1, +1, −1, +1, +1, −1, −1, +1, +1, +1, −1, +1, +1, −1, +1, +1, −1, −1, +1, +1, −1, −1, −1, −1, +1, +1, +1, +1, +1, −1, +1, +1, +1, +1, +1, −1, +1, −1, +1, −1, −1, +1, −1, −1, −1, −1, −1, +1, −1, −1, −1, +1, +1, −1, +1, −1, +1, −1, −1, −1, −1, −1, +1, +1, +1, +1, −1, +1, −1, −1, +1, +1, −1, −1, −1, +1, +1, +1, +1, +1, −1, +1, −1, +1, −1, −1, +1, +1, +1, −1, +1, +1, +1, +1, +1, −1, +1, +1, −1, +1, −1, +1, −1, −1, −1, −1, −1, +1, −1, −1, −1, −1, −1, +1, +1, +1, +1, −1, −1, +1, +1, −1, −1, +1, −1, −1, +1, −1, −1, −1, +1, +1, −1, −1, +1, −1, −1, −1, −1, −1, +1, +1, −1, +1, −1, +1, +1, −1, +1, −1, −1, −1, −1, −1, +1, −1, −1, −1, −1, +1, +1, +1, −1, +1, +1, −1, −1, +1, −1, −1, −1, +1, +1, −1, +1, −1, +1, −1, −1, −1, +1, −1, +1, −1, +1, −1, −1, −1, +1, −1, −1, +1, −1, +1, +1, −1, −1, −1, −1, +1, +1, −1, −1, −1, −1, +1, −1, +1, +1, −1, +1, −1, +1, +1, +1, +1, +1, +1, −1, −1, +1, −1, −1, −1, +1, −1, +1, −1, −1, −1, +1, +1, +1, +1, +1, +1, −1, +1, −1, +1, +1, +1, −1, +1, −1, +1, +1, −1, −1, +1, −1, +1, +1, −1, +1, −1, −1, +1, +1, −1, −1, +1, +1, +1, −1, −1, −1, +1, −1, −1, +1, +1, −1, −1, −1, +1, −1, +1, −1, −1, +1, +1, +1, +1, +1, +1, −1, −1, −1, −1, +1, −1, +1, −1, +1, +1, +1, −1, +1, −1, −1, +1, −1, −1, −1, +1,

+1, −1, −1, −1, +1, −1, −1, +1, −1, −1, −1, −1, +1, −1, +1, +1, −1, −1, −1, +1, −1, −1];

and

LTF80MHz_4x_right=[−1, −1, +1, −1, +1, +1, +1, +1, +1, +1, −1, −1, −1, −1, +1, −1, −1, +1, −1, −1, −1, +1, +1, −1, −1, −1, +1, −1, −1, +1, −1, +1, +1, +1, −1, +1, −1, +1, −1, −1, −1, −1, +1, +1, +1, +1, +1, −1, −1, +1, −1, +1, −1, −1, −1, +1, +1, −1, −1, +1, −1, −1, −1, +1, +1, +1, −1, −1, +1, +1, −1, −1, +1, −1, +1, +1, −1, +1, −1, +1, +1, +1, −1, +1, −1, +1, +1, +1, +1, +1, +1, −1, −1, −1, +1, −1, +1, −1, −1, −1, +1, −1, −1, +1, +1, +1, +1, +1, +1, −1, +1, −1, +1, +1, −1, +1, −1, −1, −1, −1, +1, +1, −1, −1, −1, +1, +1, −1, +1, −1, −1, +1, −1, −1, −1, +1, −1, +1, −1, +1, −1, −1, −1, +1, −1, +1, −1, +1, +1, +1, −1, −1, −1, +1, −1, −1, +1, +1, −1, +1, +1, +1, −1, −1, −1, −1, +1, −1, −1, −1, −1, −1, +1, −1, +1, +1, −1, +1, −1, +1, +1, −1, −1, −1, −1, −1, +1, −1, −1, +1, +1, −1, −1, −1, +1, −1, −1, +1, −1, −1, +1, +1, −1, −1, +1, +1, +1, +1, −1, −1, −1, −1, −1, +1, −1, −1, −1, −1, −1, +1, −1, +1, −1, +1, +1, −1, +1, +1, +1, +1, +1, −1, +1, +1, +1, −1, −1, +1, −1, +1, −1, +1, +1, +1, +1, +1, −1, −1, −1, +1, +1, −1, −1, −1, −1, −1, −1, −1, −1, −1, +1, +1, +1, +1, +1, −1, +1, −1, +1, −1, −1, +1, +1, +1, −1, +1, +1, +1, +1, +1, −1, +1, +1, +1, −1, +1, −1, +1, −1, −1, −1, −1, −1, +1, −1, −1, −1, −1, −1, +1, +1, +1, +1, +1, −1, −1, +1, +1, −1, −1, +1, −1, −1, +1, −1, −1, −1, +1, +1, −1, −1, +1, −1, −1, −1, −1, +1, +1, −1, +1, −1, +1, +1, −1, +1, +1, −1, +1, −1, −1, −1, −1, −1, −1, +1, −1, −1, −1, −1, +1, +1, +1, −1, +1, +1, −1, −1, +1, −1, −1, −1, +1, +1, +1, −1, +1, −1, −1, −1, +1, +1, −1, +1, +1, −1, +1, +1, +1, +1, +1, +1, +1, +1, +1, +1, +1, −1, −1, −1, −1, +1, +1, −1, +1, −1, +1, −1, +1, −1, +1, −1, +1, −1, −1, +1, −1, +1, −1, +1, −1, +1, −1, −1, +1, −1, −1, −1, −1, +1, +1, −1, +1, +1, +1, −1, +1, −1, +1, +1, +1, −1, +1, −1, +1, +1, −1, −1, −1, −1, −1, −1, +1, −1, +1, −1, −1, −1, +1, −1, +1, −1, −1, +1, −1, +1, +1, −1, −1, +1, +1, −1, −1, −1, +1, +1, +1, −1, +1, +1, −1, +1, +1, −1, +1, −1, +1, +1, −1, −1, −1, −1, −1, +1, +1, +1, +1, −1, +1, −1, +1, −1, −1, −1, +1, −1, +1, +1, −1, +1, +1, +1, −1, +1, +1, −1, +1, +1, +1, −1, +1, +1, +1, +1, −1].

In this case, the LTF sequence of the 640 MHz PPDU is:
$LTF_{4084,4084}$={$c_1$×LTF80MHz_4x_left, $0_5$, $c_2$×LTF80MHz_4x_right, $0_{23}$, $c_3$×LTF80MHz_4x_left, $0_5$, $c_4$×LTF80MHz_4x_right, $0_{23}$, $c_5$×LTF80MHz_4x_left, $0_3$, $c_6$×LTF80MHz_4x_right, $0_{23}$, $c_7$×LTF80MHz_4x_left, $0_5$, $c_8$×LTF80MHz_4x_right, $0_{23}$, $c_9$×LTF80MHz_4x_left, $0_5$, $c_{10}$×LTF80MHz_4x _right, $0_{23}$, $c_{11}$×LTF80MHz_4x_left, $0_5$, $c_{12}$×LTF80MHz_4x_right, $0_{23}$, $C_{13}$×LTF80MHz_4x_left, $0_5$, $c_{14}$×LTF80MHz_4x_right, $0_{23}$, $c_{15}$×LTF80MHz_4x_left, $0_5$, $c_{16}$×LTF80MHz_4x_right. Herein, $c_i$=1 or-1, where i=1, 2, 3, ..., and 16. Parameters $[c_1, ..., c_{16}]$ may be any one of the following (1) to (16):

(1) $[c_1, \cdots, c_{16}] = \pm[1, -1, 1, 1, 1, -1, -1, -1, -1, 1, -1, -1, -1, 1, 1, 1]$;

(2) $[c_1, \cdots, c_{16}] = \pm[1, 1, 1, -1, -1, -1, 1, -1, -1, -1, -1, 1, 1, 1, -1, 1]$;

(3) $[c_1, \cdots, c_{16}] = \pm[1, 1, -1, 1, -1, -1, -1, 1, -1, -1, 1, -1, 1, 1, 1, -1]$;

(4) $[c_1, \cdots, c_{16}] = \pm[-1, 1, 1, 1, -1, 1, -1, -1, 1, -1, -1, -1, 1, -1, 1, 1]$;

(5) $[c_1, \cdots, c_{16}] = \pm[1, 1, -1, 1, -1, -1, -1, 1, -1, 1, 1, -1, 1, 1, 1, -1]$;

$$(6)\ [c_1, \cdots, c_{16}] = \pm[-1,\ 1, 1,\ 1, -1, 1, 1, -1, 1, -1, -1, -1,\ 1, -1,\ 1, 1];$$

$$(7)\ [c_1, \cdots, c_{16}] = \pm[1,\ 1, -1,\ 1, -1, -1, -1,\ 1,\ 1, -1,\ 1, -1, -1,\ 1, -1, -1];$$

$$(8)\ [c_1, \cdots, c_{16}] = \pm[-1, -1, 1, -1, -1, 1, -1,\ 1,\ 1, -1, -1, -1, 1, -1, 1, 1];$$

$$(9)\ [c_1, \cdots, c_{16}] = \pm[1, -1,\ 1,\ 1,\ 1, -1, -1, -1, -1,\ 1,\ 1,\ 1,\ 1,\ 1, -1,\ 1];$$

$$(10)\ [c_1, \cdots, c_{16}] = \pm[1, -1,\ 1,\ 1,\ 1, 1, 1, -1, -1, -1, -1,\ 1,\ 1,\ 1, -1,\ 1];$$

$$(11)\ [c_1, \cdots, c_{16}] = \pm[1, -1,\ 1, -1, -1,\ 1, -1, -1,\ 1,\ 1,\ 1,\ 1, -1, -1, -1, -1];$$

$$(12)\ [c_1, \cdots, c_{16}] = \pm[-1, -1, -1, -1, 1,\ 1, 1, 1, -1, -1,\ 1, -1, -1, 1, -1, 1];$$

$$(13)\ [c_1, \cdots, c_{16}] = \pm[1, -1, -1, -1, -1,\ 1,\ 1, -1,\ 1,\ 1,\ 1,\ 1, -1,\ 1, -1, -1];$$

$$(14)\ [c_1, \cdots, c_{16}] = \pm[-1, -1, 1, -1, 1,\ 1,\ 1, 1, -1,\ 1,\ 1, -1, -1, -1, -1, 1];$$

$$(15)\ [c_1, \cdots, c_{16}] = \pm[1, -1,\ 1, -1, -1, -1, -1, -1,\ 1,\ 1, -1,\ 1, -1,\ 1,\ 1, -1];$$

and

$$(16)\ [c_1, \cdots, c_{16}] = \pm[-1, 1, 1, -1, 1, -1,\ 1, 1, -1, -1, -1, -1, -1,\ 1, -1, 1].$$

In conclusion, an LTF sequence corresponding to a bandwidth greater than 320 MHz is designed, to support signal transmission in a future large-bandwidth (for example, 640 MHz) scenario. The LTF sequence has a low PAPR in the entire bandwidth and also has a low PAPR on the RU/MRU. The LTF sequence has a low PAPR on a plurality of spatial streams in a multi-spatial-stream transmission scenario, to ensure system transmission performance. In addition, in consideration of a case in which a value of each element $c_i$ may be 1 or -1, for the LTF sequence of the 640 MHz PPDU, there may be $2^{16}$ possible values of elements in the parameters $[c_1, ..., c_{16}]$. Further, in consideration of the foregoing plurality of patterns of the 640 MHz RU/MRU and the multi-spatial-stream scenario, values of the foregoing some parameters $[c_1, ..., c_{16}]$ can be determined only through a large amount of calculation and simulation. In comparison, this application provides a design method, so that elements in the parameters $[c_1, ..., c_{16}]$ meet a symmetric splicing condition of a combined sequence. This can overcome the foregoing difficulty, reduce a large amount of calculation and simulation, reduce calculation difficulty and complexity, to more quickly and accurately determine the LTF sequence of the 640 MHz PPDU provided above.

The following describes a design method for the parameters $[c_1, c_2, c_3, \cdots, c_{16}]$ in the LTF sequence.

For example, a time domain signal x(n) corresponding to a real-number frequency domain sequence X(k) satisfies:

$$\mathrm{x}(n) = \frac{1}{N}\sum\nolimits_{-N/2}^{\frac{N}{2}-1} X(k)e^{j\frac{2\pi kn}{N}} = \frac{1}{N}\sum\nolimits_{-N/2}^{\frac{N}{2}-1} X(k)\cos\frac{2\pi kn}{N} + \frac{j}{N}\sum\nolimits_{-N/2}^{\frac{N}{2}-1} X(k)\sin\frac{2\pi kn}{N}\ (1)$$

According to the foregoing formula (1), a real part of the time domain signal x(n) corresponding to the real-number frequency domain sequence is even symmetric (that is, real(x(n))=real(x(-n))), and an imaginary part of the time domain signal is odd symmetric (that is, image(x(n))=-image(x(-n))). When the frequency domain sequence X(k) is even symmetric (that is, X(k)=X(-k)), the time domain signal of the frequency domain sequence X(k) includes only the real part, and the real part is the same as a real part of a time domain signal corresponding to a half sequence (namely, X(k), where k>0; or X(k), where k<0) of X(k). When the frequency domain sequence X(k) is odd symmetric (that is, X(k)=-X(-k)), the time domain signal of the frequency domain sequence X(k) includes only the imaginary part, and the imaginary part is the same as an imaginary part of a time domain signal corresponding to a half sequence (namely, X(k), where k>0; or X(k), where k<0) of X(k). In this case, when the odd-symmetric sequence and the even-symmetric sequence are superposed, a time domain signal corresponding to a combined sequence of the odd-symmetric sequence and the even-symmetric sequence is approximate to the time domain signals corresponding to the two half sequences. Therefore, although the combined sequence is longer, a PAPR of the combined sequence is approximately equal to a PAPR of a half-length half sequence. In this way, the combined sequence has a low PAPR. For example, the even symmetric sequence is $[a_2, a_1, a_1, a_2]$, and the odd symmetric sequence is $[-b_2, -b_1, b_1, b_2]$. In this case, the combined sequence of the odd-symmetric sequence and the even-symmetric sequence may be $[-b_2, a_2, -b_1, a_1, a_1, b_1, a_2, b_2]$ or $[a_2, -b_2, a_1, -b_4, b_1, a_1, b_2, a_2]$.

According to the foregoing principle, when the parameters $[c_1, c_2, c_3, \cdots, c_{16}]$ are designed, parameters $c_i$ corresponding to a sequence in each symmetric 160 MHz bandwidth may meet the symmetric splicing condition of the combined sequence. To be specific, in the 640 MHz bandwidth, if $[c_1, c_2, c_3, c_4]$ corresponds to a first 160 MHz sub-bandwidth, $[c_5, c_6, c_7, c_8]$ corresponds to a second 160 MHz sub-bandwidth, $[c_9, c_{10}, c_{11}, c_{12}]$ corresponds to a third 160 MHz sub-bandwidth, and $[c_{13}, c_{14}, c_{15}, c_{16}]$ corresponds to a fourth 160 MHz sub-bandwidth, parameters $c_i$ corresponding to at least two 160 MHz sub-bandwidths that are in symmetric positions and whose symmetric points are not in any one of the foregoing 160 MHz sub-bandwidths meet the symmetric splicing condition of the combined sequence, that is, satisfy one or more of the following:

$$[c_9, c_{10}, c_{11}, c_{12}] = \pm[-c_8, c_7, -c_6, c_5] \ (2);$$

$$[c_{13}, c_{14}, c_{15}, c_{16}] = \pm[-c_4, c_3, -c_2, c_1] \ (3);$$

$$[c_1, c_2, c_3, c_4] = \pm[-c_8, c_7, -c_6, c_5] \ (4);$$

and

$$[c_9, c_{10}, c_{11}, c_{12}] = \pm[-c_{16}, c_{15}, -c_{14}, c_{13}] \ (5)$$

In other words, the parameters (1) to (16) satisfy one or more of the formula (2) to the formula (5).

In a first implementation, the parameters (1) and (2) both satisfy the formula (2) to the formula (5), and PAPR results of the 640 MHz RU/MRU at different pilot phase rotation angles (for example, 0 degrees, 180 degrees, 60 degrees, and 120 degrees) may be obtained based on the parameters (1) and (2) and the RU/MRU shown in FIG. 5(a) to FIG. 5(i). 0 degrees may indicate that a relative phase rotation angle between pilot subcarriers and data subcarriers corresponding to the LTF sequence is 0 degrees, that is, a ratio of an element in the R matrix to a corresponding element in the P matrix is 1. 180 degrees may indicate that a relative phase rotation angle between pilot subcarriers and data subcarriers corresponding to the LTF sequence is 180 degrees, that is, a ratio of an element in the R matrix to a corresponding element in the P matrix is -1. 60 degrees may indicate that a relative phase rotation angle between pilot subcarriers and data subcarriers corresponding to the LTF sequence is 60 degrees, that is, a ratio of an element in the R matrix to a corresponding element in the P matrix is $w^{\pm(6n+1)}$. 120 degrees may indicate that a relative phase rotation angle between pilot subcarriers and data subcarriers corresponding to the LTF sequence is 120 degrees, that is, a ratio of an element in the R matrix to a corresponding element in the P matrix is $w^{\pm(6n+2)}$, where n is any integer, and $w=\exp(j\times pi/3)$.

In other words, when the LTF sequence is designed, phase rotation may be performed on pilot subcarriers corresponding to the LTF sequence based on a value (namely, a pilot phase rotation coefficient) of an element included in the R matrix, so that a PAPR of the RU/MRU corresponding to the LTF is low. The PAPR results of the RU/MRU at different pilot phase rotation angles are in a one-to-one correspondence with RU/MRU patterns shown in FIG. 5(a) to FIG. 5(i), as shown in Table 1 below.

Table 1

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 8.94 | 8.61 | 8.75 | 8.94 | 8.87 |

(continued)

| RU/MRU type | RU/MRU pattern | Max PAPR (dB) | 0 degrees | 180 degrees | 60 degrees | 120 degrees |
|---|---|---|---|---|---|---|
| 7×996-tone (FIG. 5(a)) | MRU 1 | 9.13 | 8.38 | 8.79 | 8.57 | 8.8 |
| | MRU 2 | | 8.44 | 8.69 | 8.62 | 8.92 |
| | MRU 3 | | 8.44 | 8.68 | 8.5 | 8.8 |
| | MRU 4 | | 8.51 | 8.54 | 8.55 | 8.74 |
| | MRU 5 | | 8.15 | 8.43 | 8.36 | 8.45 |
| | MRU 6 | | 8.27 | 8.24 | 8.61 | 8.6 |
| | MRU 7 | | 8.79 | 8.83 | 8.76 | 8.96 |
| | MRU 8 | | 8.79 | 8.87 | 9.03 | 9.13 |
| 6×996-tone (FIG. 5(b)) | MRU 1 | 8.45 | 7.86 | 7.78 | 7.79 | 7.97 |
| | MRU 2 | | 8.27 | 8.26 | 8.29 | 8.45 |
| | MRU 3 | | 7.86 | 7.78 | 7.79 | 7.97 |
| | MRU 4 | | 8.27 | 8.26 | 8.29 | 8.45 |
| 5×996-tone (FIG. 5(b)) | MRU 1 | 8.82 | 7.3 | 7.55 | 7.36 | 7.65 |
| | MRU 2 | | 7.29 | 7.36 | 7.54 | 7.63 |
| | MRU 3 | | 8.47 | 8.61 | 8.65 | 8.74 |
| | MRU 4 | | 8.5 | 8.53 | 8.77 | 8.82 |
| | MRU 5 | | 7.03 | 7.55 | 7.3 | 7.62 |
| | MRU 6 | | 7.42 | 7.42 | 7.51 | 7.63 |
| | MRU 7 | | 7.02 | 7.38 | 7.18 | 7.39 |
| | MRU 8 | | 7.28 | 7.2 | 7.56 | 7.5 |
| | MRU 9 | | 8.23 | 8.35 | 8.37 | 8.41 |
| | MRU 10 | | 8.1 | 8.51 | 8.21 | 8.6 |
| | MRU 11 | | 7.17 | 7.53 | 7.37 | 7.62 |
| | MRU 12 | | 7.16 | 7.17 | 7.5 | 7.45 |
| 4×996-tone (FIG. 5(c)) | MRU 1 | 6.13 | 5.7 | 6.06 | 5.95 | 6.13 |
| | MRU 2 | | 5.7 | 6.06 | 5.95 | 6.13 |
| 3×996-tone (FIG. 5(c)) | MRU 1 | 8.52 | 7.83 | 7.52 | 7.83 | 7.79 |
| | MRU 2 | | 7.92 | 7.93 | 8.1 | 8.18 |
| | MRU 3 | | 7.97 | 7.8 | 8.05 | 8.15 |
| | MRU 4 | | 7.89 | 8.18 | 8.39 | 8.52 |
| | MRU 5 | | 7.88 | 8.04 | 7.81 | 8.12 |
| | MRU 6 | | 7.58 | 7.85 | 7.78 | 7.79 |
| | MRU 7 | | 7.93 | 7.96 | 7.91 | 8.11 |
| | MRU 8 | | 7.33 | 7.93 | 7.79 | 8.15 |
| 2×996-tone (FIG. 5(d)) | MRU 1 | 6.22 | 5.94 | 6.05 | 6.11 | 6.22 |
| | MRU 2 | | 6.07 | 5.94 | 6.1 | 6.16 |
| | MRU 3 | | 5.94 | 6.05 | 6.11 | 6.22 |
| | MRU 4 | | 6.07 | 5.94 | 6.1 | 6.16 |

(continued)

| RU/MRU type | RU/MRU pattern | Max PAPR (dB) | 0 degrees | 180 degrees | 60 degrees | 120 degrees |
|---|---|---|---|---|---|---|
| 7×996+484-tone (FIG. 5(e)) | MRU 1 | 9.35 | 8.83 | 9.18 | 9.1 | 9.27 |
| | MRU 2 | | 8.66 | 8.71 | 8.82 | 8.8 |
| | MRU 3 | | 9.12 | 8.94 | 9.32 | 9.24 |
| | MRU 4 | | 9.07 | 9.17 | 9.21 | 9.35 |
| | MRU 5 | | 8.64 | 8.54 | 8.37 | 8.57 |
| | MRU 6 | | 8.43 | 8.74 | 8.64 | 8.9 |
| | MRU 7 | | 8.6 | 8.39 | 8.59 | 8.64 |
| | MRU 8 | | 8.64 | 8.72 | 8.83 | 8.95 |
| | MRU 9 | | 8.83 | 9.18 | 9.1 | 9.27 |
| | MRU 10 | | 8.66 | 8.71 | 8.79 | 8.8 |
| | MRU 11 | | 9.12 | 8.94 | 9.32 | 9.24 |
| | MRU 12 | | 9.07 | 9.05 | 9.1 | 9.15 |
| | MRU 13 | | 8.64 | 8.56 | 8.37 | 8.57 |
| | MRU 14 | | 8.51 | 8.87 | 8.77 | 9.05 |
| | MRU 15 | | 8.89 | 8.76 | 9.15 | 9.08 |
| | MRU 16 | | 8.97 | 8.83 | 9.14 | 8.97 |
| 5×996+484-tone (FIG. 5(f)) | MRU 1 | 9.29 | 8.37 | 8.45 | 8.39 | 8.61 |
| | MRU 2 | | 8.04 | 7.97 | 8.13 | 8.14 |
| | MRU 3 | | 8.54 | 7.8 | 8.42 | 8.15 |
| | MRU 4 | | 8.6 | 8.53 | 8.72 | 8.89 |
| | MRU 5 | | 8.59 | 8.63 | 8.73 | 8.88 |
| | MRU 6 | | 8.52 | 8.75 | 8.92 | 9.02 |
| | MRU 7 | | 8.54 | 8.3 | 8.27 | 8.35 |
| | MRU 8 | | 8.35 | 8.58 | 8.61 | 8.87 |
| | MRU 9 | | 8.37 | 8.45 | 8.39 | 8.61 |
| | MRU 10 | | 8.04 | 7.97 | 8.13 | 8.14 |
| | MRU 11 | | 8.54 | 7.73 | 8.42 | 8.15 |
| | MRU 12 | | 8.6 | 8.53 | 8.72 | 8.89 |
| | MRU 13 | | 7.39 | 7.63 | 7.6 | 7.7 |
| | MRU 14 | | 8.25 | 7.8 | 8.24 | 8.2 |
| | MRU 15 | | 7.7 | 7.69 | 7.95 | 7.92 |
| | MRU 16 | | 7.8 | 7.95 | 7.97 | 7.95 |
| | MRU 17 | | 8.75 | 8.43 | 8.95 | 8.93 |
| | MRU 18 | | 8.26 | 8.64 | 8.45 | 8.63 |
| | MRU 19 | | 8.49 | 8.31 | 8.67 | 8.81 |
| | MRU 20 | | 8.48 | 9.23 | 8.87 | 9.29 |
| | MRU 21 | | 7.25 | 7.35 | 7.42 | 7.38 |
| | MRU 22 | | 8.05 | 7.56 | 7.89 | 7.79 |
| | MRU 23 | | 7.97 | 7.74 | 8.11 | 7.98 |
| | MRU 24 | | 8.03 | 8.02 | 7.97 | 8.05 |
| 4×996-tone (FIG. 5(g)) | MRU 1 | 6.18 | 5.77 | 5.96 | 6.07 | 6.18 |

(continued)

| RU/MRU type | RU/MRU pattern | Max PAPR (dB) | 0 degrees | 180 degrees | 60 degrees | 120 degrees |
|---|---|---|---|---|---|---|
| 3×996+484-tone (FIG. 5(g)) | MRU 1 | 8.63 | 7.33 | 7.4 | 7.3 | 7.48 |
| | MRU 2 | | 7.64 | 7.42 | 7.98 | 8.02 |
| | MRU 3 | | 7.73 | 8.41 | 8 | 8.41 |
| | MRU 4 | | 7.99 | 7.95 | 8.28 | 8.16 |
| | MRU 5 | | 6.93 | 7.26 | 6.87 | 7.28 |
| | MRU 6 | | 6.54 | 7 | 6.75 | 6.98 |
| | MRU 7 | | 7.87 | 8.03 | 8.53 | 8.63 |
| | MRU 8 | | 7.67 | 8.27 | 7.91 | 8.27 |
| | MRU 9 | | 7.51 | 8.1 | 7.99 | 7.98 |
| | MRU 10 | | 8.08 | 8.35 | 8.36 | 8.61 |
| | MRU 11 | | 7.08 | 6.81 | 6.97 | 6.91 |
| | MRU 12 | | 6.79 | 6.96 | 7.04 | 7.36 |
| | MRU 13 | | 8.05 | 8 | 7.86 | 8.01 |
| | MRU 14 | | 8.09 | 8.2 | 8.26 | 8.33 |
| | MRU 15 | | 7.13 | 7.55 | 7.35 | 7.91 |
| | MRU 16 | | 7.54 | 8.03 | 7.79 | 8.17 |
| 2×996+484-tone (FIG. 5(h)) | MRU 1 | 9.52 | 8.24 | 7.57 | 8.03 | 7.76 |
| | MRU 2 | | 7.74 | 7.92 | 8.22 | 8.31 |
| | MRU 3 | | 9.25 | 9.19 | 9.39 | 9.35 |
| | MRU 4 | | 9.25 | 9.42 | 9.52 | 9.49 |
| | MRU 5 | | 8.24 | 7.57 | 8.03 | 7.72 |
| | MRU 6 | | 7.83 | 7.98 | 8.31 | 8.38 |
| | MRU 7 | | 6.85 | 6.97 | 7.03 | 7.08 |
| | MRU 8 | | 6.98 | 7.04 | 7.21 | 7.13 |
| | MRU 9 | | 7.86 | 8.3 | 8.22 | 8.04 |
| | MRU 10 | | 8.17 | 7.72 | 8.01 | 7.87 |
| | MRU 11 | | 6.89 | 6.98 | 7.08 | 7.13 |
| | MRU 12 | | 7.23 | 7.12 | 7.29 | 7.15 |
| | MRU 13 | | 8.24 | 7.57 | 8.03 | 7.76 |
| | MRU 14 | | 7.74 | 7.92 | 8.22 | 8.31 |
| | MRU 15 | | 9.25 | 9.19 | 9.39 | 9.35 |
| | MRU 16 | | 9.25 | 9.42 | 9.52 | 9.49 |
| | MRU 17 | | 8.24 | 7.57 | 8.03 | 7.72 |
| | MRU 18 | | 7.83 | 7.98 | 8.31 | 8.38 |
| | MRU 19 | | 6.85 | 6.97 | 7.03 | 7.08 |
| | MRU 20 | | 6.98 | 7.04 | 7.21 | 7.13 |
| | MRU 21 | | 7.86 | 8.3 | 8.22 | 8.04 |
| | MRU 22 | | 8.17 | 7.72 | 8.01 | 7.87 |
| | MRU 23 | | 6.89 | 6.98 | 7.08 | 7.13 |
| | MRU 24 | | 7.23 | 7.12 | 7.29 | 7.15 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 5(i)) | MRU 1 | 7.88 | 7.64 | 7.34 | 7.65 | 7.71 |
| | MRU 2 | | 7.63 | 7.39 | 7.88 | 7.76 |
| | MRU 3 | | 7.44 | 7.03 | 7.61 | 7.46 |
| | MRU 4 | | 7.26 | 7.38 | 7.77 | 7.72 |
| | MRU 5 | | 7.53 | 7.24 | 7.74 | 7.34 |
| | MRU 6 | | 7.47 | 7.16 | 7.59 | 7.29 |
| | MRU 7 | | 7.7 | 7.07 | 7.7 | 7.44 |
| | MRU 8 | | 7.37 | 7.37 | 7.55 | 7.53 |
| | MRU 9 | | 7.64 | 7.34 | 7.65 | 7.71 |
| | MRU 10 | | 7.63 | 7.39 | 7.88 | 7.76 |
| | MRU 11 | | 7.44 | 7.03 | 7.61 | 7.46 |
| | MRU 12 | | 7.26 | 7.38 | 7.77 | 7.72 |
| | MRU 13 | | 7.53 | 7.24 | 7.74 | 7.34 |
| | MRU 14 | | 7.47 | 7.16 | 7.59 | 7.29 |
| | MRU 15 | | 7.7 | 7.07 | 7.7 | 7.44 |
| | MRU 16 | | 7.37 | 7.37 | 7.55 | 7.53 |

In a second implementation, the foregoing parameters (3) and (4) also satisfy the formula (2) to the formula (5), and PAPR results of the 640 MHz RU/MRU at different pilot phase rotation angles (for example, 0 degrees, 180 degrees, 60 degrees, and 120 degrees) may be obtained based on the parameters (3) and (4) and the RU/MRU shown in FIG. 5(a) to FIG. 5(i). The PAPR results of the RU/MRU at different phase rotation angles are in a one-to-one correspondence with the RU/MRU patterns shown in FIG. 5(a) to FIG. 5(i), as shown in Table 2 below.

Table 2

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 9.08 | 8.77 | 9.03 | 8.86 | 9.08 |
| 7×996-tone (FIG. 5(a)) | MRU 1 | 9.16 | 8.76 | 8.81 | 9.14 | 9.16 |
| | MRU 2 | | 8.78 | 8.91 | 8.83 | 9.06 |
| | MRU 3 | | 8.25 | 8.3 | 8.48 | 8.64 |
| | MRU 4 | | 8.38 | 8.58 | 8.4 | 8.63 |
| | MRU 5 | | 8.52 | 8.55 | 8.87 | 8.88 |
| | MRU 6 | | 8.41 | 8.84 | 8.67 | 8.93 |
| | MRU 7 | | 8.73 | 8.53 | 8.91 | 9.09 |
| | MRU 8 | | 8.64 | 8.9 | 8.72 | 9.04 |
| 6×996-tone (FIG. 5(b)) | MRU 1 | 8.49 | 8.26 | 8.26 | 8.4 | 8.49 |
| | MRU 2 | | 7.72 | 7.97 | 8.09 | 8.26 |
| | MRU 3 | | 8.26 | 8.26 | 8.4 | 8.49 |
| | MRU 4 | | 7.72 | 7.97 | 8.09 | 8.26 |

(continued)

| RU/MRU type | RU/MRU pattern | Max PAPR (dB) | 0 degrees | 180 degrees | 60 degrees | 120 degrees |
|---|---|---|---|---|---|---|
| 5×996-tone (FIG. 5(b)) | MRU 1 | 8.72 | 7.19 | 7.13 | 7.35 | 7.5 |
| | MRU 2 | | 7.37 | 7.73 | 7.52 | 7.78 |
| | MRU 3 | | 8.36 | 8.13 | 8.48 | 8.52 |
| | MRU 4 | | 8.43 | 8.23 | 8.55 | 8.38 |
| | MRU 5 | | 7.2 | 7.43 | 7.53 | 7.51 |
| | MRU 6 | | 7.26 | 7.49 | 7.29 | 7.55 |
| | MRU 7 | | 7.35 | 7.43 | 7.7 | 7.69 |
| | MRU 8 | | 7.3 | 7.64 | 7.37 | 7.68 |
| | MRU 9 | | 8.52 | 8.53 | 8.51 | 8.72 |
| | MRU 10 | | 8.48 | 8.45 | 8.38 | 8.59 |
| | MRU 11 | | 7.23 | 7.29 | 7.6 | 7.62 |
| | MRU 12 | | 7.3 | 7.73 | 7.57 | 7.82 |
| 4×996-tone (FIG. 5(c)) | MRU 1 | 6.22 | 5.76 | 6.16 | 5.93 | 6.22 |
| | MRU 2 | | 5.76 | 6.16 | 5.93 | 6.22 |
| 3×996-tone (FIG. 5(c)) | MRU 1 | 8.52 | 7.89 | 8.18 | 8.39 | 8.52 |
| | MRU 2 | | 7.83 | 7.85 | 7.83 | 7.84 |
| | MRU 3 | | 7.76 | 7.93 | 8.1 | 8.18 |
| | MRU 4 | | 7.89 | 7.57 | 8.02 | 8.15 |
| | MRU 5 | | 7.61 | 7.85 | 7.78 | 7.79 |
| | MRU 6 | | 7.93 | 7.96 | 7.91 | 8.11 |
| | MRU 7 | | 7.36 | 7.93 | 7.79 | 8.15 |
| | MRU 8 | | 7.88 | 8.04 | 7.81 | 8.12 |
| 2×996-tone (FIG. 5(d)) | MRU 1 | 6.21 | 6 | 6.07 | 6.08 | 6.21 |
| | MRU 2 | | 5.94 | 5.98 | 5.97 | 6.17 |
| | MRU 3 | | 6 | 6.07 | 6.08 | 6.21 |
| | MRU 4 | | 5.94 | 5.98 | 5.97 | 6.17 |
| 7×996+484-tone (FIG. 5(e)) | MRU 1 | 9.39 | 8.76 | 8.75 | 9.2 | 9.14 |
| | MRU 2 | | 8.77 | 8.86 | 9.17 | 9.22 |
| | MRU 3 | | 8.72 | 8.77 | 8.78 | 8.77 |
| | MRU 4 | | 8.67 | 8.87 | 8.85 | 9.04 |
| | MRU 5 | | 8.79 | 8.87 | 9.02 | 9.03 |
| | MRU 6 | | 9.18 | 8.93 | 9.23 | 9.26 |
| | MRU 7 | | 8.93 | 9.32 | 9.17 | 9.39 |
| | MRU 8 | | 9.31 | 8.97 | 9.34 | 9.17 |
| | MRU 9 | | 8.66 | 8.67 | 8.81 | 8.9 |
| | MRU 10 | | 8.74 | 8.86 | 9.17 | 9.22 |
| | MRU 11 | | 8.69 | 8.77 | 8.67 | 8.77 |
| | MRU 12 | | 8.54 | 8.71 | 8.69 | 8.86 |
| | MRU 13 | | 9.12 | 8.87 | 9.23 | 9.12 |
| | MRU 14 | | 9.18 | 8.93 | 9.26 | 9.36 |
| | MRU 15 | | 8.94 | 9.32 | 9.17 | 9.39 |
| | MRU 16 | | 9.31 | 8.97 | 9.34 | 9.17 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 5(f)) | MRU 1 | 9.22 | 7.94 | 7.79 | 8.28 | 8.42 |
| | MRU 2 | | 8.21 | 7.98 | 8.23 | 8.19 |
| | MRU 3 | | 7.87 | 7.51 | 7.94 | 7.86 |
| | MRU 4 | | 7.77 | 7.93 | 7.86 | 8.05 |
| | MRU 5 | | 8.73 | 8.57 | 8.92 | 8.78 |
| | MRU 6 | | 8.68 | 8.59 | 9.09 | 9.22 |
| | MRU 7 | | 8.28 | 8.59 | 8.75 | 8.95 |
| | MRU 8 | | 8.81 | 8.64 | 8.93 | 9.03 |
| | MRU 9 | | 7.77 | 7.54 | 8.06 | 8.19 |
| | MRU 10 | | 7.92 | 7.92 | 8.11 | 8.18 |
| | MRU 11 | | 7.87 | 7.71 | 8.06 | 7.92 |
| | MRU 12 | | 7.77 | 8.22 | 7.92 | 8.17 |
| | MRU 13 | | 8.49 | 8.04 | 8.35 | 8.04 |
| | MRU 14 | | 8.39 | 8.48 | 8.78 | 8.9 |
| | MRU 15 | | 8.46 | 8.5 | 8.5 | 8.67 |
| | MRU 16 | | 8.26 | 8.25 | 8.55 | 8.55 |
| | MRU 17 | | 8.65 | 8.07 | 8.5 | 8.21 |
| | MRU 18 | | 8.44 | 8.85 | 8.87 | 9.11 |
| | MRU 19 | | 8.5 | 8.48 | 8.54 | 8.75 |
| | MRU 20 | | 8.18 | 8.3 | 8.19 | 8.47 |
| | MRU 21 | | 8.49 | 8.04 | 8.35 | 8.04 |
| | MRU 22 | | 8.39 | 8.48 | 8.78 | 8.9 |
| | MRU 23 | | 8.46 | 8.5 | 8.5 | 8.67 |
| | MRU 24 | | 8.26 | 8.25 | 8.55 | 8.55 |
| 4×996-tone (FIG. 5(g)) | MRU 1 | 6.27 | 5.76 | 6.02 | 6.11 | 6.27 |
| 3×996+484-tone (FIG. 5(g)) | MRU 1 | 8.63 | 7.79 | 8.03 | 8.53 | 8.63 |
| | MRU 2 | | 7.83 | 8.5 | 8.03 | 8.47 |
| | MRU 3 | | 6.76 | 7.04 | 6.88 | 7.2 |
| | MRU 4 | | 6.6 | 7.05 | 7.2 | 7.37 |
| | MRU 5 | | 7.78 | 8.43 | 8.11 | 8.41 |
| | MRU 6 | | 7.92 | 7.95 | 8.28 | 8.16 |
| | MRU 7 | | 7.67 | 7.66 | 7.65 | 7.77 |
| | MRU 8 | | 7.29 | 7.39 | 7.35 | 7.29 |
| | MRU 9 | | 7.7 | 7.23 | 7.81 | 7.64 |
| | MRU 10 | | 7.36 | 7.48 | 7.52 | 7.69 |
| | MRU 11 | | 8.05 | 7.95 | 7.94 | 8.01 |
| | MRU 12 | | 8.09 | 8.2 | 8.26 | 8.33 |
| | MRU 13 | | 6.6 | 7.08 | 7.18 | 7.45 |
| | MRU 14 | | 6.64 | 7.57 | 7.29 | 7.72 |
| | MRU 15 | | 7.58 | 8.1 | 7.99 | 7.98 |
| | MRU 16 | | 8.08 | 8.35 | 8.36 | 8.61 |

(continued)

| RU/MRU type | RU/MRU pattern | Max PAPR (dB) | 0 degrees | 180 degrees | 60 degrees | 120 degrees |
|---|---|---|---|---|---|---|
| 2×996+484-tone (FIG. 5(h)) | MRU 1 | 9.52 | 7.01 | 6.94 | 7.24 | 7.38 |
| | MRU 2 | | 6.87 | 7.1 | 7.23 | 7.37 |
| | MRU 3 | | 7.85 | 8.02 | 8.09 | 8.24 |
| | MRU 4 | | 7.94 | 8.58 | 8.14 | 8.46 |
| | MRU 5 | | 6.94 | 6.88 | 7.22 | 7.4 |
| | MRU 6 | | 7.03 | 6.93 | 7.33 | 7.47 |
| | MRU 7 | | 8.24 | 7.57 | 8.03 | 7.76 |
| | MRU 8 | | 7.74 | 7.92 | 8.22 | 8.31 |
| | MRU 9 | | 9.25 | 9.19 | 9.39 | 9.35 |
| | MRU 10 | | 9.25 | 9.42 | 9.52 | 9.49 |
| | MRU 11 | | 8.24 | 7.57 | 8.03 | 7.72 |
| | MRU 12 | | 7.83 | 7.98 | 8.31 | 8.38 |
| | MRU 13 | | 7.01 | 6.94 | 7.24 | 7.38 |
| | MRU 14 | | 6.87 | 7.1 | 7.23 | 7.37 |
| | MRU 15 | | 7.85 | 8.02 | 8.09 | 8.24 |
| | MRU 16 | | 7.94 | 8.58 | 8.14 | 8.46 |
| | MRU 17 | | 6.94 | 6.88 | 7.22 | 7.4 |
| | MRU 18 | | 7.03 | 6.93 | 7.33 | 7.47 |
| | MRU 19 | | 8.24 | 7.57 | 8.03 | 7.76 |
| | MRU 20 | | 7.74 | 7.92 | 8.22 | 8.31 |
| | MRU 21 | | 9.25 | 9.19 | 9.39 | 9.35 |
| | MRU 22 | | 9.25 | 9.42 | 9.52 | 9.49 |
| | MRU 23 | | 8.24 | 7.57 | 8.03 | 7.72 |
| | MRU 24 | | 7.83 | 7.98 | 8.31 | 8.38 |
| 996+484-tone (FIG. 5(i)) | MRU 1 | 7.9 | 7.67 | 7 | 7.71 | 7.45 |
| | MRU 2 | | 7.38 | 7.41 | 7.5 | 7.55 |
| | MRU 3 | | 7.54 | 7.3 | 7.74 | 7.35 |
| | MRU 4 | | 7.4 | 7.19 | 7.57 | 7.3 |
| | MRU 5 | | 7.38 | 6.94 | 7.6 | 7.46 |
| | MRU 6 | | 7.5 | 7.38 | 7.9 | 7.88 |
| | MRU 7 | | 7.63 | 7.41 | 7.65 | 7.76 |
| | MRU 8 | | 7.63 | 7.27 | 7.66 | 7.46 |
| | MRU 9 | | 7.67 | 7 | 7.71 | 7.45 |
| | MRU 10 | | 7.38 | 7.41 | 7.5 | 7.55 |
| | MRU 11 | | 7.54 | 7.3 | 7.74 | 7.35 |
| | MRU 12 | | 7.4 | 7.19 | 7.57 | 7.3 |
| | MRU 13 | | 7.38 | 6.94 | 7.6 | 7.46 |
| | MRU 14 | | 7.5 | 7.38 | 7.9 | 7.88 |
| | MRU 15 | | 7.63 | 7.41 | 7.65 | 7.76 |
| | MRU 16 | | 7.63 | 7.27 | 7.66 | 7.46 |

In a third implementation, the foregoing parameters (5) and (6) also satisfy the formula (3) and the formula (4), and PAPR results of the 640 MHz RU/MRU at different pilot phase rotation angles (for example, 0 degrees, 180 degrees, 60 degrees, and 120 degrees) may be obtained based on the parameters (5) and (6) and the RU/MRU shown in FIG. 5(a) to FIG. 5(i). The PAPR results of the RU/MRU at different phase rotation angles are in a one-to-one correspondence with the RU/MRU patterns shown in FIG. 5(a) to FIG. 5(i), as shown in Table 3 below.

Table 3

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 8.78 | 8.27 | 8.49 | 8.68 | 8.78 |
| 7×996-tone (FIG. 5(a)) | MRU 1 | 9.28 | 8.74 | 8.98 | 9.17 | 9.28 |
| | MRU 2 | | 8.79 | 8.92 | 8.79 | 9.05 |
| | MRU 3 | | 7.65 | 7.78 | 7.97 | 8.15 |
| | MRU 4 | | 7.87 | 8.14 | 7.98 | 8.14 |
| | MRU 5 | | 8.52 | 8.55 | 8.87 | 8.88 |
| | MRU 6 | | 8.28 | 8.53 | 8.57 | 8.75 |
| | MRU 7 | | 8.01 | 7.78 | 8.03 | 8.15 |
| | MRU 8 | | 8.45 | 8.93 | 8.68 | 8.91 |
| 6×996-tone (FIG. 5(b)) | MRU 1 | 8.67 | 8.53 | 8.44 | 8.57 | 8.67 |
| | MRU 2 | | 7.77 | 7.73 | 7.78 | 7.95 |
| | MRU 3 | | 8.26 | 8.26 | 8.4 | 8.49 |
| | MRU 4 | | 7.7 | 7.76 | 7.84 | 7.87 |
| 5×996-tone (FIG. 5(b)) | MRU 1 | 9.23 | 7.74 | 8.05 | 8 | 8 |
| | MRU 2 | | 8.35 | 8.26 | 8.46 | 8.53 |
| | MRU 3 | | 8.1 | 8 | 8.23 | 8.39 |
| | MRU 4 | | 8.77 | 8.7 | 8.87 | 8.92 |
| | MRU 5 | | 7.2 | 7.43 | 7.53 | 7.51 |
| | MRU 6 | | 7.66 | 7.86 | 7.82 | 7.98 |
| | MRU 7 | | 7.91 | 8.09 | 8.35 | 8.43 |
| | MRU 8 | | 8.15 | 8.28 | 8.38 | 8.34 |
| | MRU 9 | | 8.52 | 8.53 | 8.51 | 8.72 |
| | MRU 10 | | 9.14 | 9.21 | 9.19 | 9.23 |
| | MRU 11 | | 7.87 | 7.95 | 8.28 | 8.32 |
| | MRU 12 | | 7.29 | 7.61 | 7.52 | 7.71 |
| 4×996-tone (FIG. 5(c)) | MRU 1 | 9.37 | 5.76 | 6.16 | 5.93 | 6.22 |
| | MRU 2 | | 9.03 | 9.31 | 9.26 | 9.37 |
| 3×996-tone (FIG. 5(c)) | MRU 1 | 8.52 | 7.89 | 8.18 | 8.39 | 8.52 |
| | MRU 2 | | 7.83 | 7.85 | 7.83 | 7.84 |
| | MRU 3 | | 7.76 | 7.93 | 8.1 | 8.18 |
| | MRU 4 | | 7.89 | 7.57 | 8.02 | 8.15 |
| | MRU 5 | | 7.98 | 7.61 | 7.84 | 7.89 |
| | MRU 6 | | 7.79 | 7.98 | 8.1 | 8.18 |
| | MRU 7 | | 7.36 | 7.93 | 7.79 | 8.15 |
| | MRU 8 | | 7.97 | 8.18 | 8.42 | 8.52 |
| 2×996-tone (FIG. 5(d)) | MRU 1 | 8.68 | 6 | 6.07 | 6.08 | 6.21 |
| | MRU 2 | | 5.94 | 5.98 | 5.97 | 6.17 |
| | MRU 3 | | 7.83 | 8.46 | 8.39 | 8.68 |
| | MRU 4 | | 5.94 | 5.98 | 5.97 | 6.17 |
| 7×996+484-tone (FIG. 5(e)) | MRU 1 | 9.38 | 8.55 | 9.02 | 9.17 | 9.38 |
| | MRU 2 | | 8.81 | 9.02 | 9.03 | 9.25 |
| | MRU 3 | | 8.26 | 8.36 | 8.56 | 8.6 |
| | MRU 4 | | 8.44 | 8.66 | 8.63 | 8.9 |
| | MRU 5 | | 8.42 | 8.54 | 8.51 | 8.61 |
| | MRU 6 | | 8.51 | 8.82 | 9.09 | 9.26 |
| | MRU 7 | | 8.41 | 8.64 | 8.6 | 8.72 |
| | MRU 8 | | 8.39 | 8.44 | 8.75 | 8.78 |
| | MRU 9 | | 8.03 | 8.51 | 8.46 | 8.69 |

(continued)

| RU/MRU type | RU/MRU pattern | Max PAPR (dB) | 0 degrees | 180 degrees | 60 degrees | 120 degrees |
|---|---|---|---|---|---|---|
| | MRU 10 | | 8.74 | 8.86 | 9.17 | 9.22 |
| | MRU 11 | | 8.1 | 8.36 | 8.53 | 8.6 |
| | MRU 12 | | 8.44 | 8.66 | 8.63 | 8.9 |
| | MRU 13 | | 8.58 | 8.54 | 8.58 | 8.61 |
| | MRU 14 | | 8.51 | 8.82 | 9.09 | 9.26 |
| | MRU 15 | | 8.41 | 8.78 | 8.65 | 8.86 |
| | MRU 16 | | 8.39 | 8.44 | 8.75 | 8.78 |
| 5×996+484-tone (FIG. 5(f)) | MRU 1 | 9.46 | 8.01 | 8.05 | 8.04 | 7.98 |
| | MRU 2 | | 8.69 | 8.44 | 8.6 | 8.56 |
| | MRU 3 | | 7.9 | 7.46 | 7.79 | 7.78 |
| | MRU 4 | | 7.72 | 7.55 | 7.76 | 7.79 |
| | MRU 5 | | 8.87 | 8.56 | 8.93 | 8.99 |
| | MRU 6 | | 7.08 | 7.26 | 7.34 | 7.45 |
| | MRU 7 | | 8.58 | 8.78 | 8.7 | 8.86 |
| | MRU 8 | | 7.54 | 7.61 | 7.7 | 7.97 |
| | MRU 9 | | 7.75 | 7.38 | 7.48 | 7.47 |
| | MRU 10 | | 7.92 | 7.92 | 8.11 | 8.18 |
| | MRU 11 | | 7.79 | 8.01 | 8.01 | 8.12 |
| | MRU 12 | | 6.9 | 6.58 | 6.85 | 6.78 |
| | MRU 13 | | 7.84 | 7.69 | 7.77 | 7.73 |
| | MRU 14 | | 9.02 | 9.03 | 9.4 | 9.46 |
| | MRU 15 | | 7.97 | 8.22 | 8.28 | 8.4 |
| | MRU 16 | | 8.37 | 8.35 | 8.37 | 8.58 |
| | MRU 17 | | 8.23 | 8.42 | 8.25 | 8.44 |
| | MRU 18 | | 8.44 | 8.85 | 8.87 | 9.11 |
| | MRU 19 | | 8.57 | 8.72 | 8.74 | 8.95 |
| | MRU 20 | | 9.08 | 9.04 | 9.02 | 9.16 |
| | MRU 21 | | 7.84 | 7.69 | 7.77 | 7.72 |
| | MRU 22 | | 9.02 | 9.03 | 9.4 | 9.46 |
| | MRU 23 | | 7.83 | 8.1 | 8.16 | 8.29 |
| | MRU 24 | | 8.37 | 8.35 | 8.37 | 8.58 |
| 4×996-tone (FIG. 5(g)) | MRU 1 | 7.82 | 7.16 | 7.69 | 7.46 | 7.82 |
| 3×996+484-tone (FIG. 5(g)) | MRU 1 | 8.66 | 7.79 | 8.03 | 8.53 | 8.63 |
| | MRU 2 | | 7.83 | 8.5 | 8.03 | 8.47 |
| | MRU 3 | | 6.76 | 7.04 | 6.88 | 7.2 |
| | MRU 4 | | 6.6 | 7.05 | 7.2 | 7.37 |
| | MRU 5 | | 7.78 | 8.43 | 8.11 | 8.41 |
| | MRU 6 | | 7.92 | 7.95 | 8.28 | 8.16 |
| | MRU 7 | | 7.67 | 7.66 | 7.65 | 7.77 |
| | MRU 8 | | 7.29 | 7.39 | 7.35 | 7.29 |
| | MRU 9 | | 8.47 | 8.37 | 8.66 | 8.53 |
| | MRU 10 | | 7.61 | 7.5 | 7.73 | 7.84 |
| | MRU 11 | | 7.35 | 7.02 | 7.34 | 7.36 |
| | MRU 12 | | 6.58 | 6.78 | 6.64 | 6.7 |
| | MRU 13 | | 7.91 | 8.17 | 8.14 | 8.26 |
| | MRU 14 | | 6.64 | 7.57 | 7.29 | 7.72 |
| | MRU 15 | | 7.17 | 7.09 | 7.09 | 7.1 |
| | MRU 16 | | 6.86 | 7.3 | 7.08 | 7.21 |

(continued)

| RU/MRU type | RU/MRU pattern | Max PAPR (dB) | 0 degrees | 180 degrees | 60 degrees | 120 degrees |
|---|---|---|---|---|---|---|
| 2×996+484-tone (FIG. 5(h)) | MRU 1 | 9.52 | 7.01 | 6.94 | 7.24 | 7.38 |
| | MRU 2 | | 6.87 | 7.1 | 7.23 | 7.37 |
| | MRU 3 | | 7.85 | 8.02 | 8.09 | 8.24 |
| | MRU 4 | | 7.94 | 8.58 | 8.14 | 8.46 |
| | MRU 5 | | 6.94 | 6.88 | 7.22 | 7.4 |
| | MRU 6 | | 7.03 | 6.93 | 7.33 | 7.47 |
| | MRU 7 | | 8.24 | 7.57 | 8.03 | 7.76 |
| | MRU 8 | | 7.74 | 7.92 | 8.22 | 8.31 |
| | MRU 9 | | 9.25 | 9.19 | 9.39 | 9.35 |
| | MRU 10 | | 9.25 | 9.42 | 9.52 | 9.49 |
| | MRU 11 | | 8.24 | 7.57 | 8.03 | 7.72 |
| | MRU 12 | | 7.83 | 7.98 | 8.31 | 8.38 |
| | MRU 13 | | 8.24 | 7.57 | 8.03 | 7.58 |
| | MRU 14 | | 6.87 | 7.1 | 7.23 | 7.37 |
| | MRU 15 | | 8.24 | 7.57 | 8.03 | 7.88 |
| | MRU 16 | | 5.81 | 5.8 | 5.84 | 6.16 |
| | MRU 17 | | 9.25 | 9.23 | 9.45 | 9.4 |
| | MRU 18 | | 7.52 | 7.24 | 7.45 | 7.54 |
| | MRU 19 | | 8.24 | 7.57 | 8.03 | 7.76 |
| | MRU 20 | | 7.74 | 7.92 | 8.22 | 8.31 |
| | MRU 21 | | 9.25 | 9.19 | 9.39 | 9.35 |
| | MRU 22 | | 9.25 | 9.42 | 9.52 | 9.49 |
| | MRU 23 | | 8.24 | 7.57 | 8.03 | 7.72 |
| | MRU 24 | | 7.83 | 7.98 | 8.31 | 8.38 |
| 996+484-tone (FIG. 5(i)) | MRU 1 | 7.9 | 7.67 | 7 | 7.71 | 7.45 |
| | MRU 2 | | 7.38 | 7.41 | 7.5 | 7.55 |
| | MRU 3 | | 7.54 | 7.3 | 7.74 | 7.35 |
| | MRU 4 | | 7.4 | 7.19 | 7.57 | 7.3 |
| | MRU 5 | | 7.38 | 6.94 | 7.6 | 7.46 |
| | MRU 6 | | 7.5 | 7.38 | 7.9 | 7.88 |
| | MRU 7 | | 7.63 | 7.41 | 7.65 | 7.76 |
| | MRU 8 | | 7.63 | 7.27 | 7.66 | 7.46 |
| | MRU 9 | | 7.38 | 6.94 | 7.6 | 7.46 |
| | MRU 10 | | 7.38 | 7.41 | 7.5 | 7.55 |
| | MRU 11 | | 7.44 | 7.03 | 7.61 | 7.46 |
| | MRU 12 | | 7.37 | 7.37 | 7.55 | 7.53 |
| | MRU 13 | | 7.38 | 6.94 | 7.6 | 7.46 |
| | MRU 14 | | 7.5 | 7.38 | 7.9 | 7.88 |
| | MRU 15 | | 7.63 | 7.41 | 7.65 | 7.76 |
| | MRU 16 | | 7.63 | 7.27 | 7.66 | 7.46 |

In a fourth implementation, the foregoing parameters (7) and (8) satisfy only the formula (4), and PAPR results of the 640 MHz RU/MRU at different pilot phase rotation angles (for example, 0 degrees, 180 degrees, 60 degrees, and 120 degrees) may be obtained based on the parameters (7) and (8) and the RU/MRU shown in FIG. 5(a) to FIG. 5(i). The PAPR results of the RU/MRU at different phase rotation angles are in a one-to-one correspondence with the RU/MRU patterns shown in FIG. 5(a) to FIG. 5(i), as shown in Table 4 below.

Table 4

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 8.8 | 8.55 | 8.71 | 8.79 | 8.8 |
| 7×996-tone (FIG. 5(a)) | MRU 1 | 9.36 | 8.62 | 8.4 | 8.49 | 8.33 |
|  | MRU 2 |  | 9.05 | 9.15 | 9.31 | 9.36 |
|  | MRU 3 |  | 8.33 | 8.33 | 8.41 | 8.41 |
|  | MRU 4 |  | 9.23 | 8.96 | 9.18 | 9.32 |
|  | MRU 5 |  | 8.88 | 9.2 | 9.06 | 9.23 |
|  | MRU 6 |  | 8.71 | 8.53 | 8.68 | 8.67 |
|  | MRU 7 |  | 8.5 | 8.54 | 8.78 | 8.8 |
|  | MRU 8 |  | 7.75 | 8.06 | 7.99 | 8.02 |
| 6×996-tone (FIG. 5(b)) | MRU 1 | 8.96 | 8.32 | 8.18 | 8.36 | 8.45 |
|  | MRU 2 |  | 8.13 | 8.4 | 8.45 | 8.65 |
|  | MRU 3 |  | 8.45 | 8.91 | 8.74 | 8.96 |
|  | MRU 4 |  | 7.59 | 7.7 | 7.94 | 8.01 |
| 5×996-tone (FIG. 5(b)) | MRU 1 | 9.16 | 7.74 | 8.06 | 8.31 | 8.45 |
|  | MRU 2 |  | 8.09 | 8.3 | 8.23 | 8.44 |
|  | MRU 3 |  | 7.53 | 7.81 | 7.77 | 7.84 |
|  | MRU 4 |  | 8.44 | 8.49 | 8.92 | 9.12 |
|  | MRU 5 |  | 7.2 | 7.43 | 7.53 | 7.51 |
|  | MRU 6 |  | 7.44 | 7.98 | 7.92 | 8.18 |
|  | MRU 7 |  | 9.01 | 8.72 | 8.96 | 9.01 |
|  | MRU 8 |  | 8.09 | 8.06 | 8.42 | 8.4 |
|  | MRU 9 |  | 8.53 | 8.43 | 8.44 | 8.58 |
|  | MRU 10 |  | 8.55 | 8.02 | 8.45 | 8.32 |
|  | MRU 11 |  | 8.08 | 8.28 | 8.26 | 8.45 |
|  | MRU 12 |  | 8.32 | 8.96 | 8.81 | 9.16 |
| 4×996-tone (FIG. 5(c)) | MRU 1 | 7.79 | 5.76 | 6.16 | 5.93 | 6.22 |
|  | MRU 2 |  | 7.29 | 7.39 | 7.62 | 7.79 |
| 3×996-tone (FIG. 5(c)) | MRU 1 | 8.52 | 7.89 | 8.18 | 8.39 | 8.52 |
|  | MRU 2 |  | 7.83 | 7.85 | 7.83 | 7.84 |
|  | MRU 3 |  | 7.76 | 7.93 | 8.1 | 8.18 |
|  | MRU 4 |  | 7.89 | 7.57 | 8.02 | 8.15 |
|  | MRU 5 |  | 7.98 | 7.61 | 7.84 | 7.89 |
|  | MRU 6 |  | 7.85 | 7.82 | 7.89 | 7.97 |
|  | MRU 7 |  | 7.36 | 7.93 | 7.79 | 8.15 |
|  | MRU 8 |  | 7.64 | 7.41 | 7.89 | 7.78 |
| 2×996-tone (FIG. 5(d)) | MRU 1 | 8.51 | 6 | 6.07 | 6.08 | 6.21 |
|  | MRU 2 |  | 5.94 | 5.98 | 5.97 | 6.17 |
|  | MRU 3 |  | 8.23 | 8.32 | 8.39 | 8.51 |
|  | MRU 4 |  | 5.94 | 6.05 | 6.1 | 6.22 |

(continued)

| RU/MRU type | RU/MRU pattern | Max PAPR (dB) | 0 degrees | 180 degrees | 60 degrees | 120 degrees |
|---|---|---|---|---|---|---|
| 7×996+484-tone (FIG. 5(e)) | MRU 1 | 9.49 | 8.71 | 8.54 | 8.68 | 8.59 |
| | MRU 2 | | 8.67 | 8.6 | 9.07 | 9.04 |
| | MRU 3 | | 8.93 | 8.6 | 9.14 | 9.02 |
| | MRU 4 | | 8.57 | 8.57 | 8.74 | 8.72 |
| | MRU 5 | | 8.98 | 9.08 | 9.12 | 9.18 |
| | MRU 6 | | 8.65 | 8.46 | 9 | 8.91 |
| | MRU 7 | | 8.72 | 8.99 | 8.94 | 9.07 |
| | MRU 8 | | 9.26 | 8.84 | 9.28 | 9.23 |
| | MRU 9 | | 9.13 | 9.37 | 9.37 | 9.49 |
| | MRU 10 | | 8.81 | 8.68 | 8.9 | 8.84 |
| | MRU 11 | | 8.58 | 8.43 | 8.32 | 8.48 |
| | MRU 12 | | 9.25 | 8.77 | 9.18 | 8.98 |
| | MRU 13 | | 8.55 | 8.58 | 8.66 | 8.64 |
| | MRU 14 | | 8.64 | 8.64 | 8.74 | 8.74 |
| | MRU 15 | | 8.61 | 8.87 | 8.76 | 8.82 |
| | MRU 16 | | 8.7 | 8.69 | 9.1 | 9.1 |
| 5×996+484-tone (FIG. 5(f)) | MRU 1 | 9.48 | 8.03 | 8.1 | 8.26 | 8.44 |
| | MRU 2 | | 7.94 | 8 | 8.4 | 8.48 |
| | MRU 3 | | 7.62 | 7.6 | 8.01 | 7.9 |
| | MRU 4 | | 7.65 | 7.81 | 7.79 | 8.06 |
| | MRU 5 | | 7.4 | 7.06 | 7.5 | 7.5 |
| | MRU 6 | | 8.47 | 8.77 | 8.56 | 8.69 |
| | MRU 7 | | 7.34 | 7.59 | 7.55 | 7.75 |
| | MRU 8 | | 8.78 | 8.83 | 9.18 | 9.4 |
| | MRU 9 | | 7.77 | 7.54 | 8.06 | 8.19 |
| | MRU 10 | | 7.49 | 7.55 | 7.71 | 7.92 |
| | MRU 11 | | 6.46 | 6.57 | 6.95 | 7.14 |
| | MRU 12 | | 8.09 | 7.63 | 8.09 | 7.92 |
| | MRU 13 | | 8.73 | 8.8 | 8.85 | 8.86 |
| | MRU 14 | | 8.75 | 9.02 | 9.29 | 9.48 |
| | MRU 15 | | 8.46 | 8.05 | 8.21 | 8.28 |
| | MRU 16 | | 8.49 | 8.51 | 8.9 | 8.91 |
| | MRU 17 | | 8.64 | 8.53 | 8.72 | 8.8 |
| | MRU 18 | | 8.19 | 7.99 | 8.19 | 8.21 |
| | MRU 19 | | 8.56 | 8.21 | 8.45 | 8.57 |
| | MRU 20 | | 8.33 | 8.28 | 8.69 | 8.67 |
| | MRU 21 | | 8.42 | 7.84 | 8.12 | 8.16 |
| | MRU 22 | | 8.32 | 8.12 | 8.22 | 8.29 |
| | MRU 23 | | 8.59 | 8.75 | 8.72 | 8.9 |
| | MRU 24 | | 8.65 | 8.85 | 8.9 | 9.08 |
| 4×996-tone (FIG. 5(g)) | MRU 1 | 7.54 | 7.1 | 7.25 | 7.4 | 7.54 |

(continued)

| RU/MRU type | RU/MRU pattern | Max PAPR (dB) | 0 degrees | 180 degrees | 60 degrees | 120 degrees |
|---|---|---|---|---|---|---|
| 3×996+484-tone (FIG. 5(g)) | MRU 1 | 8.9 | 7.79 | 8.03 | 8.53 | 8.63 |
| | MRU 2 | | 7.83 | 8.5 | 8.03 | 8.47 |
| | MRU 3 | | 6.76 | 7.04 | 6.88 | 7.2 |
| | MRU 4 | | 6.6 | 7.05 | 7.2 | 7.37 |
| | MRU 5 | | 7.78 | 8.43 | 8.11 | 8.41 |
| | MRU 6 | | 7.92 | 7.95 | 8.28 | 8.16 |
| | MRU 7 | | 7.67 | 7.66 | 7.65 | 7.77 |
| | MRU 8 | | 7.29 | 7.39 | 7.35 | 7.29 |
| | MRU 9 | | 7.43 | 7.6 | 7.75 | 7.77 |
| | MRU 10 | | 8.71 | 8.38 | 8.83 | 8.9 |
| | MRU 11 | | 6.33 | 6.75 | 6.58 | 6.8 |
| | MRU 12 | | 7.33 | 7.51 | 7.88 | 7.96 |
| | MRU 13 | | 6.6 | 7.08 | 7.18 | 7.45 |
| | MRU 14 | | 7.68 | 8.17 | 7.9 | 8.23 |
| | MRU 15 | | 7.16 | 7.28 | 7.48 | 7.53 |
| | MRU 16 | | 7.08 | 7.09 | 7.33 | 7.4 |
| 2×996+484-tone (FIG. 5(h)) | MRU 1 | 9.52 | 7.01 | 6.94 | 7.24 | 7.38 |
| | MRU 2 | | 6.87 | 7.1 | 7.23 | 7.37 |
| | MRU 3 | | 7.85 | 8.02 | 8.09 | 8.24 |
| | MRU 4 | | 7.94 | 8.58 | 8.14 | 8.46 |
| | MRU 5 | | 6.94 | 6.88 | 7.22 | 7.4 |
| | MRU 6 | | 7.03 | 6.93 | 7.33 | 7.47 |
| | MRU 7 | | 8.24 | 7.57 | 8.03 | 7.76 |
| | MRU 8 | | 7.74 | 7.92 | 8.22 | 8.31 |
| | MRU 9 | | 9.25 | 9.19 | 9.39 | 9.35 |
| | MRU 10 | | 9.25 | 9.42 | 9.52 | 9.49 |
| | MRU 11 | | 8.24 | 7.57 | 8.03 | 7.72 |
| | MRU 12 | | 7.83 | 7.98 | 8.31 | 8.38 |
| | MRU 13 | | 7.15 | 7.04 | 7.26 | 7.43 |
| | MRU 14 | | 6.97 | 7.04 | 7.29 | 7.34 |
| | MRU 15 | | 8.13 | 8.29 | 8.45 | 8.47 |
| | MRU 16 | | 8.46 | 8.44 | 8.49 | 8.65 |
| | MRU 17 | | 7.19 | 6.87 | 7.16 | 7.18 |
| | MRU 18 | | 7.15 | 7.11 | 7.37 | 7.48 |
| | MRU 19 | | 8.24 | 7.57 | 8.03 | 7.58 |
| | MRU 20 | | 6.87 | 7.1 | 7.23 | 7.37 |
| | MRU 21 | | 8.24 | 7.57 | 8.03 | 7.88 |
| | MRU 22 | | 5.81 | 5.8 | 5.84 | 6.16 |
| | MRU 23 | | 9.25 | 9.23 | 9.45 | 9.4 |
| | MRU 24 | | 7.52 | 7.24 | 7.45 | 7.54 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 5(i)) | MRU 1 | 7.9 | 7.67 | 7 | 7.71 | 7.45 |
| | MRU 2 | | 7.38 | 7.41 | 7.5 | 7.55 |
| | MRU 3 | | 7.54 | 7.3 | 7.74 | 7.35 |
| | MRU 4 | | 7.4 | 7.19 | 7.57 | 7.3 |
| | MRU 5 | | 7.38 | 6.94 | 7.6 | 7.46 |
| | MRU 6 | | 7.5 | 7.38 | 7.9 | 7.88 |
| | MRU 7 | | 7.63 | 7.41 | 7.65 | 7.76 |
| | MRU 8 | | 7.63 | 7.27 | 7.66 | 7.46 |
| | MRU 9 | | 7.67 | 7 | 7.71 | 7.45 |
| | MRU 10 | | 7.5 | 7.38 | 7.9 | 7.88 |
| | MRU 11 | | 7.7 | 7.07 | 7.7 | 7.44 |
| | MRU 12 | | 7.26 | 7.38 | 7.77 | 7.72 |
| | MRU 13 | | 7.64 | 7.34 | 7.65 | 7.71 |
| | MRU 14 | | 7.63 | 7.39 | 7.88 | 7.76 |
| | MRU 15 | | 7.44 | 7.03 | 7.61 | 7.46 |
| | MRU 16 | | 7.26 | 7.38 | 7.77 | 7.72 |

In a fifth implementation, the foregoing parameters (9) and (10) satisfy only the formula (4), and PAPR results of the 640 MHz RU/MRU at different pilot phase rotation angles (for example, 0 degrees, 180 degrees, 60 degrees, and 120 degrees) may be obtained based on the parameters (9) and (10) and the RU/MRU shown in FIG. 5(a) to FIG. 5(i). The PAPR results of the RU/MRU at different phase rotation angles are in a one-to-one correspondence with the RU/MRU patterns shown in FIG. 5(a) to FIG. 5(i), as shown in Table 5 below.

Table 5

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 8.05 | 7.69 | 8.05 | 7.89 | 8.04 |
| 7×996-tone (FIG. 5(a)) | MRU 1 | 8.92 | 8.58 | 8.68 | 8.86 | 8.8 |
| | MRU 2 | | 8.54 | 8.21 | 8.49 | 8.25 |
| | MRU 3 | | 8.89 | 8.91 | 8.92 | 8.87 |
| | MRU 4 | | 7.89 | 7.75 | 8.03 | 8 |
| | MRU 5 | | 8.38 | 8.61 | 8.44 | 8.45 |
| | MRU 6 | | 7.37 | 7.68 | 7.45 | 7.6 |
| | MRU 7 | | 8.1 | 8.17 | 8.45 | 8.49 |
| | MRU 8 | | 8.47 | 8.16 | 8.73 | 8.67 |
| 6×996-tone (FIG. 5(b)) | MRU 1 | 8.61 | 8.18 | 8.45 | 8.38 | 8.61 |
| | MRU 2 | | 8.14 | 8.29 | 8.23 | 8.45 |
| | MRU 3 | | 7.46 | 7.83 | 7.87 | 8.04 |
| | MRU 4 | | 7.82 | 7.92 | 7.86 | 7.89 |

(continued)

| RU/MRU type | RU/MRU pattern | Max PAPR (dB) | 0 degrees | 180 degrees | 60 degrees | 120 degrees |
|---|---|---|---|---|---|---|
| 5×996-tone (FIG. 5(b)) | MRU 1 | 9.65 | 9.62 | 9.5 | 9.59 | 9.65 |
| | MRU 2 | | 7.08 | 7.46 | 7.23 | 7.57 |
| | MRU 3 | | 7.76 | 8.23 | 7.94 | 8.21 |
| | MRU 4 | | 5.8 | 6.1 | 5.98 | 6.1 |
| | MRU 5 | | 7.76 | 8.21 | 7.8 | 8.14 |
| | MRU 6 | | 7.42 | 7.42 | 7.51 | 7.63 |
| | MRU 7 | | 6.94 | 7.2 | 7.12 | 7.2 |
| | MRU 8 | | 8.35 | 8.54 | 8.68 | 8.87 |
| | MRU 9 | | 8.44 | 8.74 | 8.74 | 8.91 |
| | MRU 10 | | 7.76 | 8.04 | 8.2 | 8.35 |
| | MRU 11 | | 8.61 | 8.84 | 8.74 | 8.92 |
| | MRU 12 | | 8.46 | 8.51 | 8.55 | 8.69 |
| 4×996-tone (FIG. 5(c)) | MRU 1 | 8.83 | 5.7 | 6.06 | 5.95 | 6.13 |
| | MRU 2 | | 8.61 | 8.55 | 8.83 | 8.83 |
| 3×996-tone (FIG. 5(c)) | MRU 1 | 8.52 | 7.83 | 7.52 | 7.83 | 7.79 |
| | MRU 2 | | 7.92 | 7.93 | 8.1 | 8.18 |
| | MRU 3 | | 7.97 | 7.8 | 8.05 | 8.15 |
| | MRU 4 | | 7.89 | 8.18 | 8.39 | 8.52 |
| | MRU 5 | | 7.83 | 7.52 | 7.83 | 7.79 |
| | MRU 6 | | 7.47 | 8.04 | 7.8 | 8.17 |
| | MRU 7 | | 7.83 | 7.79 | 7.9 | 7.84 |
| | MRU 8 | | 7.33 | 7.93 | 7.79 | 8.15 |
| 2×996-tone (FIG. 5(d)) | MRU 1 | 6.22 | 5.94 | 6.05 | 6.11 | 6.22 |
| | MRU 2 | | 6.07 | 5.94 | 6.1 | 6.16 |
| | MRU 3 | | 6.07 | 5.94 | 6.1 | 6.16 |
| | MRU 4 | | 6 | 6.07 | 6.08 | 6.21 |
| 7×996+484-tone (FIG. 5(e)) | MRU 1 | 9.18 | 8.24 | 8.08 | 8.41 | 8.32 |
| | MRU 2 | | 8.62 | 8.59 | 9.07 | 9.11 |
| | MRU 3 | | 7.7 | 7.89 | 7.81 | 8.13 |
| | MRU 4 | | 8.46 | 8.34 | 8.5 | 8.19 |
| | MRU 5 | | 8.2 | 8.49 | 8.38 | 8.63 |
| | MRU 6 | | 8.36 | 8.47 | 8.42 | 8.63 |
| | MRU 7 | | 7.29 | 7.39 | 7.5 | 7.6 |
| | MRU 8 | | 7.66 | 7.49 | 7.74 | 7.66 |
| | MRU 9 | | 7.58 | 7.88 | 7.83 | 8.07 |
| | MRU 10 | | 8.61 | 8.56 | 8.56 | 8.71 |
| | MRU 11 | | 7.17 | 7.23 | 7.35 | 7.49 |
| | MRU 12 | | 7.92 | 7.86 | 8.04 | 8.02 |
| | MRU 13 | | 7.35 | 7.26 | 7.3 | 7.4 |
| | MRU 14 | | 7.69 | 8.35 | 8.05 | 8.39 |
| | MRU 15 | | 8.03 | 7.78 | 8.29 | 8.21 |
| | MRU 16 | | 8.65 | 8.63 | 9.15 | 9.18 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 5(f)) | MRU 1 | 9.38 | 9.13 | 8.88 | 9.14 | 9.13 |
| | MRU 2 | | 9.11 | 8.97 | 9.32 | 9.38 |
| | MRU 3 | | 7.53 | 7.53 | 7.74 | 7.71 |
| | MRU 4 | | 7.73 | 8.27 | 7.99 | 8.37 |
| | MRU 5 | | 7.77 | 8.14 | 8.22 | 8.09 |
| | MRU 6 | | 7.83 | 8.15 | 7.95 | 8.23 |
| | MRU 7 | | 6.96 | 6.94 | 7.15 | 7.26 |
| | MRU 8 | | 7.06 | 6.63 | 7.27 | 7.2 |
| | MRU 9 | | 7.62 | 8.24 | 7.82 | 7.98 |
| | MRU 10 | | 7.92 | 7.69 | 7.87 | 7.86 |
| | MRU 11 | | 7.48 | 7.47 | 7.91 | 7.85 |
| | MRU 12 | | 7.71 | 7.56 | 7.86 | 7.7 |
| | MRU 13 | | 7.74 | 8.01 | 7.83 | 8.12 |
| | MRU 14 | | 8.22 | 8.31 | 8.49 | 8.56 |
| | MRU 15 | | 7.79 | 8.26 | 8.2 | 8.41 |
| | MRU 16 | | 8.61 | 8.75 | 8.8 | 9.05 |
| | MRU 17 | | 7.95 | 8.18 | 8.39 | 8.5 |
| | MRU 18 | | 8.29 | 8.47 | 8.67 | 8.76 |
| | MRU 19 | | 8.03 | 7.66 | 8.02 | 7.8 |
| | MRU 20 | | 8.67 | 8.77 | 8.91 | 9.12 |
| | MRU 21 | | 7.87 | 8.06 | 8.08 | 8.32 |
| | MRU 22 | | 8.7 | 9.19 | 9 | 9.34 |
| | MRU 23 | | 7.93 | 8.28 | 8.28 | 8.46 |
| | MRU 24 | | 8.5 | 8.26 | 8.9 | 8.84 |
| 4×996-tone (FIG. 5(g)) | MRU 1 | 8.55 | 8.07 | 8.33 | 8.41 | 8.55 |
| 3×996+484-tone (FIG. 5(g)) | MRU 1 | 8.74 | 7.33 | 7.4 | 7.3 | 7.48 |
| | MRU 2 | | 7.64 | 7.42 | 7.98 | 8.02 |
| | MRU 3 | | 7.73 | 8.41 | 8 | 8.41 |
| | MRU 4 | | 7.99 | 7.95 | 8.28 | 8.16 |
| | MRU 5 | | 6.93 | 7.26 | 6.87 | 7.28 |
| | MRU 6 | | 6.54 | 7 | 6.75 | 6.98 |
| | MRU 7 | | 7.87 | 8.03 | 8.53 | 8.63 |
| | MRU 8 | | 7.67 | 8.27 | 7.91 | 8.27 |
| | MRU 9 | | 8.21 | 8.22 | 8.43 | 8.32 |
| | MRU 10 | | 8.7 | 8.07 | 8.74 | 8.57 |
| | MRU 11 | | 7.86 | 8.27 | 8.12 | 8.28 |
| | MRU 12 | | 7.56 | 8.1 | 7.9 | 8.17 |
| | MRU 13 | | 7.84 | 7.84 | 8.24 | 8.05 |
| | MRU 14 | | 8.18 | 7.79 | 8.18 | 8.16 |
| | MRU 15 | | 8.08 | 8.57 | 8.39 | 8.66 |
| | MRU 16 | | 7.96 | 8.44 | 8.25 | 8.48 |

(continued)

| RU/MRU type | RU/MRU pattern | Max PAPR (dB) | 0 degrees | 180 degrees | 60 degrees | 120 degrees |
|---|---|---|---|---|---|---|
| 2×996+484-tone (FIG. 5(h)) | MRU 1 | 9.58 | 8.24 | 7.57 | 8.03 | 7.76 |
| | MRU 2 | | 7.74 | 7.92 | 8.22 | 8.31 |
| | MRU 3 | | 9.25 | 9.19 | 9.39 | 9.35 |
| | MRU 4 | | 9.25 | 9.42 | 9.52 | 9.49 |
| | MRU 5 | | 8.24 | 7.57 | 8.03 | 7.72 |
| | MRU 6 | | 7.83 | 7.98 | 8.31 | 8.38 |
| | MRU 7 | | 6.85 | 6.97 | 7.03 | 7.08 |
| | MRU 8 | | 6.98 | 7.04 | 7.21 | 7.13 |
| | MRU 9 | | 7.86 | 8.3 | 8.22 | 8.04 |
| | MRU 10 | | 8.17 | 7.72 | 8.01 | 7.87 |
| | MRU 11 | | 6.89 | 6.98 | 7.08 | 7.13 |
| | MRU 12 | | 7.23 | 7.12 | 7.29 | 7.15 |
| | MRU 13 | | 9.46 | 9.25 | 9.58 | 9.3 |
| | MRU 14 | | 7.26 | 6.69 | 7.16 | 6.92 |
| | MRU 15 | | 8.09 | 7.61 | 8.04 | 7.72 |
| | MRU 16 | | 5.81 | 5.8 | 5.84 | 6.16 |
| | MRU 17 | | 7.9 | 7.46 | 7.77 | 7.58 |
| | MRU 18 | | 6.55 | 6.92 | 6.99 | 6.85 |
| | MRU 19 | | 7.74 | 7.46 | 7.81 | 7.65 |
| | MRU 20 | | 6.98 | 6.95 | 7.31 | 7.41 |
| | MRU 21 | | 7.97 | 7.74 | 7.98 | 7.77 |
| | MRU 22 | | 6.04 | 6.28 | 6.54 | 6.65 |
| | MRU 23 | | 9.46 | 9.25 | 9.58 | 9.3 |
| | MRU 24 | | 6.81 | 7.53 | 7.13 | 7.35 |
| 996+484-tone (FIG. 5(i)) | MRU 1 | 7.88 | 7.64 | 7.34 | 7.65 | 7.71 |
| | MRU 2 | | 7.63 | 7.39 | 7.88 | 7.76 |
| | MRU 3 | | 7.44 | 7.03 | 7.61 | 7.46 |
| | MRU 4 | | 7.26 | 7.38 | 7.77 | 7.72 |
| | MRU 5 | | 7.53 | 7.24 | 7.74 | 7.34 |
| | MRU 6 | | 7.47 | 7.16 | 7.59 | 7.29 |
| | MRU 7 | | 7.7 | 7.07 | 7.7 | 7.44 |
| | MRU 8 | | 7.37 | 7.37 | 7.55 | 7.53 |
| | MRU 9 | | 7.53 | 7.24 | 7.74 | 7.34 |
| | MRU 10 | | 7.47 | 7.16 | 7.59 | 7.29 |
| | MRU 11 | | 7.7 | 7.07 | 7.7 | 7.44 |
| | MRU 12 | | 7.37 | 7.37 | 7.55 | 7.53 |
| | MRU 13 | | 7.67 | 7 | 7.71 | 7.45 |
| | MRU 14 | | 7.38 | 7.41 | 7.5 | 7.55 |
| | MRU 15 | | 7.54 | 7.3 | 7.74 | 7.35 |
| | MRU 16 | | 7.4 | 7.19 | 7.57 | 7.3 |

In a sixth implementation, the foregoing parameters (11) and (12) satisfy only the formula (3), and PAPR results of the 640 MHz RU/MRU at different pilot phase rotation angles (for example, 0 degrees, 180 degrees, 60 degrees, and 120 degrees) may be obtained based on the parameters (11) and (12) and the RU/MRU shown in FIG. 5(a) to FIG. 5(i). The PAPR results of the RU/MRU at different phase rotation angles are in a one-to-one correspondence with the RU/MRU patterns shown in FIG. 5(a) to FIG. 5(i), as shown in Table 6 below.

Table 6

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 9.37 | 9.37 | 9.19 | 9.36 | 9.27 |
| 7×996-tone (FIG. 5(a)) | MRU 1 | 9.64 | 8.87 | 9.01 | 8.9 | 8.91 |
| | MRU 2 | | 9.48 | 9.23 | 9.49 | 9.64 |
| | MRU 3 | | 8.87 | 9.01 | 8.9 | 8.91 |
| | MRU 4 | | 8.5 | 8.64 | 8.64 | 8.7 |
| | MRU 5 | | 9.1 | 8.88 | 9.26 | 9.46 |
| | MRU 6 | | 8.5 | 8.32 | 8.64 | 8.59 |
| | MRU 7 | | 9.1 | 9.09 | 9.23 | 9.27 |
| | MRU 8 | | 8.62 | 8.58 | 8.88 | 9.11 |
| 6×996-tone (FIG. 5(b)) | MRU 1 | 9.26 | 9.03 | 9.26 | 9.02 | 9.21 |
| | MRU 2 | | 8.42 | 8.75 | 8.6 | 8.89 |
| | MRU 3 | | 7.92 | 8.04 | 8 | 8.19 |
| | MRU 4 | | 7.96 | 8.09 | 8.27 | 8.33 |
| 5×996-tone (FIG. 5(b)) | MRU 1 | 9.81 | 7.34 | 7.14 | 7.31 | 7.44 |
| | MRU 2 | | 8.19 | 8 | 8.34 | 8.52 |
| | MRU 3 | | 7.29 | 7.34 | 7.31 | 7.44 |
| | MRU 4 | | 7.44 | 7.56 | 7.57 | 7.76 |
| | MRU 5 | | 8.11 | 8.03 | 8.43 | 8.39 |
| | MRU 6 | | 7.21 | 7.29 | 7.5 | 7.6 |
| | MRU 7 | | 9.35 | 9.81 | 9.4 | 9.74 |
| | MRU 8 | | 8.6 | 8.77 | 8.91 | 8.84 |
| | MRU 9 | | 9.21 | 9.12 | 9.32 | 9.33 |
| | MRU 10 | | 8.05 | 8.18 | 8.1 | 8.07 |
| | MRU 11 | | 8.9 | 9.2 | 8.97 | 9.05 |
| | MRU 12 | | 8.94 | 8.64 | 9.04 | 9.07 |
| 4×996-tone (FIG. 5(c)) | MRU 1 | 9.2 | 7.29 | 7.39 | 7.62 | 7.79 |
| | MRU 2 | | 8.93 | 9.2 | 9.05 | 9.11 |
| 3×996-tone (FIG. 5(c)) | MRU 1 | 8.26 | 7.57 | 7.78 | 7.83 | 7.69 |
| | MRU 2 | | 7.58 | 7.85 | 7.78 | 7.79 |
| | MRU 3 | | 8.04 | 8 | 8.09 | 7.87 |
| | MRU 4 | | 7.98 | 7.61 | 7.84 | 7.89 |
| | MRU 5 | | 7.42 | 7.88 | 7.47 | 7.8 |
| | MRU 6 | | 7.58 | 7.96 | 8 | 8.13 |
| | MRU 7 | | 7.97 | 7.8 | 8.05 | 8.15 |
| | MRU 8 | | 7.88 | 8.21 | 7.89 | 8.26 |
| 2×996-tone (FIG. 5(d)) | MRU 1 | 8.51 | 8.23 | 8.32 | 8.39 | 8.51 |
| | MRU 2 | | 5.94 | 6.05 | 6.11 | 6.22 |
| | MRU 3 | | 8.2 | 8.38 | 8.38 | 8.33 |
| | MRU 4 | | 8.2 | 8.38 | 8.38 | 8.33 |

(continued)

| RU/MRU type | RU/MRU pattern | Max PAPR (dB) | 0 degrees | 180 degrees | 60 degrees | 120 degrees |
|---|---|---|---|---|---|---|
| 7×996+484-tone (FIG. 5(e)) | MRU 1 | 10.17 | 8.97 | 8.76 | 9.13 | 9.24 |
| | MRU 2 | | 9.6 | 9.53 | 9.73 | 9.69 |
| | MRU 3 | | 8.65 | 8.97 | 8.79 | 8.95 |
| | MRU 4 | | 10.01 | 9.65 | 10 | 10.17 |
| | MRU 5 | | 8.64 | 8.53 | 8.75 | 8.89 |
| | MRU 6 | | 9.6 | 9.53 | 9.74 | 9.69 |
| | MRU 7 | | 8.78 | 8.41 | 8.83 | 8.65 |
| | MRU 8 | | 9.16 | 9.31 | 9.46 | 9.46 |
| | MRU 9 | | 8.72 | 8.84 | 8.83 | 8.89 |
| | MRU 10 | | 9.71 | 9.49 | 9.78 | 9.75 |
| | MRU 11 | | 8.78 | 8.41 | 8.83 | 8.94 |
| | MRU 12 | | 9.16 | 9.14 | 9.46 | 9.41 |
| | MRU 13 | | 8.72 | 8.99 | 8.83 | 8.95 |
| | MRU 14 | | 9.71 | 9.49 | 9.78 | 9.68 |
| | MRU 15 | | 8.91 | 8.75 | 9.22 | 9.37 |
| | MRU 16 | | 9.16 | 9.06 | 9.46 | 9.41 |
| 5×996+484-tone (FIG. 5(f)) | MRU 1 | 10.16 | 7.82 | 7.87 | 8.29 | 8.47 |
| | MRU 2 | | 8.19 | 8.08 | 8.31 | 8.26 |
| | MRU 3 | | 7.56 | 7.95 | 7.84 | 8.03 |
| | MRU 4 | | 8.77 | 8.65 | 8.99 | 9.19 |
| | MRU 5 | | 7.07 | 7.03 | 7.32 | 7.52 |
| | MRU 6 | | 8.19 | 8.08 | 8.31 | 8.26 |
| | MRU 7 | | 6.99 | 6.96 | 7.09 | 7.26 |
| | MRU 8 | | 8.46 | 8.56 | 8.74 | 8.89 |
| | MRU 9 | | 7.56 | 7.93 | 7.75 | 7.91 |
| | MRU 10 | | 8.43 | 8.77 | 8.6 | 8.84 |
| | MRU 11 | | 7.85 | 7.88 | 7.98 | 7.87 |
| | MRU 12 | | 8.45 | 8.35 | 8.66 | 8.74 |
| | MRU 13 | | 8.89 | 9.02 | 9.02 | 9.2 |
| | MRU 14 | | 9.82 | 10.16 | 9.97 | 10.05 |
| | MRU 15 | | 8.61 | 8.84 | 8.7 | 8.65 |
| | MRU 16 | | 8.66 | 8.75 | 8.78 | 9.02 |
| | MRU 17 | | 8.65 | 9.17 | 8.73 | 9.14 |
| | MRU 18 | | 9.53 | 9.21 | 9.68 | 9.55 |
| | MRU 19 | | 8.57 | 8.47 | 8.73 | 8.86 |
| | MRU 20 | | 8.66 | 8.5 | 8.67 | 8.67 |
| | MRU 21 | | 8.42 | 9.11 | 8.68 | 9.11 |
| | MRU 22 | | 9.32 | 9.3 | 9.5 | 9.48 |
| | MRU 23 | | 8.99 | 8.85 | 9.23 | 9.38 |
| | MRU 24 | | 8.66 | 8.5 | 8.67 | 8.67 |
| 4×996-tone (FIG. 5(g)) | MRU 1 | 7.59 | 7.32 | 7.31 | 7.42 | 7.59 |

(continued)

| RU/MRU type | RU/MRU pattern | Max PAPR (dB) | 0 degrees | 180 degrees | 60 degrees | 120 degrees |
|---|---|---|---|---|---|---|
| 3×996+484-tone (FIG. 5(g)) | MRU 1 | 8.86 | 7.14 | 7.23 | 7.38 | 7.43 |
| | MRU 2 | | 6.98 | 6.75 | 7.16 | 7.22 |
| | MRU 3 | | 7.08 | 6.81 | 6.97 | 6.91 |
| | MRU 4 | | 7.73 | 8.27 | 8.15 | 8.39 |
| | MRU 5 | | 6.28 | 6.88 | 6.97 | 7.29 |
| | MRU 6 | | 7.32 | 7.43 | 7.45 | 7.74 |
| | MRU 7 | | 7.48 | 7.45 | 7.59 | 7.67 |
| | MRU 8 | | 8.86 | 8.34 | 8.74 | 8.69 |
| | MRU 9 | | 7.31 | 7.32 | 7.63 | 7.79 |
| | MRU 10 | | 8.31 | 8.4 | 8.58 | 8.53 |
| | MRU 11 | | 6.75 | 6.59 | 6.86 | 6.88 |
| | MRU 12 | | 7.3 | 7.81 | 7.44 | 7.69 |
| | MRU 13 | | 6.93 | 7.26 | 6.87 | 7.28 |
| | MRU 14 | | 8.28 | 8.06 | 8.44 | 8.49 |
| | MRU 15 | | 7.21 | 7.49 | 7.67 | 7.9 |
| | MRU 16 | | 7.13 | 7.02 | 7.28 | 7.22 |
| 2×996+484-tone (FIG. 5(h)) | MRU 1 | 9.45 | 7.15 | 7.04 | 7.26 | 7.43 |
| | MRU 2 | | 6.97 | 7.04 | 7.29 | 7.34 |
| | MRU 3 | | 8.13 | 8.29 | 8.45 | 8.47 |
| | MRU 4 | | 8.46 | 8.44 | 8.49 | 8.65 |
| | MRU 5 | | 7.19 | 6.87 | 7.16 | 7.18 |
| | MRU 6 | | 7.15 | 7.11 | 7.37 | 7.48 |
| | MRU 7 | | 8.24 | 7.57 | 8.03 | 7.58 |
| | MRU 8 | | 6.87 | 7.1 | 7.23 | 7.37 |
| | MRU 9 | | 8.24 | 7.57 | 8.03 | 7.88 |
| | MRU 10 | | 5.81 | 5.8 | 5.84 | 6.16 |
| | MRU 11 | | 9.25 | 9.23 | 9.45 | 9.4 |
| | MRU 12 | | 7.52 | 7.24 | 7.45 | 7.54 |
| | MRU 13 | | 6.63 | 7.52 | 6.92 | 7.27 |
| | MRU 14 | | 7.18 | 7.19 | 7.39 | 7.1 |
| | MRU 15 | | 7.85 | 8.02 | 8.09 | 8.24 |
| | MRU 16 | | 8.17 | 7.72 | 8.01 | 7.87 |
| | MRU 17 | | 6.82 | 7.09 | 7.3 | 7.09 |
| | MRU 18 | | 6.81 | 7.53 | 7.13 | 7.35 |
| | MRU 19 | | 6.85 | 7.03 | 7.02 | 7.19 |
| | MRU 20 | | 7.26 | 6.69 | 7.16 | 6.92 |
| | MRU 21 | | 7.86 | 8.3 | 8.22 | 8.04 |
| | MRU 22 | | 7.94 | 8.58 | 8.14 | 8.46 |
| | MRU 23 | | 7.02 | 7.02 | 7.25 | 7.39 |
| | MRU 24 | | 7.1 | 6.94 | 7.03 | 6.96 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 5(i)) | MRU 1 | 7.9 | 7.67 | 7 | 7.71 | 7.45 |
| | MRU 2 | | 7.5 | 7.38 | 7.9 | 7.88 |
| | MRU 3 | | 7.7 | 7.07 | 7.7 | 7.44 |
| | MRU 4 | | 7.26 | 7.38 | 7.77 | 7.72 |
| | MRU 5 | | 7.64 | 7.34 | 7.65 | 7.71 |
| | MRU 6 | | 7.63 | 7.39 | 7.88 | 7.76 |
| | MRU 7 | | 7.44 | 7.03 | 7.61 | 7.46 |
| | MRU 8 | | 7.26 | 7.38 | 7.77 | 7.72 |
| | MRU 9 | | 7.53 | 7.24 | 7.74 | 7.34 |
| | MRU 10 | | 7.63 | 7.39 | 7.88 | 7.76 |
| | MRU 11 | | 7.54 | 7.3 | 7.74 | 7.35 |
| | MRU 12 | | 7.63 | 7.27 | 7.66 | 7.46 |
| | MRU 13 | | 7.53 | 7.24 | 7.74 | 7.34 |
| | MRU 14 | | 7.63 | 7.39 | 7.88 | 7.76 |
| | MRU 15 | | 7.54 | 7.3 | 7.74 | 7.35 |
| | MRU 16 | | 7.63 | 7.27 | 7.66 | 7.46 |

In a seventh implementation, the foregoing parameters (13) and (14) satisfy only the formula (3), and PAPR results of the 640 MHz RU/MRU at different pilot phase rotation angles (for example, 0 degrees, 180 degrees, 60 degrees, and 120 degrees) may be obtained based on the parameters (13) and (14) and the RU/MRU shown in FIG. 5(a) to FIG. 5(i). The PAPR results of the RU/MRU at different phase rotation angles are in a one-to-one correspondence with the RU/MRU patterns shown in FIG. 5(a) to FIG. 5(i), as shown in Table 7 below.

Table 7

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 8.43 | 8.14 | 8.21 | 8.43 | 8.39 |
| 7×996-tone (FIG. 5(a)) | MRU 1 | 9.2 | 9.19 | 9.12 | 9.2 | 9.13 |
| | MRU 2 | | 8.56 | 8.89 | 8.84 | 9.08 |
| | MRU 3 | | 8.51 | 8.88 | 8.61 | 8.91 |
| | MRU 4 | | 8.67 | 8.77 | 8.99 | 9.04 |
| | MRU 5 | | 7.97 | 7.71 | 7.91 | 7.71 |
| | MRU 6 | | 8.57 | 8.52 | 8.58 | 8.65 |
| | MRU 7 | | 8.45 | 8.05 | 8.57 | 8.52 |
| | MRU 8 | | 7.65 | 7.84 | 8.07 | 8.21 |
| 6×996-tone (FIG. 5(b)) | MRU 1 | 9.04 | 8.4 | 8.17 | 8.64 | 8.81 |
| | MRU 2 | | 8.66 | 8.96 | 8.78 | 9.04 |
| | MRU 3 | | 7.98 | 7.94 | 7.84 | 8.02 |
| | MRU 4 | | 6.83 | 7.01 | 7.14 | 7.13 |

(continued)

| RU/MRU type | RU/MRU pattern | Max PAPR (dB) | 0 degrees | 180 degrees | 60 degrees | 120 degrees |
|---|---|---|---|---|---|---|
| 5×996-tone (FIG. 5(b)) | MRU 1 | 9.81 | 7.58 | 7.83 | 7.84 | 7.77 |
| | MRU 2 | | 7.58 | 7.93 | 7.77 | 7.91 |
| | MRU 3 | | 7.74 | 8.06 | 7.81 | 8.04 |
| | MRU 4 | | 8.26 | 8.36 | 8.28 | 8.45 |
| | MRU 5 | | 8.49 | 8.6 | 8.85 | 8.89 |
| | MRU 6 | | 7.28 | 7.4 | 7.55 | 7.71 |
| | MRU 7 | | 8.88 | 8.77 | 9.21 | 9.39 |
| | MRU 8 | | 8.71 | 8.48 | 8.69 | 8.57 |
| | MRU 9 | | 8.08 | 8.29 | 8.41 | 8.64 |
| | MRU 10 | | 9.81 | 9.19 | 9.6 | 9.46 |
| | MRU 11 | | 7.73 | 7.88 | 7.78 | 7.76 |
| | MRU 12 | | 7.29 | 7.97 | 7.82 | 8.12 |
| 4×996-tone (FIG. 5(c)) | MRU 1 | 8.76 | 7.98 | 8.53 | 8.44 | 8.76 |
| | MRU 2 | | 8.2 | 8.64 | 8.32 | 8.74 |
| 3×996-tone (FIG. 5(c)) | MRU 1 | 9.5 | 7.64 | 7.41 | 7.89 | 7.78 |
| | MRU 2 | | 9.24 | 9.27 | 9.31 | 9.5 |
| | MRU 3 | | 7.6 | 7.57 | 7.82 | 7.87 |
| | MRU 4 | | 7.33 | 7.93 | 7.79 | 8.15 |
| | MRU 5 | | 7.45 | 7.62 | 7.52 | 7.61 |
| | MRU 6 | | 7.58 | 7.96 | 8 | 8.13 |
| | MRU 7 | | 7.76 | 8.02 | 8.1 | 8.18 |
| | MRU 8 | | 7.57 | 7.78 | 7.83 | 7.69 |
| 2×996-tone (FIG. 5(d)) | MRU 1 | 8.68 | 6.07 | 5.94 | 6.1 | 6.16 |
| | MRU 2 | | 7.83 | 8.46 | 8.39 | 8.68 |
| | MRU 3 | | 8.2 | 8.38 | 8.38 | 8.33 |
| | MRU 4 | | 5.94 | 6.05 | 6.11 | 6.22 |
| 7×996+484-tone (FIG. 5(e)) | MRU 1 | 9 | 8.61 | 8.91 | 8.8 | 9 |
| | MRU 2 | | 8.91 | 8.74 | 8.83 | 8.74 |
| | MRU 3 | | 7.83 | 7.92 | 7.97 | 7.94 |
| | MRU 4 | | 8.69 | 8.77 | 8.73 | 8.93 |
| | MRU 5 | | 7.43 | 8.14 | 7.63 | 8.11 |
| | MRU 6 | | 8.86 | 8.78 | 8.87 | 8.79 |
| | MRU 7 | | 8.52 | 8.33 | 8.82 | 8.69 |
| | MRU 8 | | 8.4 | 8.35 | 8.78 | 8.83 |
| | MRU 9 | | 6.82 | 7.04 | 7.02 | 7.13 |
| | MRU 10 | | 8.62 | 8.39 | 8.67 | 8.86 |
| | MRU 11 | | 8.02 | 8.08 | 8.41 | 8.48 |
| | MRU 12 | | 8.41 | 8.62 | 8.87 | 8.97 |
| | MRU 13 | | 7.93 | 7.79 | 8.02 | 7.98 |
| | MRU 14 | | 8.34 | 8.46 | 8.86 | 8.86 |
| | MRU 15 | | 7.72 | 8 | 8.3 | 8.48 |
| | MRU 16 | | 8.34 | 8.47 | 8.82 | 8.88 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 5(f)) | MRU 1 | 9.71 | 8.15 | 8.23 | 8.39 | 8.3 |
| | MRU 2 | | 6.93 | 7.04 | 7.11 | 7.19 |
| | MRU 3 | | 6.81 | 7.26 | 7.01 | 7.21 |
| | MRU 4 | | 7.4 | 7.55 | 7.39 | 7.53 |
| | MRU 5 | | 6.96 | 7.24 | 7.17 | 7.23 |
| | MRU 6 | | 8.05 | 7.93 | 8 | 7.97 |
| | MRU 7 | | 7.49 | 7.53 | 7.48 | 7.63 |
| | MRU 8 | | 7.9 | 8.11 | 8.2 | 8.28 |
| | MRU 9 | | 8 | 8.27 | 8.25 | 8.38 |
| | MRU 10 | | 7.28 | 8.26 | 7.81 | 8.31 |
| | MRU 11 | | 7.99 | 7.99 | 8.22 | 8.26 |
| | MRU 12 | | 6.99 | 7.16 | 7.11 | 7.37 |
| | MRU 13 | | 7.59 | 7.73 | 7.78 | 8 |
| | MRU 14 | | 9.33 | 9.17 | 9.53 | 9.71 |
| | MRU 15 | | 8.97 | 8.73 | 9.03 | 9.12 |
| | MRU 16 | | 8.32 | 8.41 | 8.48 | 8.53 |
| | MRU 17 | | 8.59 | 8.74 | 8.75 | 8.81 |
| | MRU 18 | | 8.7 | 8.86 | 9.17 | 9.3 |
| | MRU 19 | | 8.14 | 7.98 | 8.45 | 8.59 |
| | MRU 20 | | 9.34 | 9.5 | 9.37 | 9.4 |
| | MRU 21 | | 7.76 | 7.62 | 7.89 | 8.08 |
| | MRU 22 | | 8.5 | 8.48 | 8.67 | 8.66 |
| | MRU 23 | | 8.59 | 8.74 | 8.75 | 8.81 |
| | MRU 24 | | 8.26 | 7.9 | 8.25 | 8.16 |
| 4×996-tone (FIG. 5(g)) | MRU 1 | 6.1 | 5.8 | 5.74 | 5.88 | 6.1 |
| 3×996+484-tone (FIG. 5(g)) | MRU 1 | 9.4 | 7.07 | 7.38 | 7.16 | 7.66 |
| | MRU 2 | | 7.98 | 8.33 | 8.07 | 8.37 |
| | MRU 3 | | 8.3 | 8.78 | 8.64 | 8.92 |
| | MRU 4 | | 8.9 | 9.22 | 9.22 | 9.4 |
| | MRU 5 | | 7.91 | 8.21 | 8.16 | 8.31 |
| | MRU 6 | | 7.53 | 8 | 8.01 | 8.29 |
| | MRU 7 | | 7.13 | 7.55 | 7.35 | 7.91 |
| | MRU 8 | | 7.96 | 8.44 | 8.25 | 8.48 |
| | MRU 9 | | 7.51 | 8.12 | 7.99 | 7.99 |
| | MRU 10 | | 7.29 | 7.33 | 7.39 | 7.45 |
| | MRU 11 | | 6.75 | 6.59 | 6.86 | 6.88 |
| | MRU 12 | | 8.09 | 8.2 | 8.27 | 8.33 |
| | MRU 13 | | 7.73 | 8.41 | 8 | 8.41 |
| | MRU 14 | | 6.32 | 6.78 | 6.71 | 6.83 |
| | MRU 15 | | 7.6 | 7.16 | 7.73 | 7.52 |
| | MRU 16 | | 7.59 | 8.27 | 7.91 | 8.27 |

(continued)

| RU/MRU type | RU/MRU pattern | Max PAPR (dB) | 0 degrees | 180 degrees | 60 degrees | 120 degrees |
|---|---|---|---|---|---|---|
| 2×996+484-tone (FIG. 5(h)) | MRU 1 | 7.88 | 6.62 | 6.91 | 6.8 | 6.9 |
| | MRU 2 | | 7.15 | 7.12 | 7.05 | 7.09 |
| | MRU 3 | | 8.13 | 8.29 | 8.45 | 8.47 |
| | MRU 4 | | 7.89 | 8.19 | 8.26 | 8.4 |
| | MRU 5 | | 6.63 | 6.79 | 6.86 | 6.96 |
| | MRU 6 | | 6.55 | 6.92 | 6.99 | 6.85 |
| | MRU 7 | | 9.25 | 9.19 | 9.41 | 9.38 |
| | MRU 8 | | 6.97 | 7.04 | 7.29 | 7.34 |
| | MRU 9 | | 8.24 | 7.57 | 8.03 | 7.93 |
| | MRU 10 | | 6.04 | 6.28 | 6.54 | 6.65 |
| | MRU 11 | | 8.24 | 7.57 | 8.03 | 7.61 |
| | MRU 12 | | 7.23 | 7.12 | 7.29 | 7.15 |
| | MRU 13 | | 7.74 | 7.46 | 7.81 | 7.65 |
| | MRU 14 | | 6.98 | 6.95 | 7.31 | 7.41 |
| | MRU 15 | | 7.97 | 7.74 | 7.98 | 7.77 |
| | MRU 16 | | 6.04 | 6.28 | 6.54 | 6.65 |
| | MRU 17 | | 9.46 | 9.25 | 9.58 | 9.3 |
| | MRU 18 | | 6.81 | 7.53 | 7.13 | 7.35 |
| | MRU 19 | | 7.01 | 6.94 | 7.24 | 7.38 |
| | MRU 20 | | 6.87 | 7.1 | 7.23 | 7.37 |
| | MRU 21 | | 7.85 | 8.02 | 8.09 | 8.24 |
| | MRU 22 | | 7.94 | 8.58 | 8.14 | 8.46 |
| | MRU 23 | | 6.94 | 6.88 | 7.22 | 7.4 |
| | MRU 24 | | 7.03 | 6.93 | 7.33 | 7.47 |
| 996+484-tone (FIG. 5(i)) | MRU 1 | 9.58 | 7.53 | 7.24 | 7.74 | 7.34 |
| | MRU 2 | | 7.47 | 7.16 | 7.59 | 7.29 |
| | MRU 3 | | 7.7 | 7.07 | 7.7 | 7.44 |
| | MRU 4 | | 7.37 | 7.37 | 7.55 | 7.53 |
| | MRU 5 | | 7.38 | 6.94 | 7.6 | 7.46 |
| | MRU 6 | | 7.38 | 7.41 | 7.5 | 7.55 |
| | MRU 7 | | 7.44 | 7.03 | 7.61 | 7.46 |
| | MRU 8 | | 7.37 | 7.37 | 7.55 | 7.53 |
| | MRU 9 | | 7.53 | 7.24 | 7.74 | 7.34 |
| | MRU 10 | | 7.63 | 7.39 | 7.88 | 7.76 |
| | MRU 11 | | 7.54 | 7.3 | 7.74 | 7.35 |
| | MRU 12 | | 7.63 | 7.27 | 7.66 | 7.46 |
| | MRU 13 | | 7.64 | 7.34 | 7.65 | 7.71 |
| | MRU 14 | | 7.63 | 7.39 | 7.88 | 7.76 |
| | MRU 15 | | 7.44 | 7.03 | 7.61 | 7.46 |
| | MRU 16 | | 7.26 | 7.38 | 7.77 | 7.72 |

In an eighth implementation, the foregoing parameters (15) and (16) satisfy only the formula (4), and PAPR results of the 640 MHz RU/MRU at different pilot phase rotation angles (for example, 0 degrees, 180 degrees, 60 degrees, and 120 degrees) may be obtained based on the parameters (15) and (16) and the RU/MRU shown in FIG. 5(a) to FIG. 5(i). The PAPR results of the RU/MRU at different phase rotation angles are in a one-to-one correspondence with the RU/MRU patterns shown in FIG. 5(a) to FIG. 5(i), as shown in Table 8 below.

Table 8

| RU/MRU type | RU/MRU pattern | Max PAPR (dB) | 0 degrees | 180 degrees | 60 degrees | 120 degrees |
|---|---|---|---|---|---|---|
| 8×996-tone (FIG. 5(a)) | MRU 1 | 8.85 | 8.65 | 8.75 | 8.77 | 8.85 |
| 7×996-tone (FIG. 5(a)) | MRU 1 | 9.65 | 8.61 | 8.51 | 8.8 | 8.84 |
| | MRU 2 | | 8.55 | 8.69 | 8.9 | 9.12 |
| | MRU 3 | | 8.29 | 8.38 | 8.53 | 8.71 |
| | MRU 4 | | 8.98 | 9.06 | 9.09 | 9.16 |
| | MRU 5 | | 9.01 | 9.45 | 9.37 | 9.65 |
| | MRU 6 | | 8.27 | 8.13 | 8.53 | 8.51 |
| | MRU 7 | | 8.61 | 9.07 | 8.82 | 9.17 |
| | MRU 8 | | 9.48 | 9.6 | 9.6 | 9.44 |
| 6×996-tone (FIG. 5(b)) | MRU 1 | 9.23 | 7.86 | 8.02 | 8.09 | 8.32 |
| | MRU 2 | | 9.02 | 9.03 | 9.22 | 9.23 |
| | MRU 3 | | 7.65 | 8.16 | 8.01 | 8.36 |
| | MRU 4 | | 8.45 | 8.49 | 8.52 | 8.55 |
| 5×996-tone (FIG. 5(b)) | MRU 1 | 9.8 | 7.57 | 7.4 | 7.66 | 7.68 |
| | MRU 2 | | 7.64 | 7.73 | 8.1 | 8.29 |
| | MRU 3 | | 7.67 | 7.98 | 7.81 | 7.9 |
| | MRU 4 | | 8.89 | 8.8 | 8.91 | 8.59 |
| | MRU 5 | | 9.04 | 9.64 | 9.48 | 9.8 |
| | MRU 6 | | 6.94 | 7.09 | 7.12 | 7.19 |
| | MRU 7 | | 7.24 | 7.2 | 7.32 | 7.34 |
| | MRU 8 | | 8.02 | 7.92 | 8.31 | 8.51 |
| | MRU 9 | | 7.68 | 7.4 | 7.57 | 7.5 |
| | MRU 10 | | 7.46 | 7.33 | 7.55 | 7.54 |
| | MRU 11 | | 8.32 | 8.54 | 8.46 | 8.65 |
| | MRU 12 | | 7.54 | 7.64 | 7.6 | 7.69 |
| 4×996-tone (FIG. 5(c)) | MRU 1 | 9.11 | 9.01 | 8.88 | 9.04 | 9.11 |
| | MRU 2 | | 7.27 | 7.45 | 7.67 | 7.85 |
| 3×996-tone (FIG. 5(c)) | MRU 1 | 8.15 | 7.52 | 7.99 | 7.95 | 8.14 |
| | MRU 2 | | 7.58 | 7.96 | 8 | 8.13 |
| | MRU 3 | | 8.04 | 8 | 8.09 | 7.87 |
| | MRU 4 | | 8.01 | 7.97 | 8.07 | 7.87 |
| | MRU 5 | | 7.93 | 7.6 | 7.91 | 7.95 |
| | MRU 6 | | 7.95 | 7.76 | 8.05 | 8.15 |
| | MRU 7 | | 7.47 | 7.28 | 7.49 | 7.5 |
| | MRU 8 | | 7.42 | 7.88 | 7.47 | 7.8 |
| 2×996-tone (FIG. 5(d)) | MRU 1 | 8.68 | 8.23 | 8.32 | 8.39 | 8.51 |
| | MRU 2 | | 8.2 | 8.38 | 8.38 | 8.33 |
| | MRU 3 | | 6 | 6.07 | 6.08 | 6.21 |
| | MRU 4 | | 7.83 | 8.46 | 8.39 | 8.68 |

(continued)

| RU/MRU type | RU/MRU pattern | Max PAPR (dB) | 0 degrees | 180 degrees | 60 degrees | 120 degrees |
|---|---|---|---|---|---|---|
| 7×996+484-tone (FIG. 5(e)) | MRU 1 | 9.73 | 8.44 | 8.44 | 8.61 | 8.83 |
| | MRU 2 | | 8.46 | 8.33 | 8.41 | 8.6 |
| | MRU 3 | | 8.5 | 8.28 | 8.55 | 8.47 |
| | MRU 4 | | 8.65 | 8.65 | 8.84 | 8.85 |
| | MRU 5 | | 8.71 | 8.84 | 8.8 | 8.85 |
| | MRU 6 | | 9.1 | 9.1 | 9.42 | 9.58 |
| | MRU 7 | | 8.7 | 8.98 | 9.12 | 9.39 |
| | MRU 8 | | 9.08 | 9.07 | 9.14 | 9.1 |
| | MRU 9 | | 9.31 | 9.49 | 9.54 | 9.73 |
| | MRU 10 | | 8.93 | 8.89 | 9.29 | 9.4 |
| | MRU 11 | | 8.5 | 8.28 | 8.55 | 8.68 |
| | MRU 12 | | 8.37 | 8.35 | 8.34 | 8.67 |
| | MRU 13 | | 8.87 | 9.23 | 8.98 | 9.3 |
| | MRU 14 | | 8.57 | 8.37 | 8.73 | 8.63 |
| | MRU 15 | | 8.63 | 8.77 | 8.78 | 8.61 |
| | MRU 16 | | 9.2 | 9.13 | 9.26 | 9.09 |
| 5×996+484-tone (FIG. 5(f)) | MRU 1 | 9.67 | 8.2 | 7.79 | 8.24 | 7.87 |
| | MRU 2 | | 7.74 | 8.02 | 7.86 | 7.95 |
| | MRU 3 | | 8.3 | 8.09 | 8.29 | 8.18 |
| | MRU 4 | | 8.06 | 8.12 | 8.46 | 8.67 |
| | MRU 5 | | 8.58 | 8.55 | 8.62 | 8.5 |
| | MRU 6 | | 7.74 | 7.9 | 7.79 | 7.97 |
| | MRU 7 | | 8.45 | 8.18 | 8.38 | 8.06 |
| | MRU 8 | | 8.95 | 8.76 | 8.97 | 8.63 |
| | MRU 9 | | 9.12 | 9.47 | 9.4 | 9.67 |
| | MRU 10 | | 8.08 | 8.34 | 8.24 | 8.52 |
| | MRU 11 | | 8.3 | 8.09 | 8.29 | 8.18 |
| | MRU 12 | | 7.22 | 7.6 | 7.36 | 7.59 |
| | MRU 13 | | 7.75 | 7.43 | 7.7 | 7.6 |
| | MRU 14 | | 8 | 8.22 | 8.17 | 8.44 |
| | MRU 15 | | 8.4 | 8.49 | 8.75 | 9.03 |
| | MRU 16 | | 7.91 | 8.1 | 8.34 | 8.42 |
| | MRU 17 | | 7.92 | 7.53 | 7.89 | 7.77 |
| | MRU 18 | | 7.89 | 8.01 | 7.97 | 8.09 |
| | MRU 19 | | 8.12 | 8.01 | 8.23 | 8.36 |
| | MRU 20 | | 7.69 | 7.68 | 7.82 | 7.81 |
| | MRU 21 | | 7.76 | 7.81 | 7.69 | 7.78 |
| | MRU 22 | | 8.96 | 8.8 | 9.08 | 9.3 |
| | MRU 23 | | 8.5 | 8.26 | 8.58 | 8.54 |
| | MRU 24 | | 7.99 | 7.66 | 8.07 | 7.91 |
| 4×996-tone (FIG. 5(g)) | MRU 1 | 7.71 | 7.62 | 7.53 | 7.71 | 7.68 |

(continued)

| RU/MRU type | RU/MRU pattern | Max PAPR (dB) | 0 degrees | 180 degrees | 60 degrees | 120 degrees |
|---|---|---|---|---|---|---|
| 3×996+484-tone (FIG. 5(g)) | MRU 1 | 9.43 | 9.03 | 9.02 | 9.12 | 9.08 |
| | MRU 2 | | 7.93 | 8.11 | 8.1 | 8.06 |
| | MRU 3 | | 9.06 | 9.08 | 9.22 | 9.19 |
| | MRU 4 | | 7.3 | 7.81 | 7.44 | 7.69 |
| | MRU 5 | | 9.42 | 9.21 | 9.43 | 9.12 |
| | MRU 6 | | 7.32 | 7.43 | 7.45 | 7.74 |
| | MRU 7 | | 9.3 | 9.05 | 9.27 | 9.12 |
| | MRU 8 | | 8.04 | 8.11 | 8.24 | 8.24 |
| | MRU 9 | | 6.89 | 6.83 | 7.07 | 7.03 |
| | MRU 10 | | 7.36 | 7.36 | 7.62 | 7.71 |
| | MRU 11 | | 8.17 | 8.21 | 8.49 | 8.71 |
| | MRU 12 | | 6.55 | 6.98 | 6.68 | 6.85 |
| | MRU 13 | | 7.08 | 7.2 | 7.29 | 7.53 |
| | MRU 14 | | 7.05 | 6.79 | 7.12 | 7.04 |
| | MRU 15 | | 7.97 | 8.48 | 8.34 | 8.5 |
| | MRU 16 | | 7.4 | 7.72 | 7.59 | 7.62 |
| 2×996+484-tone (FIG. 5(h)) | MRU 1 | 7.9 | 7.89 | 7.46 | 7.82 | 7.51 |
| | MRU 2 | | 6.98 | 7.04 | 7.21 | 7.13 |
| | MRU 3 | | 8.09 | 7.61 | 8.04 | 7.72 |
| | MRU 4 | | 6.04 | 6.46 | 6.54 | 6.65 |
| | MRU 5 | | 9.54 | 9.12 | 9.62 | 9.48 |
| | MRU 6 | | 7.15 | 7.11 | 7.37 | 7.48 |
| | MRU 7 | | 9.46 | 9.25 | 9.58 | 9.3 |
| | MRU 8 | | 7.26 | 6.69 | 7.16 | 6.92 |
| | MRU 9 | | 8.09 | 7.61 | 8.04 | 7.72 |
| | MRU 10 | | 5.81 | 5.8 | 5.84 | 6.16 |
| | MRU 11 | | 7.9 | 7.46 | 7.77 | 7.58 |
| | MRU 12 | | 6.55 | 6.92 | 6.99 | 6.85 |
| | MRU 13 | | 9.53 | 9.12 | 9.62 | 9.48 |
| | MRU 14 | | 7.39 | 7.36 | 7.27 | 7.56 |
| | MRU 15 | | 7.97 | 7.74 | 7.98 | 7.77 |
| | MRU 16 | | 5.78 | 6.03 | 6.3 | 6.49 |
| | MRU 17 | | 7.73 | 7.46 | 7.71 | 7.57 |
| | MRU 18 | | 7.03 | 6.93 | 7.33 | 7.47 |
| | MRU 19 | | 7.15 | 7.04 | 7.26 | 7.43 |
| | MRU 20 | | 6.97 | 7.04 | 7.29 | 7.34 |
| | MRU 21 | | 8.13 | 8.29 | 8.45 | 8.47 |
| | MRU 22 | | 8.46 | 8.44 | 8.49 | 8.65 |
| | MRU 23 | | 7.19 | 6.87 | 7.16 | 7.18 |
| | MRU 24 | | 7.15 | 7.11 | 7.37 | 7.48 |
| 996+484-tone (FIG. 5(i)) | MRU 1 | 9.62 | 7.67 | 7 | 7.71 | 7.45 |
| | MRU 2 | | 7.5 | 7.38 | 7.9 | 7.88 |
| | MRU 3 | | 7.7 | 7.07 | 7.7 | 7.44 |
| | MRU 4 | | 7.26 | 7.38 | 7.77 | 7.72 |
| | MRU 5 | | 7.53 | 7.24 | 7.74 | 7.34 |
| | MRU 6 | | 7.63 | 7.39 | 7.88 | 7.76 |
| | MRU 7 | | 7.54 | 7.3 | 7.74 | 7.35 |
| | MRU 8 | | 7.63 | 7.27 | 7.66 | 7.46 |
| | MRU 9 | | 7.67 | 7 | 7.71 | 7.45 |

(continued)

| RU/MRU type | RU/MRU pattern | Max PAPR (dB) | 0 degrees | 180 degrees | 60 degrees | 120 degrees |
|---|---|---|---|---|---|---|
| | MRU 10 | | 7.38 | 7.41 | 7.5 | 7.55 |
| | MRU 11 | | 7.54 | 7.3 | 7.74 | 7.35 |
| | MRU 12 | | 7.4 | 7.19 | 7.57 | 7.3 |
| | MRU 13 | | 7.38 | 6.94 | 7.6 | 7.46 |
| | MRU 14 | | 7.38 | 7.41 | 7.5 | 7.55 |
| | MRU 15 | | 7.44 | 7.03 | 7.61 | 7.46 |
| | MRU 16 | | 7.37 | 7.37 | 7.55 | 7.53 |

The foregoing uses the 640 MHz PPDU as an example for description. It should be understood that the foregoing RU/MRU patterns and the foregoing LTF sequence corresponding to 640 MHz are merely examples for ease of understanding, and do not constitute a limitation on the technical solutions of this application. This application also provides a design solution for an MRU and an LTF sequence for a 480 MHz PPDU. The following describes in detail an RU/MRU pattern and an LTF sequence of the 480 MHz PPDU.

(2) LTF sequence of the 480 MHz PPDU

1. 480 MHz RU/MRU

For a 480 MHz bandwidth, the MRU patterns and the LTF sequence that correspond to the 640 MHz PPDU may be reused. For example, an RU/MRU less than or equal to 5×996 in an RU/MRU of the 640 MHz PPDU is considered, and pilot phase rotation caused by different P matrices is considered. In this case, an LTF sequence corresponding to the first 480 MHz or the last 480 MHz may be extracted from the LTF sequence of the 640 MHz PPDU, and used as the LTF sequence of the 480 MHz PPDU.

For example, a 6×996-tone MRU may be considered as a combination of one 4×996-tone RU and one 2×996-tone RU; or

a 6×996-tone MRU may be considered as a combination of three 2×996-tone RUs; or
a 6×996-tone MRU may be considered as a combination of six 996-tone RUs; or
a 6×996-tone MRU may be considered as a combination of two 2×996-tone RUs and two 996-tone RUs; or the like.

For example, a 5×996+484-tone MRU may be considered as a combination of one 4×996-tone RU, one 996-tone RU, and one 484-tone RU; or

a 5×996+484-tone MRU may be considered as a combination of two 2×996-tone RUs, one 996-tone RU, and one 484-tone RU; or
a 5×996+484-tone MRU may be considered as a combination of five 996-tone RUs and one 484-tone RU; or the like.

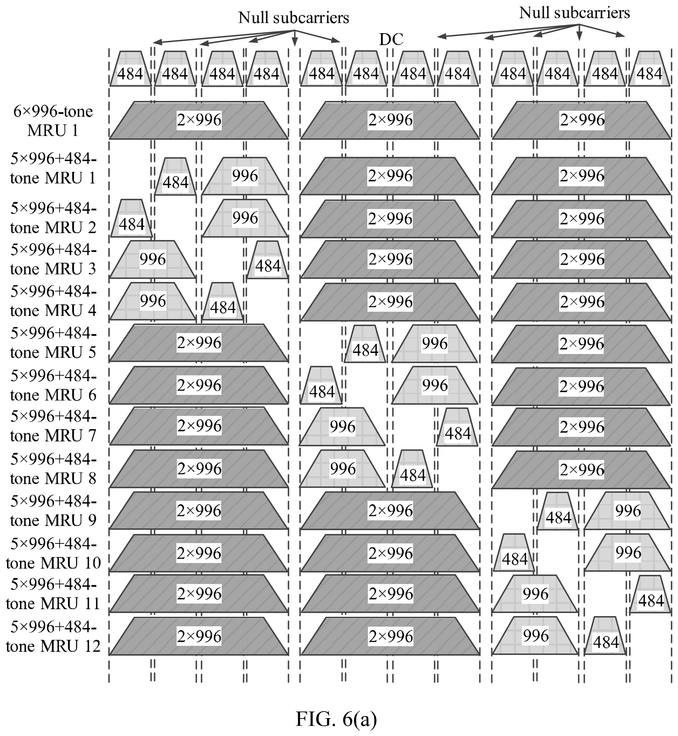

FIG. 6(a) is a diagram of a 6×996-tone MRU and a 5×996+484-tone MRU in the 480 MHz bandwidth. The 6×996-tone MRU includes a 6×996-tone MRU 1. 5×996+484-tone MRU patterns include a 5×996+484-tone MRU 1, ..., and a 5×996+484-tone MRU 12.

For example, a 5×996-tone MRU may be considered as a combination of one 4×996-tone RU and one 996-tone RU; or

a 5×996-tone MRU may be considered as a combination of two 2×996-tone RUs and one 996-tone RU; or
a 5×996-tone MRU may be considered as a combination of five 996-tone RUs; or the like.

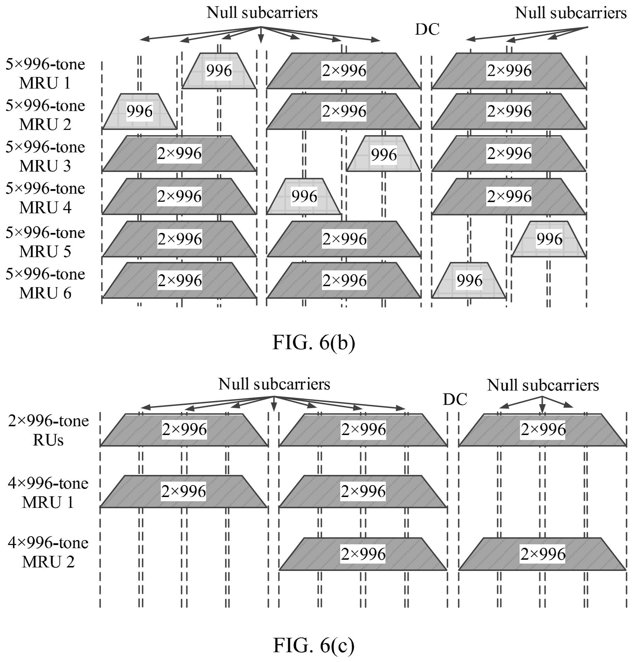

FIG. 6(b) is a diagram of a 5×996-tone MRU in the 480 MHz bandwidth. 5×996-tone MRU patterns include a 5×996-tone MRU 1, ..., and a 5×996-tone MRU 6.

For example, a 4×996-tone MRU may be considered as a combination of two 2×996-tone RUs; or a 4×996-tone MRU may be considered as a combination of one 2×996-tone RU and two 996-tone RUs; or the like.

FIG. 6(c) is a diagram of a 4×996-tone MRU in the 480 MHz bandwidth. 4×996-tone MRU patterns include a 4×996-tone MRU 1 and a 4×996-tone MRU 2.

For example, a 3×996-tone MRU may be considered as a combination of one 2×996-tone RU and one 996-tone RU.

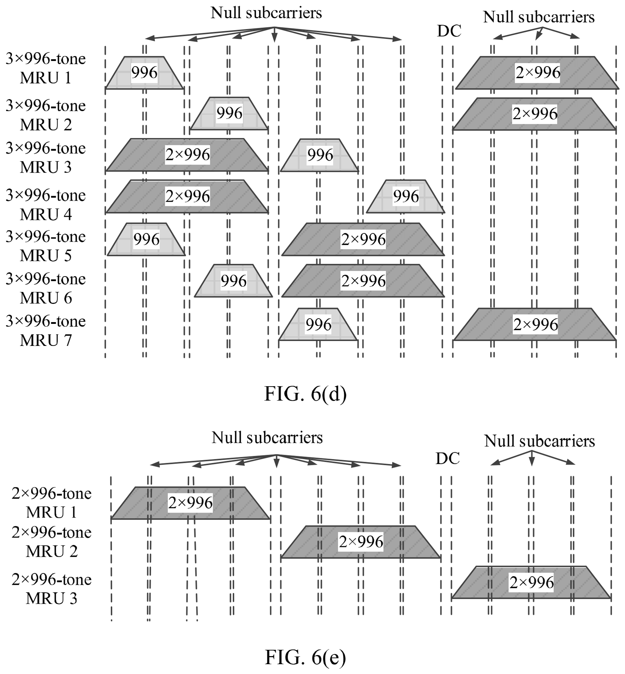

FIG. 6(d) is a diagram of a $3\times996$-tone MRU in the 480 MHz bandwidth. $3\times996$-tone MRU patterns include a $3\times996$-tone MRU 1, ..., and a $3\times996$-tone MRU 7.

For example, a $2\times996$-tone MRU may be considered as a combination of two 996-tone RUs.

FIG. 6(e) is a diagram of a $2\times996$-tone MRU in the 480 MHz bandwidth. $2\times996$-tone MRU patterns include a $2\times996$-tone MRU 1, ..., and a $2\times996$-tone MRU 3.

For example, a $3\times996+484$-tone MRU may be considered as a combination of one $2\times996$-tone RU, one 996-tone RU, and one 484-tone RU; or

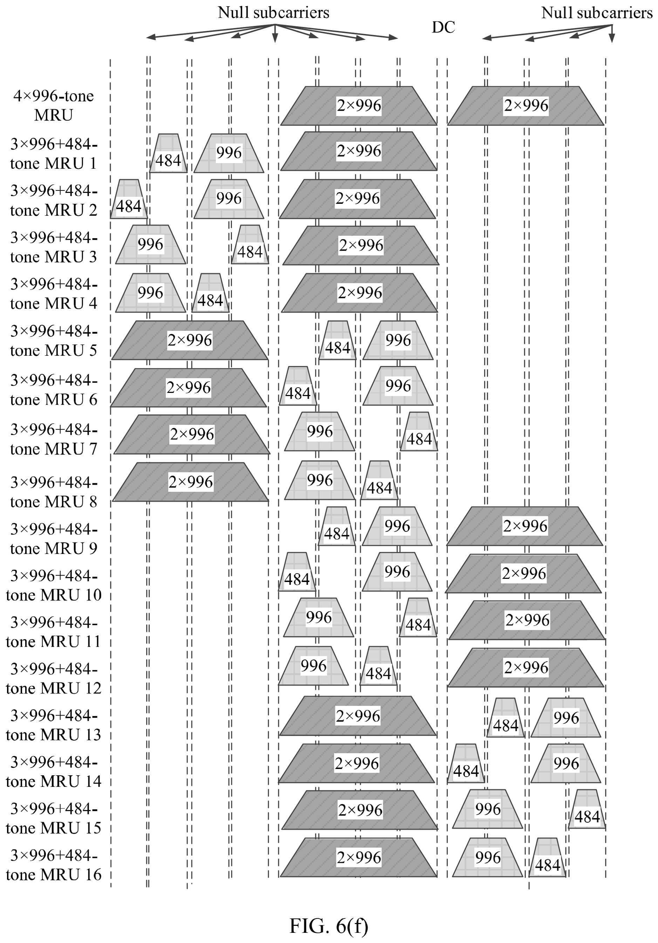

FIG. 6(f) is a diagram of a $3\times996+484$-tone MRU in the 480 MHz bandwidth. $3\times996+484$-tone MRU patterns include a $3\times996+484$-tone MRU 1, ..., and a $3\times996+484$-tone MRU 16.

For example, a $2\times996+484$-tone MRU may be considered as a combination of two 996-tone RUs and one 484-tone RU.

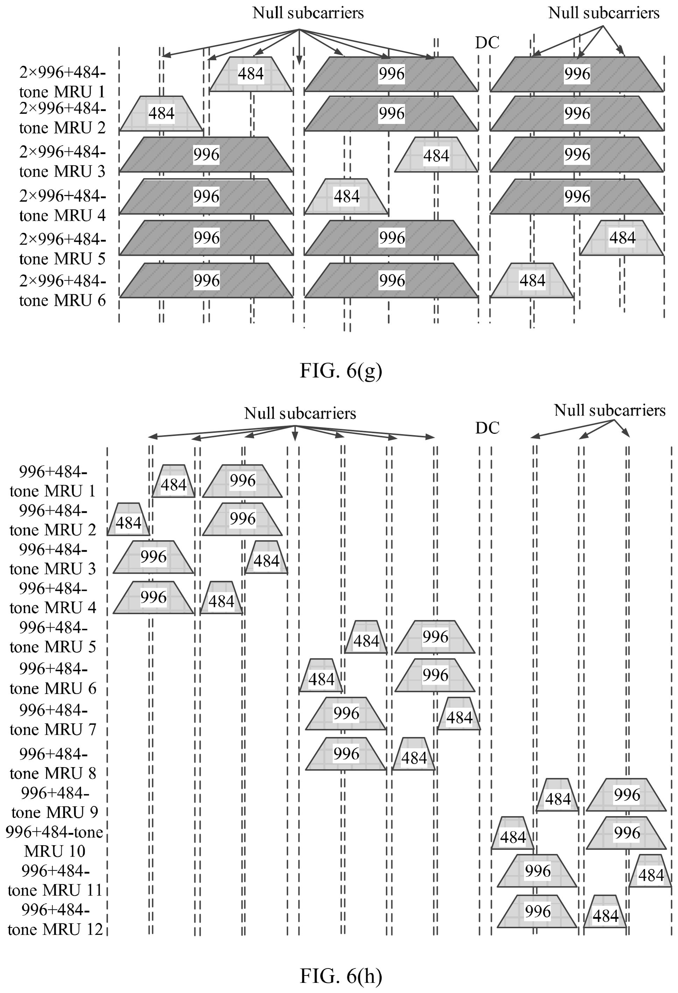

FIG. 6(g) is a diagram of a $2\times996+484$-tone MRU in the 480 MHz bandwidth. $2\times996+484$-tone MRU patterns include a $2\times996+484$-tone MRU 1, ..., and a $2\times996+484$-tone MRU 6.

For example, a $996+484$-tone MRU may be considered as a combination of one 996-tone RU and one 484-tone RU.

FIG. 6(h) is a diagram of a $996+484$-tone MRU in the 480 MHz bandwidth. $996+484$-tone MRU patterns include a $996+484$-tone MRU 1, ..., and a $996+484$-tone MRU 12.

It should be understood that MRU patterns of the 480 MHz PPDU are described in detail above, a manner of obtaining the MRU patterns is not limited in this embodiment, and the combination manners provided above are merely examples, and do not constitute any limitation on the protection scope of this application.

2. LTF sequence of the 480 MHz PPDU

For example, the 480 MHz LTF sequence satisfies:

$UHRLTF_{3060,3060}=\{c_1\times LTF80MHz\_4x\_left,\quad 0_5,\quad c_2\times LTF80MHz\_4x\_right,\quad 0_{23},\quad c_3\times LTF80MHz\_4x\_left,\quad 0_5,$ $c_4\times LTF80MHz\_4x\_right,\ 0_{23},\ c_5\times LTF80MHz\_4x\_left,\ 0_5,\ c_6\times LTF80MHz\_4x\_right,\ 0_{23},\ c_7\times LTF80MHz\_4x\_left,\ 0_5,$ $c_8\times LTF80MHz\_4x\_right,\ 0_{23},\ c_9\times LTF80MHz\_4x\_left,\ c_{10}\times LTF80MHz\_4x\_right,\ 0_{23},\ c_{11}\times LTF80MHz\_4x\_left,\ 0_5,$ $c_{12}\times LTF80MHz\_4x\_right$. Herein, $c_i=1$ or -1, where i=1, 2, 3, ..., and 12.

Parameters $[c_1, ..., c_{12}]$ may be any one of the following (1) to (32):

$$(1)\ [c_1,\cdots,c_{12}] = \pm[1,-1,\ 1,\ 1,\ 1,-1,-1,-1,-1,\ 1,-1,-1];$$

$$(2)\ [c_1,\cdots,c_{12}] = \pm[-1,-1,\ 1,-1,-1,-1,-1,1,\ 1,\ 1,-1,1];$$

$$(3)\ [c_1,\cdots,c_{12}] = \pm[1,\ 1,-1,\ 1,-1,-1,-1,\ 1,-1,-1,\ 1,-1];$$

$$(4)\ [c_1,\cdots,c_{12}] = \pm[-1,1,-1,-1,1,-1,-1,-1,\ 1,-1,\ 1,1];$$

$$(5)\ [c_1,\cdots,c_{12}] = \pm[1,\ 1,-1,\ 1,-1,-1,-1,\ 1,-1,\ 1,\ 1,-1];$$

$$(6)\ [c_1,\cdots,c_{12}] = \pm[-1,1,1,-1,1,-1,-1,-1,\ 1,-1,\ 1,1];$$

$$(7)\ [c_1,\cdots,c_{12}] = \pm[1,\ 1,-1,\ 1,-1,-1,-1,\ 1,\ 1,-1,\ 1,-1];$$

$$(8)\ [c_1,\cdots,c_{12}] = \pm[-1,1,-1,\ 1,\ 1,-1,-1,-1,1,-1,1,1];$$

$$(9)\ [c_1,\cdots,c_{12}] = \pm[1,-1,\ 1,\ 1,\ 1,-1,-1,-1,-1,\ 1,\ 1,\ 1];$$

$$(10)\ [c_1,\cdots,c_{12}] = \pm[1,1,1,-1,-1,-1,-1,\ 1,\ 1,\ 1,-1,\ 1];$$

(11) $[c_1, \cdots, c_{12}] = \pm[1, -1, \ 1, -1, -1, \ 1, -1, -1, \ 1, \ 1, \ 1, \ 1]$;

(12) $[c_1, \cdots, c_{12}] = \pm[1, \ 1, 1, 1, -1, -1, \ 1, -1, -1, 1, -1, 1]$;

(13) $[c_1, \cdots, c_{12}] = \pm[1, -1, -1, -1, -1, \ 1, \ 1, -1, \ 1, \ 1, \ 1, \ 1]$;

(14) $[c_1, \cdots, c_{12}] = \pm[1, \ 1, \ 1, 1, -1, \ 1, \ 1, -1, -1, -1, -1, 1]$;

(15) $[c_1, \cdots, c_{12}] = \pm[1, -1, \ 1, -1, -1, -1, -1, -1, \ 1, \ 1, -1, \ 1]$;

(16) $[c_1, \cdots, c_{12}] = \pm[1, -1, \ 1, 1, -1, -1, -1, -1, -1, \ 1, -1, 1]$;

(17) $[c_1, \cdots, c_{12}] = \pm[1, -1, -1, -1, -1, \ 1, -1, -1, -1, \ 1, \ 1, \ 1]$;

(18) $[c_1, \cdots, c_{12}] = \pm[1, \ 1, \ 1, -1, -1, -1, \ 1, -1, -1, -1, -1, 1]$;

(19) $[c_1, \cdots, c_{12}] = \pm[-1, -1, -1, \ 1, -1, -1, \ 1, -1, \ 1, \ 1, \ 1, -1]$;

(20) $[c_1, \cdots, c_{12}] = \pm[-1, \ 1, 1, \ 1, -1, 1, -1, -1, 1, -1, -1, -1]$;

(21) $[c_1, \cdots, c_{12}] = \pm[-1, -1, -1, \ 1, -1, \ 1, \ 1, -1, \ 1, \ 1, \ 1, -1]$;

(22) $[c_1, \cdots, c_{12}] = \pm[-1, \ 1, 1, \ 1, -1, 1, 1, -1, 1, -1, -1, -1]$;

(23) $[c_1, \cdots, c_{12}] = \pm[-1, -1, -1, \ 1, \ 1, -1, \ 1, -1, -1, \ 1, -1, -1]$;

(24) $[c_1, \cdots, c_{12}] = \pm[-1, -1, 1, -1, -1, 1, -1, \ 1, \ 1, -1, -1, -1]$;

(25) $[c_1, \cdots, c_{12}] = \pm[1, -1, -1, -1, -1, \ 1, \ 1, \ 1, \ 1, \ 1, -1, \ 1]$;

(26) $[c_1, \cdots, c_{12}] = \pm[1, -1, \ 1, \ 1, \ 1, 1, 1, -1, -1, -1, -1, \ 1]$;

(27) $[c_1, \cdots, c_{12}] = \pm[-1, \ 1, -1, -1, \ 1, \ 1, \ 1, \ 1, -1, -1, -1, -1]$;

(28) $[c_1, \cdots, c_{12}] = \pm[-1, -1, -1, -1, 1, \ 1, 1, 1, -1, -1, \ 1, -1]$;

(29) $[c_1, \cdots, c_{12}] = \pm[-1, \ 1, \ 1, -1, \ 1, \ 1, \ 1, \ 1, -1, \ 1, -1, -1]$;

(30) $[c_1, \cdots, c_{12}] = \pm[-1, -1, 1, -1, 1, \ 1, \ 1, 1, -1, \ 1, \ 1, -1]$;

(31) $[c_1, \cdots, c_{12}] = \pm[-1, -1, -1, -1, \ 1, \ 1, -1, \ 1, -1, \ 1, \ 1, -1]$;

and

$$(32) \quad [c_1, \cdots, c_{12}] = \pm[-1, 1, 1, -1, 1, -1, \ 1, 1, -1, -1, -1, -1].$$

In other words, the parameters $[c_1, ..., c_{12}]$ (1) to (32) may be considered as parameters corresponding to the LTF sequence of the first 480 MHz or the last 480 MHz PPDU in the parameters $[c_1, ..., c_{16}]$ (1) to (16) corresponding to the LTF sequence of the 640 MHz PPDU.

In conclusion, an LTF sequence corresponding to a bandwidth greater than 320 MHz is designed, to support signal transmission in a future large-bandwidth (for example, 480 MHz) scenario. The LTF sequence has a low PAPR in the entire bandwidth and also has a low PAPR on the RU/MRU. The first sequence also has a low PAPR on a plurality of spatial streams in a multi-spatial-stream transmission scenario, to ensure system transmission performance. In addition, in consideration of a case in which a value of each element $c_i$ may be 1 or -1, for the LTF sequence of the 480 MHz PPDU, there may be $2^{12}$ possible values of elements in the parameters $[c_1, ..., c_{12}]$. Further, in consideration of the foregoing plurality of patterns of the 480 MHz RU/MRU and the multi-spatial-stream scenario, values of the foregoing some parameters $[c_1,..., c_{12}]$ can be determined only through a large amount of calculation and simulation. In comparison, the technical solutions of this application can overcome the foregoing difficulty, reduce a large amount of calculation and simulation, reduce calculation difficulty and complexity, to more quickly and accurately determine the LTF sequence of the 480 MHz PPDU provided above.

In a first implementation, the parameters (1) and (2) are based on the LTF sequence corresponding to Table 1, an LTF sequence corresponding to the first 480 MHz is extracted and used as the LTF sequence of the 480 MHz PPDU, and PAPR results of the 480 MHz RU/MRU at different pilot phase rotation angles (for example, 0 degrees, 180 degrees, 60 degrees, and 120 degrees) may be obtained based on the parameters (1) or (2) and the RU/MRU shown in FIG. 6(a) to FIG. 6(h). 0 degrees may indicate that a relative phase rotation angle between pilot subcarriers and data subcarriers corresponding to the LTF sequence is 0 degrees, that is, a ratio of an element in the R matrix to a corresponding element in the P matrix is 1. 180 degrees may indicate that a relative phase rotation angle between pilot subcarriers and data subcarriers corresponding to the LTF sequence is 180 degrees, that is, a ratio of an element in the R matrix to a corresponding element in the P matrix is -1. 60 degrees may indicate that a relative phase rotation angle between pilot subcarriers and data subcarriers corresponding to the LTF sequence is 60 degrees, that is, a ratio of an element in the R matrix to a corresponding element in the P matrix is w^±(6n+1). 120 degrees may indicate that a relative phase rotation angle between pilot subcarriers and data subcarriers corresponding to the LTF sequence is 120 degrees, that is, a ratio of an element in the R matrix to a corresponding element in the P matrix is w^±(6n+2), where n is any integer, and w=exp(j×pi/3). The PAPR results of the RU/MRU at different pilot phase rotation angles are in a one-to-one correspondence with RU/MRU patterns shown in FIG. 6(a) to FIG. 6(h), as shown in Table 9 below.

Table 9

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.45 | 8.27 | 8.26 | 8.29 | 8.45 |
| 5×996-tone (FIG. 6(b)) | MRU 1 | 8.82 | 7.3 | 7.55 | 7.36 | 7.65 |
| | MRU 2 | | 7.29 | 7.36 | 7.54 | 7.63 |
| | MRU 3 | | 8.47 | 8.61 | 8.65 | 8.74 |
| | MRU 4 | | 8.5 | 8.53 | 8.77 | 8.82 |
| | MRU 5 | | 7.03 | 7.55 | 7.3 | 7.62 |
| | MRU 6 | | 7.42 | 7.42 | 7.51 | 7.63 |
| 4×996-tone (FIG. 6(c)) | MRU 1 | 6.18 | 5.7 | 6.06 | 5.95 | 6.13 |
| | MRU 2 | | 5.77 | 5.96 | 6.07 | 6.18 |
| 3×996-tone (FIG. 6(d)) | MRU 1 | 8.52 | 7.92 | 7.93 | 8.1 | 8.18 |
| | MRU 2 | | 7.97 | 7.8 | 8.05 | 8.15 |
| | MRU 3 | | 7.89 | 8.18 | 8.39 | 8.52 |
| | MRU 4 | | 7.88 | 8.04 | 7.81 | 8.12 |
| | MRU 5 | | 7.58 | 7.85 | 7.78 | 7.79 |
| | MRU 6 | | 7.93 | 7.96 | 7.91 | 8.11 |
| | MRU 7 | | 7.33 | 7.93 | 7.79 | 8.15 |
| 2×996-tone (FIG. 6(e)) | MRU 1 | 6.22 | 5.94 | 6.05 | 6.11 | 6.22 |
| | MRU 2 | | 6.07 | 5.94 | 6.1 | 6.16 |
| | MRU 3 | | 5.94 | 6.05 | 6.11 | 6.22 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.02 | 8.37 | 8.45 | 8.39 | 8.61 |
| | MRU 2 | | 8.04 | 7.97 | 8.13 | 8.14 |
| | MRU 3 | | 8.54 | 7.8 | 8.42 | 8.15 |
| | MRU 4 | | 8.6 | 8.53 | 8.72 | 8.89 |
| | MRU 5 | | 8.59 | 8.63 | 8.73 | 8.88 |
| | MRU 6 | | 8.52 | 8.75 | 8.92 | 9.02 |
| | MRU 7 | | 8.54 | 8.3 | 8.27 | 8.35 |
| | MRU 8 | | 8.35 | 8.58 | 8.61 | 8.87 |
| | MRU 9 | | 8.37 | 8.45 | 8.39 | 8.61 |
| | MRU 10 | | 8.04 | 7.97 | 8.13 | 8.14 |
| | MRU 11 | | 8.54 | 7.73 | 8.42 | 8.15 |
| | MRU 12 | | 8.6 | 8.53 | 8.72 | 8.89 |
| 3×996+484-tone (FIG. 6(f)) | MRU 1 | 8.63 | 7.33 | 7.4 | 7.3 | 7.48 |
| | MRU 2 | | 7.64 | 7.42 | 7.98 | 8.02 |
| | MRU 3 | | 7.73 | 8.41 | 8 | 8.41 |
| | MRU 4 | | 7.99 | 7.95 | 8.28 | 8.16 |
| | MRU 5 | | 6.93 | 7.26 | 6.87 | 7.28 |
| | MRU 6 | | 6.54 | 7 | 6.75 | 6.98 |
| | MRU 7 | | 7.87 | 8.03 | 8.53 | 8.63 |
| | MRU 8 | | 7.67 | 8.27 | 7.91 | 8.27 |
| | MRU 9 | | 7.51 | 8.1 | 7.99 | 7.98 |
| | MRU 10 | | 8.08 | 8.35 | 8.36 | 8.61 |
| | MRU 11 | | 7.08 | 6.81 | 6.97 | 6.91 |
| | MRU 12 | | 6.79 | 6.96 | 7.04 | 7.36 |
| | MRU 13 | | 8.05 | 8 | 7.86 | 8.01 |
| | MRU 14 | | 8.09 | 8.2 | 8.26 | 8.33 |
| | MRU 15 | | 7.13 | 7.55 | 7.35 | 7.91 |
| | MRU 16 | | 7.54 | 8.03 | 7.79 | 8.17 |
| 2×996+484-tone (FIG. 6(g)) | MRU 1 | 9.69 | 8.24 | 7.57 | 8.03 | 7.76 |
| | MRU 2 | | 7.74 | 7.92 | 8.22 | 8.31 |
| | MRU 3 | | 9.25 | 9.19 | 9.39 | 9.35 |
| | MRU 4 | | 9.25 | 9.42 | 9.52 | 9.49 |
| | MRU 5 | | 8.24 | 7.57 | 8.03 | 7.72 |
| | MRU 6 | | 7.83 | 7.98 | 8.31 | 8.38 |
| | MRU 7 | | 6.85 | 6.97 | 7.03 | 7.08 |
| | MRU 8 | | 6.98 | 7.04 | 7.21 | 7.13 |
| | MRU 9 | | 7.86 | 8.3 | 8.22 | 8.04 |
| | MRU 10 | | 8.17 | 7.72 | 8.01 | 7.87 |
| | MRU 11 | | 6.89 | 6.98 | 7.08 | 7.13 |
| | MRU 12 | | 7.23 | 7.12 | 7.29 | 7.15 |
| | MRU 13 | | 6.85 | 7.03 | 7.02 | 7.19 |
| | MRU 14 | | 9.55 | 9.12 | 9.69 | 9.58 |
| | MRU 15 | | 5.95 | 6.26 | 6.12 | 6.16 |
| | MRU 16 | | 7.89 | 7.92 | 8.31 | 8.32 |
| | MRU 17 | | 6.82 | 6.87 | 7.27 | 7.44 |
| | MRU 18 | | 7.83 | 7.98 | 8.31 | 8.38 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.88 | 7.64 | 7.34 | 7.65 | 7.71 |
| | MRU 2 | | 7.63 | 7.39 | 7.88 | 7.76 |
| | MRU 3 | | 7.44 | 7.03 | 7.61 | 7.46 |
| | MRU 4 | | 7.26 | 7.38 | 7.77 | 7.72 |
| | MRU 5 | | 7.53 | 7.24 | 7.74 | 7.34 |
| | MRU 6 | | 7.47 | 7.16 | 7.59 | 7.29 |
| | MRU 7 | | 7.7 | 7.07 | 7.7 | 7.44 |
| | MRU 8 | | 7.37 | 7.37 | 7.55 | 7.53 |
| | MRU 9 | | 7.64 | 7.34 | 7.65 | 7.71 |
| | MRU 10 | | 7.63 | 7.39 | 7.88 | 7.76 |
| | MRU 11 | | 7.44 | 7.03 | 7.61 | 7.46 |
| | MRU 12 | | 7.26 | 7.38 | 7.77 | 7.72 |

In a second implementation, the parameters (3) and (4) are based on the LTF sequence corresponding to Table 2. An LTF sequence corresponding to the first 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (3) or (4) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 10 below.

Table 10

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.26 | 7.72 | 7.97 | 8.09 | 8.26 |
| 5×996-tone (FIG. 6(b)) | MRU 1 | 8.55 | 7.19 | 7.13 | 7.35 | 7.5 |
| | MRU 2 | | 7.37 | 7.73 | 7.52 | 7.78 |
| | MRU 3 | | 8.36 | 8.13 | 8.48 | 8.52 |
| | MRU 4 | | 8.43 | 8.23 | 8.55 | 8.38 |
| | MRU 5 | | 7.2 | 7.43 | 7.53 | 7.51 |
| | MRU 6 | | 7.26 | 7.49 | 7.29 | 7.55 |
| 4×996-tone (FIG. 6(c)) | MRU 1 | 6.27 | 5.76 | 6.16 | 5.93 | 6.22 |
| | MRU 2 | | 5.76 | 6.02 | 6.11 | 6.27 |
| 3×996-tone (FIG. 6(d)) | MRU 1 | 8.18 | 7.83 | 7.85 | 7.83 | 7.84 |
| | MRU 2 | | 7.76 | 7.93 | 8.1 | 8.18 |
| | MRU 3 | | 7.89 | 7.57 | 8.02 | 8.15 |
| | MRU 4 | | 7.61 | 7.85 | 7.78 | 7.79 |
| | MRU 5 | | 7.93 | 7.96 | 7.91 | 8.11 |
| | MRU 6 | | 7.36 | 7.93 | 7.79 | 8.15 |
| | MRU 7 | | 7.88 | 8.04 | 7.81 | 8.12 |
| 2×996-tone (FIG. 6(e)) | MRU 1 | 6.21 | 6 | 6.07 | 6.08 | 6.21 |
| | MRU 2 | | 5.94 | 5.98 | 5.97 | 6.17 |
| | MRU 3 | | 6 | 6.07 | 6.08 | 6.21 |
| 5×996+484-tone (FIG. 6(a)) | MRU 1 | 9.22 | 7.94 | 7.79 | 8.28 | 8.42 |
| | MRU 2 | | 8.21 | 7.98 | 8.23 | 8.19 |
| | MRU 3 | | 7.87 | 7.51 | 7.94 | 7.86 |
| | MRU 4 | | 7.77 | 7.93 | 7.86 | 8.05 |
| | MRU 5 | | 8.73 | 8.57 | 8.92 | 8.78 |
| | MRU 6 | | 8.68 | 8.59 | 9.09 | 9.22 |
| | MRU 7 | | 8.28 | 8.59 | 8.75 | 8.95 |

(continued)

| RU/MRU type | RU/MRU pattern | Max PAPR (dB) | 0 degrees | 180 degrees | 60 degrees | 120 degrees |
|---|---|---|---|---|---|---|
| | MRU 8 | | 8.81 | 8.64 | 8.93 | 9.03 |
| | MRU 9 | | 7.77 | 7.54 | 8.06 | 8.19 |
| | MRU 10 | | 7.92 | 7.92 | 8.11 | 8.18 |
| | MRU 11 | | 7.87 | 7.71 | 8.06 | 7.92 |
| | MRU 12 | | 7.77 | 8.22 | 7.92 | 8.17 |
| 3×996+484-tone (FIG. 6(f)) | MRU 1 | 8.63 | 7.79 | 8.03 | 8.53 | 8.63 |
| | MRU 2 | | 7.83 | 8.5 | 8.03 | 8.47 |
| | MRU 3 | | 6.76 | 7.04 | 6.88 | 7.2 |
| | MRU 4 | | 6.6 | 7.05 | 7.2 | 7.37 |
| | MRU 5 | | 7.78 | 8.43 | 8.11 | 8.41 |
| | MRU 6 | | 7.92 | 7.95 | 8.28 | 8.16 |
| | MRU 7 | | 7.67 | 7.66 | 7.65 | 7.77 |
| | MRU 8 | | 7.29 | 7.39 | 7.35 | 7.29 |
| | MRU 9 | | 7.7 | 7.23 | 7.81 | 7.64 |
| | MRU 10 | | 7.36 | 7.48 | 7.52 | 7.69 |
| | MRU 11 | | 8.05 | 7.95 | 7.94 | 8.01 |
| | MRU 12 | | 8.09 | 8.2 | 8.26 | 8.33 |
| | MRU 13 | | 6.6 | 7.08 | 7.18 | 7.45 |
| | MRU 14 | | 6.64 | 7.57 | 7.29 | 7.72 |
| | MRU 15 | | 7.58 | 8.1 | 7.99 | 7.98 |
| | MRU 16 | | 8.08 | 8.35 | 8.36 | 8.61 |
| 2×996+484-tone (FIG. 6(g)) | MRU 1 | 9.61 | 7.01 | 6.94 | 7.24 | 7.38 |
| | MRU 2 | | 6.87 | 7.1 | 7.23 | 7.37 |
| | MRU 3 | | 7.85 | 8.02 | 8.09 | 8.24 |
| | MRU 4 | | 7.94 | 8.58 | 8.14 | 8.46 |
| | MRU 5 | | 6.94 | 6.88 | 7.22 | 7.4 |
| | MRU 6 | | 7.03 | 6.93 | 7.33 | 7.47 |
| | MRU 7 | | 8.24 | 7.57 | 8.03 | 7.76 |
| | MRU 8 | | 7.74 | 7.92 | 8.22 | 8.31 |
| | MRU 9 | | 9.25 | 9.19 | 9.39 | 9.35 |
| | MRU 10 | | 9.25 | 9.42 | 9.52 | 9.49 |
| | MRU 11 | | 8.24 | 7.57 | 8.03 | 7.72 |
| | MRU 12 | | 7.83 | 7.98 | 8.31 | 8.38 |
| | MRU 13 | | 7.89 | 7.46 | 7.82 | 7.51 |
| | MRU 14 | | 8.32 | 7.59 | 8.3 | 7.95 |
| | MRU 15 | | 9.46 | 9.25 | 9.58 | 9.3 |
| | MRU 16 | | 9.52 | 9.06 | 9.61 | 9.36 |
| | MRU 17 | | 7.73 | 7.46 | 7.71 | 7.57 |
| | MRU 18 | | 8.32 | 7.59 | 8.3 | 7.95 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.67 | 7 | 7.71 | 7.45 |
| | MRU 2 | | 7.38 | 7.41 | 7.5 | 7.55 |
| | MRU 3 | | 7.54 | 7.3 | 7.74 | 7.35 |
| | MRU 4 | | 7.4 | 7.19 | 7.57 | 7.3 |
| | MRU 5 | | 7.38 | 6.94 | 7.6 | 7.46 |
| | MRU 6 | | 7.5 | 7.38 | 7.9 | 7.88 |
| | MRU 7 | | 7.63 | 7.41 | 7.65 | 7.76 |
| | MRU 8 | | 7.63 | 7.27 | 7.66 | 7.46 |
| | MRU 9 | | 7.67 | 7 | 7.71 | 7.45 |
| | MRU 10 | | 7.38 | 7.41 | 7.5 | 7.55 |
| | MRU 11 | | 7.54 | 7.3 | 7.74 | 7.35 |
| | MRU 12 | | 7.4 | 7.19 | 7.57 | 7.3 |

In a third implementation, the parameters (5) and (6) are based on the LTF sequence corresponding to Table 3. An LTF sequence corresponding to the first 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (5) or (6) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 11 below.

Table 11

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 7.87 | 7.77 | 7.76 | 7.84 | 7.87 |
| 5×996-tone (FIG. 6(b)) | MRU 1 | 8.9 | 7.74 | 8.05 | 8 | 8 |
| | MRU 2 | | 8.35 | 8.26 | 8.46 | 8.53 |
| | MRU 3 | | 8.1 | 8 | 8.23 | 8.39 |
| | MRU 4 | | 8.77 | 8.7 | 8.87 | 8.92 |
| | MRU 5 | | 7.2 | 7.43 | 7.53 | 7.51 |
| | MRU 6 | | 7.66 | 7.86 | 7.82 | 7.98 |
| 4×996-tone (FIG. 6(c)) | MRU 1 | 7.82 | 5.76 | 6.16 | 5.93 | 6.22 |
| | MRU 2 | | 7.16 | 7.69 | 7.46 | 7.82 |
| 3×996-tone (FIG. 6(d)) | MRU 1 | 8.52 | 7.83 | 7.85 | 7.83 | 7.84 |
| | MRU 2 | | 7.76 | 7.93 | 8.1 | 8.18 |
| | MRU 3 | | 7.89 | 7.57 | 8.02 | 8.15 |
| | MRU 4 | | 7.98 | 7.61 | 7.84 | 7.89 |
| | MRU 5 | | 7.79 | 7.98 | 8.1 | 8.18 |
| | MRU 6 | | 7.36 | 7.93 | 7.79 | 8.15 |
| | MRU 7 | | 7.9 | 8.18 | 8.42 | 8.52 |
| 2×996-tone (FIG. 6(e)) | MRU 1 | 8.68 | 6 | 6.07 | 6.08 | 6.21 |
| | MRU 2 | | 5.94 | 5.98 | 5.97 | 6.17 |
| | MRU 3 | | 7.83 | 8.46 | 8.39 | 8.68 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 8.99 | 8.01 | 8.05 | 8.04 | 7.98 |
| | MRU 2 | | 8.69 | 8.44 | 8.6 | 8.56 |
| | MRU 3 | | 7.9 | 7.46 | 7.79 | 7.78 |
| | MRU 4 | | 7.72 | 7.55 | 7.76 | 7.79 |
| | MRU 5 | | 8.87 | 8.56 | 8.93 | 8.99 |
| | MRU 6 | | 7.08 | 7.26 | 7.34 | 7.45 |
| | MRU 7 | | 8.58 | 8.78 | 8.7 | 8.86 |
| | MRU 8 | | 7.54 | 7.61 | 7.7 | 7.97 |
| | MRU 9 | | 7.75 | 7.38 | 7.48 | 7.47 |
| | MRU 10 | | 7.92 | 7.92 | 8.11 | 8.18 |
| | MRU 11 | | 7.79 | 8.01 | 8.01 | 8.12 |
| | MRU 12 | | 6.9 | 6.58 | 6.85 | 6.78 |
| 3×996+484-tone (FIG. 6(f)) | MRU 1 | 8.66 | 7.79 | 8.03 | 8.53 | 8.63 |
| | MRU 2 | | 7.83 | 8.5 | 8.03 | 8.47 |
| | MRU 3 | | 6.76 | 7.04 | 6.88 | 7.2 |
| | MRU 4 | | 6.6 | 7.05 | 7.2 | 7.37 |
| | MRU 5 | | 7.78 | 8.43 | 8.11 | 8.41 |
| | MRU 6 | | 7.92 | 7.95 | 8.28 | 8.16 |
| | MRU 7 | | 7.67 | 7.66 | 7.65 | 7.77 |
| | MRU 8 | | 7.29 | 7.39 | 7.35 | 7.29 |
| | MRU 9 | | 8.47 | 8.37 | 8.66 | 8.53 |
| | MRU 10 | | 7.61 | 7.5 | 7.73 | 7.84 |
| | MRU 11 | | 7.35 | 7.02 | 7.34 | 7.36 |
| | MRU 12 | | 6.58 | 6.78 | 6.64 | 6.7 |
| | MRU 13 | | 7.91 | 8.17 | 8.14 | 8.26 |
| | MRU 14 | | 6.64 | 7.57 | 7.29 | 7.72 |
| | MRU 15 | | 7.17 | 7.09 | 7.09 | 7.1 |
| | MRU 16 | | 6.86 | 7.3 | 7.08 | 7.21 |
| 2×996+484-tone (FIG. 6(g)) | MRU 1 | 9.56 | 7.01 | 6.94 | 7.24 | 7.38 |
| | MRU 2 | | 6.87 | 7.1 | 7.23 | 7.37 |
| | MRU 3 | | 7.85 | 8.02 | 8.09 | 8.24 |
| | MRU 4 | | 7.94 | 8.58 | 8.14 | 8.46 |
| | MRU 5 | | 6.94 | 6.88 | 7.22 | 7.4 |
| | MRU 6 | | 7.03 | 6.93 | 7.33 | 7.47 |
| | MRU 7 | | 8.24 | 7.57 | 8.03 | 7.76 |
| | MRU 8 | | 7.74 | 7.92 | 8.22 | 8.31 |
| | MRU 9 | | 9.25 | 9.19 | 9.39 | 9.35 |
| | MRU 10 | | 9.25 | 9.42 | 9.52 | 9.49 |
| | MRU 11 | | 8.24 | 7.57 | 8.03 | 7.72 |
| | MRU 12 | | 7.83 | 7.98 | 8.31 | 8.38 |
| | MRU 13 | | 6.85 | 6.97 | 7.03 | 7.08 |
| | MRU 14 | | 8.32 | 7.59 | 8.3 | 7.95 |
| | MRU 15 | | 5.95 | 6.26 | 6.12 | 6.16 |
| | MRU 16 | | 8.32 | 7.59 | 8.3 | 7.95 |
| | MRU 17 | | 7.08 | 7.18 | 7.4 | 7.44 |
| | MRU 18 | | 9.1 | **9.49** | 9.24 | 9.56 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.67 | 7 | 7.71 | 7.45 |
| | MRU 2 | | 7.38 | 7.41 | 7.5 | 7.55 |
| | MRU 3 | | 7.54 | 7.3 | 7.74 | 7.35 |
| | MRU 4 | | 7.4 | 7.19 | 7.57 | 7.3 |
| | MRU 5 | | 7.38 | 6.94 | 7.6 | 7.46 |
| | MRU 6 | | 7.5 | 7.38 | 7.9 | 7.88 |
| | MRU 7 | | 7.63 | 7.41 | 7.65 | 7.76 |
| | MRU 8 | | 7.63 | 7.27 | 7.66 | 7.46 |
| | MRU 9 | | 7.38 | 6.94 | 7.6 | 7.46 |
| | MRU 10 | | 7.38 | 7.41 | 7.5 | 7.55 |
| | MRU 11 | | 7.44 | 7.03 | 7.61 | 7.46 |
| | MRU 12 | | 7.37 | 7.37 | 7.55 | 7.53 |

In a fourth implementation, the parameters (7) and (8) are based on the LTF sequence corresponding to Table 4. An LTF sequence corresponding to the first 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (7) or (8) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 12 below.

Table 12

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.01 | 7.59 | 7.7 | 7.94 | 8.01 |
| 5×996-tone (FIG. 6(b)) | MRU 1 | 9.12 | 7.74 | 8.06 | 8.31 | 8.45 |
| | MRU 2 | | 8.09 | 8.3 | 8.23 | 8.44 |
| | MRU 3 | | 7.53 | 7.81 | 7.77 | 7.84 |
| | MRU 4 | | 8.44 | 8.49 | 8.92 | 9.12 |
| | MRU 5 | | 7.2 | 7.43 | 7.53 | 7.51 |
| | MRU 6 | | 7.44 | 7.98 | 7.92 | 8.18 |
| 4×996-tone (FIG. 6(c)) | MRU 1 | 7.54 | 5.76 | 6.16 | 5.93 | 6.22 |
| | MRU 2 | | 7.1 | 7.25 | 7.4 | 7.54 |
| 3×996-tone (FIG. 6(d)) | MRU 1 | 8.18 | 7.83 | 7.85 | 7.83 | 7.84 |
| | MRU 2 | | 7.76 | 7.93 | 8.1 | 8.18 |
| | MRU 3 | | 7.89 | 7.57 | 8.02 | 8.15 |
| | MRU 4 | | 7.98 | 7.61 | 7.84 | 7.89 |
| | MRU 5 | | 7.85 | 7.82 | 7.89 | 7.97 |
| | MRU 6 | | 7.36 | 7.93 | 7.79 | 8.15 |
| | MRU 7 | | 7.64 | 7.41 | 7.89 | 7.78 |
| 2×996-tone (FIG. 6(e)) | MRU 1 | 8.51 | 6 | 6.07 | 6.08 | 6.21 |
| | MRU 2 | | 5.94 | 5.98 | 5.97 | 6.17 |
| | MRU 3 | | 8.23 | 8.32 | 8.39 | 8.51 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.4 | 8.03 | 8.1 | 8.26 | 8.44 |
| | MRU 2 | | 7.94 | 8 | 8.4 | 8.48 |
| | MRU 3 | | 7.62 | 7.6 | 8.01 | 7.9 |
| | MRU 4 | | 7.65 | 7.81 | 7.79 | 8.06 |
| | MRU 5 | | 7.4 | 7.06 | 7.5 | 7.5 |
| | MRU 6 | | 8.47 | 8.77 | 8.56 | 8.69 |
| | MRU 7 | | 7.34 | 7.59 | 7.55 | 7.75 |
| | MRU 8 | | 8.78 | 8.83 | 9.18 | 9.4 |
| | MRU 9 | | 7.77 | 7.54 | 8.06 | 8.19 |
| | MRU 10 | | 7.49 | 7.55 | 7.71 | 7.92 |
| | MRU 11 | | 6.46 | 6.57 | 6.95 | 7.14 |
| | MRU 12 | | 8.09 | 7.63 | 8.09 | 7.92 |
| 3×996+484-tone (FIG. 6(f)) | MRU 1 | 8.9 | 7.79 | 8.03 | 8.53 | 8.63 |
| | MRU 2 | | 7.83 | 8.5 | 8.03 | 8.47 |
| | MRU 3 | | 6.76 | 7.04 | 6.88 | 7.2 |
| | MRU 4 | | 6.6 | 7.05 | 7.2 | 7.37 |
| | MRU 5 | | 7.78 | 8.43 | 8.11 | 8.41 |
| | MRU 6 | | 7.92 | 7.95 | 8.28 | 8.16 |
| | MRU 7 | | 7.67 | 7.66 | 7.65 | 7.77 |
| | MRU 8 | | 7.29 | 7.39 | 7.35 | 7.29 |
| | MRU 9 | | 7.43 | 7.6 | 7.75 | 7.77 |
| | MRU 10 | | 8.71 | 8.38 | 8.83 | 8.9 |
| | MRU 11 | | 6.33 | 6.75 | 6.58 | 6.8 |
| | MRU 12 | | 7.33 | 7.51 | 7.88 | 7.96 |
| | MRU 13 | | 6.6 | 7.08 | 7.18 | 7.45 |
| | MRU 14 | | 7.68 | 8.17 | 7.9 | 8.23 |
| | MRU 15 | | 7.16 | 7.28 | 7.48 | 7.53 |
| | MRU 16 | | 7.08 | 7.09 | 7.33 | 7.44 |
| 2×996+484-tone (FIG. 6(g)) | MRU 1 | 9.62 | 7.01 | 6.94 | 7.24 | 7.38 |
| | MRU 2 | | 6.87 | 7.1 | 7.23 | 7.37 |
| | MRU 3 | | 7.85 | 8.02 | 8.09 | 8.24 |
| | MRU 4 | | 7.94 | 8.58 | 8.14 | 8.46 |
| | MRU 5 | | 6.94 | 6.88 | 7.22 | 7.4 |
| | MRU 6 | | 7.03 | 6.93 | 7.33 | 7.47 |
| | MRU 7 | | 8.24 | 7.57 | 8.03 | 7.76 |
| | MRU 8 | | 7.74 | 7.92 | 8.22 | 8.31 |
| | MRU 9 | | 9.25 | 9.19 | 9.39 | 9.35 |
| | MRU 10 | | 9.25 | 9.42 | 9.52 | 9.49 |
| | MRU 11 | | 8.24 | 7.57 | 8.03 | 7.72 |
| | MRU 12 | | 7.83 | 7.98 | 8.31 | 8.38 |
| | MRU 13 | | 7.89 | 7.46 | 7.82 | 7.51 |
| | MRU 14 | | 6.98 | 7.04 | 7.21 | 7.13 |
| | MRU 15 | | 8.09 | 7.61 | 8.04 | 7.72 |
| | MRU 16 | | 6.04 | 6.46 | 6.54 | 6.65 |
| | MRU 17 | | 9.54 | 9.12 | 9.62 | 9.48 |
| | MRU 18 | | 7.15 | 7.11 | 7.37 | 7.48 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.67 | 7 | 7.71 | 7.45 |
| | MRU 2 | | 7.38 | 7.41 | 7.5 | 7.55 |
| | MRU 3 | | 7.54 | 7.3 | 7.74 | 7.35 |
| | MRU 4 | | 7.4 | 7.19 | 7.57 | 7.3 |
| | MRU 5 | | 7.38 | 6.94 | 7.6 | 7.46 |
| | MRU 6 | | 7.5 | 7.38 | 7.9 | 7.88 |
| | MRU 7 | | 7.63 | 7.41 | 7.65 | 7.76 |
| | MRU 8 | | 7.63 | 7.27 | 7.66 | 7.46 |
| | MRU 9 | | 7.67 | 7 | 7.71 | 7.45 |
| | MRU 10 | | 7.5 | 7.38 | 7.9 | 7.88 |
| | MRU 11 | | 7.7 | 7.07 | 7.7 | 7.44 |
| | MRU 12 | | 7.26 | 7.38 | 7.77 | 7.72 |

In a fifth implementation, the parameters (9) and (10) are based on the LTF sequence corresponding to Table 5. An LTF sequence corresponding to the first 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (9) or (10) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 13 below.

Table 13

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 7.92 | 7.82 | 7.92 | 7.86 | 7.89 |
| 5×996-tone (FIG. 6(b)) | MRU 1 | 9.65 | 9.62 | 9.5 | 9.59 | 9.65 |
| | MRU 2 | | 7.08 | 7.46 | 7.23 | 7.57 |
| | MRU 3 | | 7.76 | 8.23 | 7.94 | 8.21 |
| | MRU 4 | | 5.8 | 6.1 | 5.98 | 6.1 |
| | MRU 5 | | 7.76 | 8.21 | 7.8 | 8.14 |
| | MRU 6 | | 7.42 | 7.42 | 7.51 | 7.63 |
| 4×996-tone (FIG. 6(c)) | MRU 1 | 8.55 | 5.7 | 6.06 | 5.95 | 6.13 |
| | MRU 2 | | 8.07 | 8.33 | 8.41 | 8.55 |
| 3×996-tone (FIG. 6(d)) | MRU 1 | 8.52 | 7.92 | 7.93 | 8.1 | 8.18 |
| | MRU 2 | | 7.97 | 7.8 | 8.05 | 8.15 |
| | MRU 3 | | 7.89 | 8.18 | 8.39 | 8.52 |
| | MRU 4 | | 7.83 | 7.52 | 7.83 | 7.79 |
| | MRU 5 | | 7.47 | 8.04 | 7.8 | 8.17 |
| | MRU 6 | | 7.83 | 7.79 | 7.9 | 7.84 |
| | MRU 7 | | 7.33 | 7.93 | 7.79 | 8.15 |
| 2×996-tone (FIG. 6(e)) | MRU 1 | 6.22 | 5.94 | 6.05 | 6.11 | 6.22 |
| | MRU 2 | | 6.07 | 5.94 | 6.1 | 6.16 |
| | MRU 3 | | 6.07 | 5.94 | 6.1 | 6.16 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.38 | 9.13 | 8.88 | 9.14 | 9.13 |
| | MRU 2 | | 9.11 | 8.97 | 9.32 | 9.38 |
| | MRU 3 | | 7.53 | 7.53 | 7.74 | 7.71 |
| | MRU 4 | | 7.73 | 8.27 | 7.99 | 8.37 |
| | MRU 5 | | 7.77 | 8.14 | 8.22 | 8.09 |
| | MRU 6 | | 7.83 | 8.15 | 7.95 | 8.23 |
| | MRU 7 | | 6.96 | 6.94 | 7.15 | 7.26 |
| | MRU 8 | | 7.06 | 6.63 | 7.27 | 7.2 |
| | MRU 9 | | 7.62 | 8.24 | 7.82 | 7.98 |
| | MRU 10 | | 7.92 | 7.69 | 7.87 | 7.86 |
| | MRU 11 | | 7.48 | 7.47 | 7.91 | 7.85 |
| | MRU 12 | | 7.71 | 7.56 | 7.86 | 7.7 |
| 3×996+484-tone (FIG. 6(f)) | MRU 1 | 8.74 | 7.33 | 7.4 | 7.3 | 7.48 |
| | MRU 2 | | 7.64 | 7.42 | 7.98 | 8.02 |
| | MRU 3 | | 7.73 | 8.41 | 8 | 8.41 |
| | MRU 4 | | 7.99 | 7.95 | 8.28 | 8.16 |
| | MRU 5 | | 6.93 | 7.26 | 6.87 | 7.28 |
| | MRU 6 | | 6.54 | 7 | 6.75 | 6.98 |
| | MRU 7 | | 7.87 | 8.03 | 8.53 | 8.63 |
| | MRU 8 | | 7.67 | 8.27 | 7.91 | 8.27 |
| | MRU 9 | | 8.21 | 8.22 | 8.43 | 8.32 |
| | MRU 10 | | 8.7 | 8.07 | 8.74 | 8.57 |
| | MRU 11 | | 7.86 | 8.27 | 8.12 | 8.28 |
| | MRU 12 | | 7.56 | 8.1 | 7.9 | 8.17 |
| | MRU 13 | | 7.84 | 7.84 | 8.24 | 8.05 |
| | MRU 14 | | 8.18 | 7.79 | 8.18 | 8.16 |
| | MRU 15 | | 8.08 | 8.57 | 8.39 | 8.66 |
| | MRU 16 | | 7.96 | 8.44 | 8.25 | 8.48 |
| 2×996+484-tone (FIG. 6(g)) | MRU 1 | 9.67 | 8.24 | 7.57 | 8.03 | 7.76 |
| | MRU 2 | | 7.74 | 7.92 | 8.22 | 8.31 |
| | MRU 3 | | 9.25 | 9.19 | 9.39 | 9.35 |
| | MRU 4 | | 9.25 | 9.42 | 9.52 | 9.49 |
| | MRU 5 | | 8.24 | 7.57 | 8.03 | 7.72 |
| | MRU 6 | | 7.83 | 7.98 | 8.31 | 8.38 |
| | MRU 7 | | 6.85 | 6.97 | 7.03 | 7.08 |
| | MRU 8 | | 6.98 | 7.04 | 7.21 | 7.13 |
| | MRU 9 | | 7.86 | 8.3 | 8.22 | 8.04 |
| | MRU 10 | | 8.17 | 7.72 | 8.01 | 7.87 |
| | MRU 11 | | 6.89 | 6.98 | 7.08 | 7.13 |
| | MRU 12 | | 7.23 | 7.12 | 7.29 | 7.15 |
| | MRU 13 | | 6.63 | 7.52 | 6.92 | 7.27 |
| | MRU 14 | | 9.58 | 9.06 | 9.67 | 9.36 |
| | MRU 15 | | 5.82 | 5.83 | 6.27 | 6.42 |
| | MRU 16 | | 8.32 | 7.59 | 8.3 | 7.95 |
| | MRU 17 | | 6.63 | 6.79 | 6.86 | 6.96 |
| | MRU 18 | | 8.32 | 7.62 | 8.3 | 7.97 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.88 | 7.64 | 7.34 | 7.65 | 7.71 |
| | MRU 2 | | 7.63 | 7.39 | 7.88 | 7.76 |
| | MRU 3 | | 7.44 | 7.03 | 7.61 | 7.46 |
| | MRU 4 | | 7.26 | 7.38 | 7.77 | 7.72 |
| | MRU 5 | | 7.53 | 7.24 | 7.74 | 7.34 |
| | MRU 6 | | 7.47 | 7.16 | 7.59 | 7.29 |
| | MRU 7 | | 7.7 | 7.07 | 7.7 | 7.44 |
| | MRU 8 | | 7.37 | 7.37 | 7.55 | 7.53 |
| | MRU 9 | | 7.53 | 7.24 | 7.74 | 7.34 |
| | MRU 10 | | 7.47 | 7.16 | 7.59 | 7.29 |
| | MRU 11 | | 7.7 | 7.07 | 7.7 | 7.44 |
| | MRU 12 | | 7.37 | 7.37 | 7.55 | 7.53 |

In a sixth implementation, the parameters (11) and (12) are based on the LTF sequence corresponding to Table 6. An LTF sequence corresponding to the first 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (11) or (12) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 14 below.

Table 14

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.33 | 7.96 | 8.09 | 8.27 | 8.33 |
| 5×996-tone (FIG. 6(b)) | MRU 1 | 8.52 | 7.34 | 7.14 | 7.31 | 7.44 |
| | MRU 2 | | 8.19 | 8 | 8.34 | 8.52 |
| | MRU 3 | | 7.29 | 7.34 | 7.31 | 7.44 |
| | MRU 4 | | 7.44 | 7.56 | 7.57 | 7.76 |
| | MRU 5 | | 8.11 | 8.03 | 8.43 | 8.39 |
| | MRU 6 | | 7.21 | 7.29 | 7.5 | 7.6 |
| 4×996-tone (FIG. 6(c)) | MRU 1 | 7.79 | 7.29 | 7.39 | 7.62 | 7.79 |
| | MRU 2 | | 7.32 | 7.31 | 7.42 | 7.59 |
| 3×996-tone (FIG. 6(d)) | MRU 1 | 8.26 | 7.58 | 7.85 | 7.78 | 7.79 |
| | MRU 2 | | 8.04 | 8 | 8.09 | 7.87 |
| | MRU 3 | | 7.98 | 7.61 | 7.84 | 7.89 |
| | MRU 4 | | 7.42 | 7.88 | 7.47 | 7.8 |
| | MRU 5 | | 7.58 | 7.96 | 8 | 8.13 |
| | MRU 6 | | 7.97 | 7.8 | 8.05 | 8.15 |
| | MRU 7 | | 7.88 | 8.21 | 7.89 | 8.26 |
| 2×996-tone (FIG. 6(e)) | MRU 1 | 8.51 | 8.23 | 8.32 | 8.39 | 8.51 |
| | MRU 2 | | 5.94 | 6.05 | 6.11 | 6.22 |
| | MRU 3 | | 8.2 | 8.38 | 8.38 | 8.33 |
| 5×996+484- | MRU 1 | 9.19 | 7.82 | 7.87 | 8.29 | 8.47 |

(continued)

| RU/MRU type | RU/MRU pattern | Max PAPR (dB) | 0 degrees | 180 degrees | 60 degrees | 120 degrees |
|---|---|---|---|---|---|---|
| tone (FIG. 6(a)) | MRU 2 | | 8.19 | 8.08 | 8.31 | 8.26 |
| | MRU 3 | | 7.56 | 7.95 | 7.84 | 8.03 |
| | MRU 4 | | 8.77 | 8.65 | 8.99 | 9.19 |
| | MRU 5 | | 7.07 | 7.03 | 7.32 | 7.52 |
| | MRU 6 | | 8.19 | 8.08 | 8.31 | 8.26 |
| | MRU 7 | | 6.99 | 6.96 | 7.09 | 7.26 |
| | MRU 8 | | 8.46 | 8.56 | 8.74 | 8.89 |
| | MRU 9 | | 7.56 | 7.93 | 7.75 | 7.91 |
| | MRU 10 | | 8.43 | 8.77 | 8.6 | 8.84 |
| | MRU 11 | | 7.85 | 7.88 | 7.98 | 7.87 |
| | MRU 12 | | 8.45 | 8.35 | 8.66 | 8.74 |
| 3×996+484-tone (FIG. 6(f)) | MRU 1 | 8.86 | 7.14 | 7.23 | 7.38 | 7.43 |
| | MRU 2 | | 6.98 | 6.75 | 7.16 | 7.22 |
| | MRU 3 | | 7.08 | 6.81 | 6.97 | 6.91 |
| | MRU 4 | | 7.73 | 8.27 | 8.15 | 8.39 |
| | MRU 5 | | 6.28 | 6.88 | 6.97 | 7.29 |
| | MRU 6 | | 7.32 | 7.43 | 7.45 | 7.74 |
| | MRU 7 | | 7.48 | 7.45 | 7.59 | 7.67 |
| | MRU 8 | | 8.86 | 8.34 | 8.74 | 8.69 |
| | MRU 9 | | 7.31 | 7.32 | 7.63 | 7.79 |
| | MRU 10 | | 8.31 | 8.4 | 8.58 | 8.53 |
| | MRU 11 | | 6.75 | 6.59 | 6.86 | 6.88 |
| | MRU 12 | | 7.3 | 7.81 | 7.44 | 7.69 |
| | MRU 13 | | 6.93 | 7.26 | 6.87 | 7.28 |
| | MRU 14 | | 8.28 | 8.06 | 8.44 | 8.49 |
| | MRU 15 | | 7.21 | 7.49 | 7.67 | 7.9 |
| | MRU 16 | | 7.13 | 7.02 | 7.28 | 7.22 |
| 2×996+484-tone (FIG. 6(g)) | MRU 1 | 9.45 | 7.15 | 7.04 | 7.26 | 7.43 |
| | MRU 2 | | 6.97 | 7.04 | 7.29 | 7.34 |
| | MRU 3 | | 8.13 | 8.29 | 8.45 | 8.47 |
| | MRU 4 | | 8.46 | 8.44 | 8.49 | 8.65 |
| | MRU 5 | | 7.19 | 6.87 | 7.16 | 7.18 |
| | MRU 6 | | 7.15 | 7.11 | 7.37 | 7.48 |
| | MRU 7 | | 8.24 | 7.57 | 8.03 | 7.58 |
| | MRU 8 | | 6.87 | 7.1 | 7.23 | 7.37 |
| | MRU 9 | | 8.24 | 7.57 | 8.03 | 7.88 |
| | MRU 10 | | 5.81 | 5.8 | 5.84 | 6.16 |
| | MRU 11 | | 9.25 | 9.23 | 9.45 | 9.4 |
| | MRU 12 | | 7.52 | 7.24 | 7.45 | 7.54 |
| | MRU 13 | | 6.63 | 7.52 | 6.92 | 7.27 |
| | MRU 14 | | 7.18 | 7.19 | 7.39 | 7.1 |
| | MRU 15 | | 7.85 | 8.02 | 8.09 | 8.24 |
| | MRU 16 | | 8.17 | 7.72 | 8.01 | 7.87 |
| | MRU 17 | | 6.82 | 7.09 | 7.3 | 7.09 |
| | MRU 18 | | 6.81 | 7.53 | 7.13 | 7.35 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.67 | 7 | 7.71 | 7.45 |
| | MRU 2 | | 7.5 | 7.38 | 7.9 | 7.88 |
| | MRU 3 | | 7.7 | 7.07 | 7.7 | 7.44 |
| | MRU 4 | | 7.26 | 7.38 | 7.77 | 7.72 |
| | MRU 5 | | 7.64 | 7.34 | 7.65 | 7.71 |
| | MRU 6 | | 7.63 | 7.39 | 7.88 | 7.76 |
| | MRU 7 | | 7.44 | 7.03 | 7.61 | 7.46 |
| | MRU 8 | | 7.26 | 7.38 | 7.77 | 7.72 |
| | MRU 9 | | 7.53 | 7.24 | 7.74 | 7.34 |
| | MRU 10 | | 7.63 | 7.39 | 7.88 | 7.76 |
| | MRU 11 | | 7.54 | 7.3 | 7.74 | 7.35 |
| | MRU 12 | | 7.63 | 7.27 | 7.66 | 7.46 |

In a seventh implementation, the parameters (13) and (14) are based on the LTF sequence corresponding to Table 7. An LTF sequence corresponding to the first 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (13) or (14) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 15 below.

Table 15

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 7.14 | 6.83 | 7.01 | 7.14 | 7.13 |
| 5×996-tone (FIG. 6(b)) | MRU 1 | 8.89 | 7.58 | 7.83 | 7.84 | 7.77 |
| | MRU 2 | | 7.58 | 7.93 | 7.77 | 7.91 |
| | MRU 3 | | 7.74 | 8.06 | 7.81 | 8.04 |
| | MRU 4 | | 8.26 | 8.36 | 8.28 | 8.45 |
| | MRU 5 | | 8.49 | 8.6 | 8.85 | 8.89 |
| | MRU 6 | | 7.28 | 7.4 | 7.55 | 7.71 |
| 4×996-tone (FIG. 6(c)) | MRU 1 | 8.76 | 7.98 | 8.53 | 8.44 | 8.76 |
| | MRU 2 | | 5.8 | 5.74 | 5.88 | 6.1 |
| 3×996-tone (FIG. 6(d)) | MRU 1 | 9.5 | 9.24 | 9.27 | 9.31 | 9.5 |
| | MRU 2 | | 7.6 | 7.57 | 7.82 | 7.87 |
| | MRU 3 | | 7.33 | 7.93 | 7.79 | 8.15 |
| | MRU 4 | | 7.45 | 7.62 | 7.52 | 7.61 |
| | MRU 5 | | 7.58 | 7.96 | 8 | 8.13 |
| | MRU 6 | | 7.76 | 8.02 | 8.1 | 8.18 |
| | MRU 7 | | 7.57 | 7.78 | 7.83 | 7.69 |
| 2×996-tone (FIG. 6(e)) | MRU 1 | 8.68 | 6.07 | 5.94 | 6.1 | 6.16 |
| | MRU 2 | | 7.83 | 8.46 | 8.39 | 8.68 |
| | MRU 3 | | 8.2 | 8.38 | 8.38 | 8.33 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 8.39 | 8.15 | 8.23 | 8.39 | 8.3 |
| | MRU 2 | | 6.93 | 7.04 | 7.11 | 7.19 |
| | MRU 3 | | 6.81 | 7.26 | 7.01 | 7.21 |
| | MRU 4 | | 7.4 | 7.55 | 7.39 | 7.53 |
| | MRU 5 | | 6.96 | 7.24 | 7.17 | 7.23 |
| | MRU 6 | | 8.05 | 7.93 | 8 | 7.97 |
| | MRU 7 | | 7.49 | 7.53 | 7.48 | 7.63 |
| | MRU 8 | | 7.9 | 8.11 | 8.2 | 8.28 |
| | MRU 9 | | 8 | 8.27 | 8.25 | 8.38 |
| | MRU 10 | | 7.28 | 8.26 | 7.81 | 8.31 |
| | MRU 11 | | 7.99 | 7.99 | 8.22 | 8.26 |
| | MRU 12 | | 6.99 | 7.16 | 7.11 | 7.37 |
| 3×996+484-tone (FIG. 6(f)) | MRU 1 | 9.4 | 7.07 | 7.38 | 7.16 | 7.66 |
| | MRU 2 | | 7.98 | 8.33 | 8.07 | 8.37 |
| | MRU 3 | | 8.3 | 8.78 | 8.64 | 8.92 |
| | MRU 4 | | 8.9 | 9.22 | 9.22 | 9.4 |
| | MRU 5 | | 7.91 | 8.21 | 8.16 | 8.31 |
| | MRU 6 | | 7.53 | 8 | 8.01 | 8.29 |
| | MRU 7 | | 7.13 | 7.55 | 7.35 | 7.91 |
| | MRU 8 | | 7.96 | 8.44 | 8.25 | 8.48 |
| | MRU 9 | | 7.51 | 8.12 | 7.99 | 7.99 |
| | MRU 10 | | 7.29 | 7.33 | 7.39 | 7.45 |
| | MRU 11 | | 6.75 | 6.59 | 6.86 | 6.88 |
| | MRU 12 | | 8.09 | 8.2 | 8.27 | 8.33 |
| | MRU 13 | | 7.73 | 8.41 | 8 | 8.41 |
| | MRU 14 | | 6.32 | 6.78 | 6.71 | 6.83 |
| | MRU 15 | | 7.6 | 7.16 | 7.73 | 7.52 |
| | MRU 16 | | 7.59 | 8.27 | 7.91 | 8.27 |
| 2×996+484-tone (FIG. 6(g)) | MRU 1 | 9.41 | 6.62 | 6.91 | 6.8 | 6.9 |
| | MRU 2 | | 7.15 | 7.12 | 7.05 | 7.09 |
| | MRU 3 | | 8.13 | 8.29 | 8.45 | 8.47 |
| | MRU 4 | | 7.89 | 8.19 | 8.26 | 8.4 |
| | MRU 5 | | 6.63 | 6.79 | 6.86 | 6.96 |
| | MRU 6 | | 6.55 | 6.92 | 6.99 | 6.85 |
| | MRU 7 | | 9.25 | 9.19 | 9.41 | 9.38 |
| | MRU 8 | | 6.97 | 7.04 | 7.29 | 7.34 |
| | MRU 9 | | 8.24 | 7.57 | 8.03 | 7.93 |
| | MRU 10 | | 6.04 | 6.28 | 6.54 | 6.65 |
| | MRU 11 | | 8.24 | 7.57 | 8.03 | 7.61 |
| | MRU 12 | | 7.23 | 7.12 | 7.29 | 7.15 |
| | MRU 13 | | 6.63 | 7.52 | 6.92 | 7.27 |
| | MRU 14 | | 7.18 | 7.19 | 7.39 | 7.1 |
| | MRU 15 | | 7.85 | 8.02 | 8.09 | 8.24 |
| | MRU 16 | | 8.17 | 7.72 | 8.01 | 7.87 |
| | MRU 17 | | 6.82 | 7.09 | 7.3 | 7.09 |
| | MRU 18 | | 6.81 | 7.53 | 7.13 | 7.35 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.88 | 7.53 | 7.24 | 7.74 | 7.34 |
| | MRU 2 | | 7.47 | 7.16 | 7.59 | 7.29 |
| | MRU 3 | | 7.7 | 7.07 | 7.7 | 7.44 |
| | MRU 4 | | 7.37 | 7.37 | 7.55 | 7.53 |
| | MRU 5 | | 7.38 | 6.94 | 7.6 | 7.46 |
| | MRU 6 | | 7.38 | 7.41 | 7.5 | 7.55 |
| | MRU 7 | | 7.44 | 7.03 | 7.61 | 7.46 |
| | MRU 8 | | 7.37 | 7.37 | 7.55 | 7.53 |
| | MRU 9 | | 7.53 | 7.24 | 7.74 | 7.34 |
| | MRU 10 | | 7.63 | 7.39 | 7.88 | 7.76 |
| | MRU 11 | | 7.54 | 7.3 | 7.74 | 7.35 |
| | MRU 12 | | 7.63 | 7.27 | 7.66 | 7.46 |

In an eighth implementation, the parameters (15) and (16) are based on the LTF sequence corresponding to Table 8. An LTF sequence corresponding to the first 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (15) or (16) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 16 below.

Table 16

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.55 | 8.45 | 8.49 | 8.52 | 8.55 |
| 5×996-tone (FIG. 6(b)) | MRU 1 | 9.8 | 7.57 | 7.4 | 7.66 | 7.69 |
| | MRU 2 | | 7.64 | 7.73 | 8.1 | 8.29 |
| | MRU 3 | | 7.67 | 7.98 | 7.81 | 7.9 |
| | MRU 4 | | 8.89 | 8.8 | 8.91 | 8.59 |
| | MRU 5 | | 9.04 | 9.64 | 9.48 | 9.8 |
| | MRU 6 | | 6.94 | 7.09 | 7.12 | 7.19 |
| 4×996-tone (FIG. 6(c)) | MRU 1 | 9.11 | 9.01 | 8.88 | 9.04 | 9.11 |
| | MRU 2 | | 7.62 | 7.5 | 7.71 | 7.68 |
| 3×996-tone (FIG. 6(d)) | MRU 1 | 8.15 | 7.58 | 7.96 | 8 | 8.13 |
| | MRU 2 | | 8.04 | 8 | 8.09 | 7.87 |
| | MRU 3 | | 8.01 | 7.97 | 8.07 | 7.87 |
| | MRU 4 | | 7.93 | 7.6 | 7.91 | 7.95 |
| | MRU 5 | | 7.95 | 7.76 | 8.05 | 8.15 |
| | MRU 6 | | 7.47 | 7.28 | 7.49 | 7.5 |
| | MRU 7 | | 7.42 | 7.88 | 7.47 | 7.8 |
| 2×996-tone (FIG. 6(e)) | MRU 1 | 8.51 | 8.23 | 8.32 | 8.39 | 8.51 |
| | MRU 2 | | 8.2 | 8.38 | 8.38 | 8.33 |
| | MRU 3 | | 6 | 6.07 | 6.08 | 6.21 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.67 | 8.2 | 7.79 | 8.24 | 7.87 |
| | MRU 2 | | 7.74 | 8.02 | 7.86 | 7.95 |
| | MRU 3 | | 8.3 | 8.09 | 8.29 | 8.18 |
| | MRU 4 | | 8.06 | 8.12 | 8.46 | 8.67 |
| | MRU 5 | | 8.58 | 8.55 | 8.62 | 8.5 |
| | MRU 6 | | 7.74 | 7.9 | 7.79 | 7.97 |
| | MRU 7 | | 8.45 | 8.18 | 8.38 | 8.06 |
| | MRU 8 | | 8.95 | 8.76 | 8.97 | 8.63 |
| | MRU 9 | | 9.12 | 9.47 | 9.4 | 9.67 |
| | MRU 10 | | 8.08 | 8.34 | 8.24 | 8.52 |
| | MRU 11 | | 8.3 | 8.09 | 8.29 | 8.18 |
| | MRU 12 | | 7.22 | 7.6 | 7.36 | 7.59 |
| 3×996+484-tone (FIG. 6(f)) | MRU 1 | 9.43 | 9.03 | 9.02 | 9.12 | 9.08 |
| | MRU 2 | | 7.93 | 8.11 | 8.1 | 8.06 |
| | MRU 3 | | 9.06 | 9.08 | 9.22 | 9.19 |
| | MRU 4 | | 7.3 | 7.81 | 7.44 | 7.69 |
| | MRU 5 | | 9.42 | 9.21 | 9.43 | 9.12 |
| | MRU 6 | | 7.32 | 7.43 | 7.45 | 7.74 |
| | MRU 7 | | 9.3 | 9.05 | 9.27 | 9.12 |
| | MRU 8 | | 8.04 | 8.11 | 8.24 | 8.24 |
| | MRU 9 | | 6.89 | 6.83 | 7.07 | 7.03 |
| | MRU 10 | | 7.36 | 7.36 | 7.62 | 7.71 |
| | MRU 11 | | 8.17 | 8.21 | 8.49 | 8.71 |
| | MRU 12 | | 6.55 | 6.98 | 6.68 | 6.85 |
| | MRU 13 | | 7.08 | 7.2 | 7.29 | 7.53 |
| | MRU 14 | | 7.05 | 6.79 | 7.12 | 7.04 |
| | MRU 15 | | 7.97 | 8.48 | 8.34 | 8.5 |
| | MRU 16 | | 7.4 | 7.72 | 7.59 | 7.62 |
| 2×996+484-tone (FIG. 6(g)) | MRU 1 | 9.62 | 7.89 | 7.46 | 7.82 | 7.51 |
| | MRU 2 | | 6.98 | 7.04 | 7.21 | 7.13 |
| | MRU 3 | | 8.09 | 7.61 | 8.04 | 7.72 |
| | MRU 4 | | 6.04 | 6.46 | 6.54 | 6.65 |
| | MRU 5 | | 9.54 | 9.12 | 9.62 | 9.48 |
| | MRU 6 | | 7.15 | 7.11 | 7.37 | 7.48 |
| | MRU 7 | | 9.46 | 9.25 | 9.58 | 9.3 |
| | MRU 8 | | 7.26 | 6.69 | 7.16 | 6.92 |
| | MRU 9 | | 8.09 | 7.61 | 8.04 | 7.72 |
| | MRU 10 | | 5.81 | 5.8 | 5.84 | 6.16 |
| | MRU 11 | | 7.9 | 7.46 | 7.77 | 7.58 |
| | MRU 12 | | 6.55 | 6.92 | 6.99 | 6.85 |
| | MRU 13 | | 7.01 | 6.94 | 7.24 | 7.38 |
| | MRU 14 | | 6.87 | 7.1 | 7.23 | 7.37 |
| | MRU 15 | | 7.85 | 8.02 | 8.09 | 8.24 |
| | MRU 16 | | 7.94 | 8.58 | 8.14 | 8.46 |
| | MRU 17 | | 6.94 | 6.88 | 7.22 | 7.4 |
| | MRU 18 | | 7.03 | 6.93 | 7.33 | 7.47 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.67 | 7 | 7.71 | 7.45 |
| | MRU 2 | | 7.5 | 7.38 | 7.9 | 7.88 |
| | MRU 3 | | 7.7 | 7.07 | 7.7 | 7.44 |
| | MRU 4 | | 7.26 | 7.38 | 7.77 | 7.72 |
| | MRU 5 | | 7.53 | 7.24 | 7.74 | 7.34 |
| | MRU 6 | | 7.63 | 7.39 | 7.88 | 7.76 |
| | MRU 7 | | 7.54 | 7.3 | 7.74 | 7.35 |
| | MRU 8 | | 7.63 | 7.27 | 7.66 | 7.46 |
| | MRU 9 | | 7.67 | 7 | 7.71 | 7.45 |
| | MRU 10 | | 7.38 | 7.41 | 7.5 | 7.55 |
| | MRU 11 | | 7.54 | 7.3 | 7.74 | 7.35 |
| | MRU 12 | | 7.4 | 7.19 | 7.57 | 7.3 |

In a ninth implementation, the parameters (17) and (18) are based on the LTF sequence corresponding to Table 1. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (17) or (18) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 17 below.

Table 17

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 7.97 | 7.86 | 7.78 | 7.79 | 7.97 |
| 5×996-tone (FIG. 6(b)) | MRU 1 | 8.6 | 7.02 | 7.38 | 7.18 | 7.39 |
| | MRU 2 | | 7.28 | 7.2 | 7.56 | 7.5 |
| | MRU 3 | | 8.23 | 8.35 | 8.37 | 8.41 |
| | MRU 4 | | 8.1 | 8.51 | 8.21 | 8.6 |
| | MRU 5 | | 7.17 | 7.53 | 7.37 | 7.62 |
| | MRU 6 | | 7.16 | 7.17 | 7.5 | 7.4 |
| 4×996-tone (FIG. 6(c)) | MRU 1 | 6.18 | 5.77 | 5.96 | 6.07 | 6.18 |
| | MRU 2 | | 5.7 | 6.06 | 5.95 | 6.13 |
| 3×996-tone (FIG. 6(d)) | MRU 1 | 8.52 | 7.58 | 7.85 | 7.78 | 7.79 |
| | MRU 2 | | 7.93 | 7.96 | 7.91 | 8.11 |
| | MRU 3 | | 7.33 | 7.93 | 7.79 | 8.15 |
| | MRU 4 | | 7.83 | 7.52 | 7.83 | 7.79 |
| | MRU 5 | | 7.92 | 7.93 | 8.1 | 8.18 |
| | MRU 6 | | 7.97 | 7.8 | 8.05 | 8.15 |
| | MRU 7 | | 7.89 | 8.18 | 8.39 | 8.52 |
| 2×996-tone (FIG. 6(e)) | MRU 1 | 6.22 | 6.07 | 5.94 | 6.1 | 6.16 |
| | MRU 2 | | 5.94 | 6.05 | 6.11 | 6.22 |
| | MRU 3 | | 6.07 | 5.94 | 6.1 | 6.16 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.29 | 7.39 | 7.63 | 7.6 | 7.7 |
| | MRU 2 | | 8.25 | 7.8 | 8.24 | 8.2 |
| | MRU 3 | | 7.7 | 7.69 | 7.95 | 7.92 |
| | MRU 4 | | 7.8 | 7.95 | 7.97 | 7.95 |
| | MRU 5 | | 8.75 | 8.43 | 8.95 | 8.93 |
| | MRU 6 | | 8.26 | 8.64 | 8.45 | 8.63 |
| | MRU 7 | | 8.49 | 8.31 | 8.67 | 8.81 |
| | MRU 8 | | 8.48 | 9.23 | 8.87 | 9.29 |
| | MRU 9 | | 7.25 | 7.35 | 7.42 | 7.38 |
| | MRU 10 | | 8.05 | 7.56 | 7.89 | 7.79 |
| | MRU 11 | | 7.97 | 7.74 | 8.11 | 7.98 |
| | MRU 12 | | 8.03 | 8.02 | 7.97 | 8.05 |
| 3×996+484-tone (FIG. 6(f)) | MRU 1 | 8.63 | 7.51 | 8.1 | 7.99 | 7.98 |
| | MRU 2 | | 8.08 | 8.35 | 8.36 | 8.61 |
| | MRU 3 | | 7.08 | 6.81 | 6.97 | 6.91 |
| | MRU 4 | | 6.79 | 6.96 | 7.04 | 7.36 |
| | MRU 5 | | 8.05 | 8 | 7.86 | 8.01 |
| | MRU 6 | | 8.09 | 8.2 | 8.26 | 8.33 |
| | MRU 7 | | 7.13 | 7.55 | 7.35 | 7.91 |
| | MRU 8 | | 7.54 | 8.03 | 7.79 | 8.17 |
| | MRU 9 | | 7.33 | 7.4 | 7.3 | 7.48 |
| | MRU 10 | | 7.64 | 7.42 | 7.98 | 8.02 |
| | MRU 11 | | 7.73 | 8.41 | 8 | 8.41 |
| | MRU 12 | | 7.99 | 7.95 | 8.28 | 8.16 |
| | MRU 13 | | 6.93 | 7.26 | 6.87 | 7.28 |
| | MRU 14 | | 6.54 | 7 | 6.75 | 6.98 |
| | MRU 15 | | 7.87 | 8.03 | 8.53 | 8.63 |
| | MRU 16 | | 7.67 | 8.27 | 7.91 | 8.27 |
| 2×996+484-tone (FIG. 6(g)) | MRU 1 | 9.86 | 6.62 | 6.91 | 6.8 | 6.9 |
| | MRU 2 | | 7.15 | 7.12 | 7.05 | 7.09 |
| | MRU 3 | | 8.13 | 8.29 | 8.45 | 8.47 |
| | MRU 4 | | 7.89 | 8.19 | 8.26 | 8.4 |
| | MRU 5 | | 6.63 | 6.79 | 6.86 | 6.96 |
| | MRU 6 | | 6.55 | 6.92 | 6.99 | 6.85 |
| | MRU 7 | | 8.24 | 7.57 | 8.03 | 7.58 |
| | MRU 8 | | 7.78 | 7.92 | 8.22 | 8.31 |
| | MRU 9 | | 9.32 | 9.46 | 9.7 | 9.86 |
| | MRU 10 | | 9.55 | 9.03 | 9.54 | 9.39 |
| | MRU 11 | | 8.24 | 7.57 | 8.03 | 7.61 |
| | MRU 12 | | 7.75 | 7.93 | 8.22 | 8.31 |
| | MRU 13 | | 6.63 | 7.52 | 6.92 | 7.27 |
| | MRU 14 | | 9.58 | 9.06 | 9.67 | 9.36 |
| | MRU 15 | | 5.82 | 5.83 | 6.27 | 6.42 |
| | MRU 16 | | 8.32 | 7.59 | 8.3 | 7.95 |
| | MRU 17 | | 6.63 | 6.79 | 6.86 | 6.96 |
| | MRU 18 | | 8.32 | 7.62 | 8.3 | 7.97 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.88 | 7.53 | 7.24 | 7.74 | 7.34 |
| | MRU 2 | | 7.47 | 7.16 | 7.59 | 7.29 |
| | MRU 3 | | 7.7 | 7.07 | 7.7 | 7.44 |
| | MRU 4 | | 7.37 | 7.37 | 7.55 | 7.53 |
| | MRU 5 | | 7.64 | 7.34 | 7.65 | 7.71 |
| | MRU 6 | | 7.63 | 7.39 | 7.88 | 7.76 |
| | MRU 7 | | 7.44 | 7.03 | 7.61 | 7.46 |
| | MRU 8 | | 7.26 | 7.38 | 7.77 | 7.72 |
| | MRU 9 | | 7.53 | 7.24 | 7.74 | 7.34 |
| | MRU 10 | | 7.47 | 7.16 | 7.59 | 7.29 |
| | MRU 11 | | 7.7 | 7.07 | 7.7 | 7.44 |
| | MRU 12 | | 7.37 | 7.37 | 7.55 | 7.53 |

In a tenth implementation, the parameters (19) and (20) are based on the LTF sequence corresponding to Table 2. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (19) or (20) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 18 below.

Table 18

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.49 | 8.26 | 8.26 | 8.4 | 8.49 |
| 5×996-tone (FIG. 6(b)) | MRU 1 | 8.72 | 7.35 | 7.43 | 7.7 | 7.69 |
| | MRU 2 | | 7.3 | 7.64 | 7.37 | 7.68 |
| | MRU 3 | | 8.52 | 8.53 | 8.51 | 8.72 |
| | MRU 4 | | 8.48 | 8.45 | 8.38 | 8.59 |
| | MRU 5 | | 7.23 | 7.29 | 7.6 | 7.62 |
| | MRU 6 | | 7.3 | 7.73 | 7.57 | 7.82 |
| 4×996-tone (FIG. 6(c)) | MRU 1 | 6.27 | 5.76 | 6.02 | 6.11 | 6.27 |
| | MRU 2 | | 5.76 | 6.16 | 5.93 | 6.22 |
| 3×996-tone (FIG. 6(d)) | MRU 1 | 8.52 | 7.93 | 7.96 | 7.91 | 8.11 |
| | MRU 2 | | 7.36 | 7.93 | 7.79 | 8.15 |
| | MRU 3 | | 7.88 | 8.04 | 7.81 | 8.12 |
| | MRU 4 | | 7.89 | 8.18 | 8.39 | 8.52 |
| | MRU 5 | | 7.83 | 7.85 | 7.83 | 7.84 |
| | MRU 6 | | 7.76 | 7.93 | 8.1 | 8.18 |
| | MRU 7 | | 7.89 | 7.57 | 8.02 | 8.15 |
| 2×996-tone (FIG. 6(e)) | MRU 1 | 6.21 | 5.94 | 5.98 | 5.97 | 6.17 |
| | MRU 2 | | 6 | 6.07 | 6.08 | 6.21 |
| | MRU 3 | | 5.94 | 5.98 | 5.97 | 6.17 |
| 5×996+484- | MRU 1 | 9.11 | 8.49 | 8.04 | 8.35 | 8.04 |

(continued)

| RU/MRU type | RU/MRU pattern | Max PAPR (dB) | 0 degrees | 180 degrees | 60 degrees | 120 degrees |
|---|---|---|---|---|---|---|
| tone (FIG. 6(a)) | MRU 2 | | 8.39 | 8.48 | 8.78 | 8.9 |
| | MRU 3 | | 8.46 | 8.5 | 8.5 | 8.67 |
| | MRU 4 | | 8.26 | 8.25 | 8.55 | 8.55 |
| | MRU 5 | | 8.65 | 8.07 | 8.5 | 8.21 |
| | MRU 6 | | 8.44 | 8.85 | 8.87 | 9.11 |
| | MRU 7 | | 8.5 | 8.48 | 8.54 | 8.75 |
| | MRU 8 | | 8.18 | 8.3 | 8.19 | 8.47 |
| | MRU 9 | | 8.49 | 8.04 | 8.35 | 8.04 |
| | MRU 10 | | 8.39 | 8.48 | 8.78 | 8.9 |
| | MRU 11 | | 8.46 | 8.5 | 8.5 | 8.67 |
| | MRU 12 | | 8.26 | 8.25 | 8.55 | 8.55 |
| 3×996+484-tone (FIG. 6(f)) | MRU 1 | 8.63 | 7.7 | 7.23 | 7.81 | 7.64 |
| | MRU 2 | | 7.36 | 7.48 | 7.52 | 7.69 |
| | MRU 3 | | 8.05 | 7.95 | 7.94 | 8.01 |
| | MRU 4 | | 8.09 | 8.2 | 8.26 | 8.33 |
| | MRU 5 | | 6.6 | 7.08 | 7.18 | 7.45 |
| | MRU 6 | | 6.64 | 7.57 | 7.29 | 7.72 |
| | MRU 7 | | 7.58 | 8.1 | 7.99 | 7.98 |
| | MRU 8 | | 8.08 | 8.35 | 8.36 | 8.61 |
| | MRU 9 | | 7.79 | 8.03 | 8.53 | 8.63 |
| | MRU 10 | | 7.83 | 8.5 | 8.03 | 8.47 |
| | MRU 11 | | 6.76 | 7.04 | 6.88 | 7.2 |
| | MRU 12 | | 6.6 | 7.05 | 7.2 | 7.37 |
| | MRU 13 | | 7.78 | 8.43 | 8.11 | 8.41 |
| | MRU 14 | | 7.92 | 7.95 | 8.28 | 8.16 |
| | MRU 15 | | 7.67 | 7.66 | 7.65 | 7.77 |
| | MRU 16 | | 7.29 | 7.39 | 7.35 | 7.29 |
| 2×996+484-tone (FIG. 6(g)) | MRU 1 | 9.86 | 8.24 | 7.57 | 8.03 | 7.58 |
| | MRU 2 | | 7.78 | 7.92 | 8.22 | 8.31 |
| | MRU 3 | | 9.32 | 9.46 | 9.7 | 9.86 |
| | MRU 4 | | 9.55 | 9.03 | 9.54 | 9.39 |
| | MRU 5 | | 8.24 | 7.57 | 8.03 | 7.61 |
| | MRU 6 | | 7.75 | 7.93 | 8.22 | 8.31 |
| | MRU 7 | | 6.75 | 6.88 | 7.02 | 7.19 |
| | MRU 8 | | 6.98 | 6.95 | 7.31 | 7.41 |
| | MRU 9 | | 8.15 | 7.92 | 8.29 | 8.43 |
| | MRU 10 | | 8.46 | 8.44 | 8.49 | 8.65 |
| | MRU 11 | | 6.82 | 6.87 | 7.27 | 7.44 |
| | MRU 12 | | 6.73 | 7.16 | 6.93 | 7.24 |
| | MRU 13 | | 8.24 | 7.57 | 8.03 | 7.58 |
| | MRU 14 | | 7.78 | 7.92 | 8.22 | 8.31 |
| | MRU 15 | | 9.32 | 9.46 | 9.7 | 9.86 |
| | MRU 16 | | 9.55 | 9.03 | 9.54 | 9.39 |
| | MRU 17 | | 8.24 | 7.57 | 8.03 | 7.61 |
| | MRU 18 | | 7.75 | 7.93 | 8.22 | 8.31 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.38 | 6.94 | 7.6 | 7.46 |
| | MRU 2 | | 7.5 | 7.38 | 7.9 | 7.88 |
| | MRU 3 | | 7.63 | 7.41 | 7.65 | 7.76 |
| | MRU 4 | | 7.63 | 7.27 | 7.66 | 7.46 |
| | MRU 5 | | 7.67 | 7 | 7.71 | 7.45 |
| | MRU 6 | | 7.38 | 7.41 | 7.5 | 7.55 |
| | MRU 7 | | 7.54 | 7.3 | 7.74 | 7.35 |
| | MRU 8 | | 7.4 | 7.19 | 7.57 | 7.3 |
| | MRU 9 | | 7.38 | 6.94 | 7.6 | 7.46 |
| | MRU 10 | | 7.5 | 7.38 | 7.9 | 7.88 |
| | MRU 11 | | 7.63 | 7.41 | 7.65 | 7.76 |
| | MRU 12 | | 7.63 | 7.27 | 7.66 | 7.46 |

In an eleventh implementation, the parameters (21) and (22) are based on the LTF sequence corresponding to Table 3. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (21) or (22) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 19 below.

Table 19

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.67 | 8.53 | 8.44 | 8.57 | 8.67 |
| 5×996-tone (FIG. 6(b)) | MRU 1 | 9.23 | 7.91 | 8.09 | 8.35 | 8.43 |
| | MRU 2 | | 8.15 | 8.28 | 8.38 | 8.34 |
| | MRU 3 | | 8.52 | 8.53 | 8.51 | 8.72 |
| | MRU 4 | | 9.14 | 9.21 | 9.19 | 9.23 |
| | MRU 5 | | 7.87 | 7.95 | 8.28 | 8.32 |
| | MRU 6 | | 7.29 | 7.61 | 7.52 | 7.71 |
| 4×996-tone (FIG. 6(c)) | MRU 1 | 9.37 | 7.16 | 7.69 | 7.46 | 7.82 |
| | MRU 2 | | 9.03 | 9.31 | 9.26 | 9.37 |
| 3×996-tone (FIG. 6(d)) | MRU 1 | 10.34 | 7.79 | 7.98 | 8.1 | 8.18 |
| | MRU 2 | | 7.36 | 7.93 | 7.79 | 8.15 |
| | MRU 3 | | 7.97 | 8.18 | 8.42 | 8.52 |
| | MRU 4 | | 7.89 | 8.18 | 8.39 | 8.52 |
| | MRU 5 | | 7.66 | 7.67 | 7.7 | 7.78 |
| | MRU 6 | | 9.51 | 10.18 | 10.03 | 10.34 |
| | MRU 7 | | 7.57 | 7.78 | 7.83 | 7.69 |
| 2×996-tone (FIG. 6(e)) | MRU 1 | 8.68 | 5.94 | 5.98 | 5.97 | 6.17 |
| | MRU 2 | | 7.83 | 8.46 | 8.39 | 8.68 |
| | MRU 3 | | 5.94 | 5.98 | 5.97 | 6.17 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.46 | 7.84 | 7.69 | 7.77 | 7.73 |
| | MRU 2 | | 9.02 | 9.03 | 9.4 | 9.46 |
| | MRU 3 | | 7.97 | 8.22 | 8.28 | 8.4 |
| | MRU 4 | | 8.37 | 8.35 | 8.37 | 8.58 |
| | MRU 5 | | 8.23 | 8.42 | 8.25 | 8.44 |
| | MRU 6 | | 8.44 | 8.85 | 8.87 | 9.11 |
| | MRU 7 | | 8.57 | 8.72 | 8.74 | 8.95 |
| | MRU 8 | | 9.08 | 9.04 | 9.02 | 9.16 |
| | MRU 9 | | 7.84 | 7.69 | 7.77 | 7.72 |
| | MRU 10 | | 9.02 | 9.03 | 9.4 | 9.46 |
| | MRU 11 | | 7.83 | 8.1 | 8.16 | 8.29 |
| | MRU 12 | | 8.37 | 8.35 | 8.37 | 8.58 |
| 3×996+484-tone (FIG. 6(f)) | MRU 1 | 10.78 | 8.47 | 8.37 | 8.66 | 8.53 |
| | MRU 2 | | 7.61 | 7.5 | 7.73 | 7.84 |
| | MRU 3 | | 7.35 | 7.02 | 7.34 | 7.36 |
| | MRU 4 | | 6.58 | 6.78 | 6.64 | 6.7 |
| | MRU 5 | | 7.91 | 8.17 | 8.14 | 8.26 |
| | MRU 6 | | 6.64 | 7.57 | 7.29 | 7.72 |
| | MRU 7 | | 7.17 | 7.09 | 7.09 | 7.1 |
| | MRU 8 | | 6.86 | 7.3 | 7.08 | 7.21 |
| | MRU 9 | | 9.2 | 8.34 | 9.02 | 8.83 |
| | MRU 10 | | 7.83 | 8.5 | 8.03 | 8.47 |
| | MRU 11 | | 9.2 | 8.34 | 9.02 | 8.83 |
| | MRU 12 | | 7.61 | 8.27 | 7.91 | 8.27 |
| | MRU 13 | | 10.56 | 10.71 | 10.72 | 10.78 |
| | MRU 14 | | 7.83 | 8.38 | 8.08 | 8.35 |
| | MRU 15 | | 9.2 | 8.69 | 9.02 | 9.04 |
| | MRU 16 | | 7.59 | 8.27 | 7.91 | 8.27 |
| 2×996+484-tone (FIG. 6(g)) | MRU 1 | 9.86 | 7.16 | 7.31 | 7.38 | 7.27 |
| | MRU 2 | | 9.4 | 9.42 | 9.63 | 9.6 |
| | MRU 3 | | 5.96 | 5.85 | 6.32 | 6.42 |
| | MRU 4 | | 7.93 | 7.92 | 8.22 | 8.31 |
| | MRU 5 | | 6.89 | 6.98 | 7.08 | 7.13 |
| | MRU 6 | | 7.75 | 7.93 | 8.22 | 8.31 |
| | MRU 7 | | 7.15 | 7.04 | 7.26 | 7.43 |
| | MRU 8 | | 6.97 | 7.04 | 7.29 | 7.34 |
| | MRU 9 | | 8.13 | 8.29 | 8.45 | 8.47 |
| | MRU 10 | | 8.46 | 8.44 | 8.49 | 8.65 |
| | MRU 11 | | 7.19 | 6.87 | 7.16 | 7.18 |
| | MRU 12 | | 7.15 | 7.11 | 7.37 | 7.48 |
| | MRU 13 | | 8.24 | 7.57 | 8.03 | 7.58 |
| | MRU 14 | | 7.78 | 7.92 | 8.22 | 8.31 |
| | MRU 15 | | 9.32 | 9.46 | 9.7 | 9.86 |
| | MRU 16 | | 9.55 | 9.03 | 9.54 | 9.39 |
| | MRU 17 | | 8.24 | 7.57 | 8.03 | 7.61 |
| | MRU 18 | | 7.75 | 7.93 | 8.22 | 8.31 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.38 | 6.94 | 7.6 | 7.46 |
| | MRU 2 | | 7.5 | 7.38 | 7.9 | 7.88 |
| | MRU 3 | | 7.63 | 7.41 | 7.65 | 7.76 |
| | MRU 4 | | 7.63 | 7.27 | 7.66 | 7.46 |
| | MRU 5 | | 7.38 | 6.94 | 7.6 | 7.46 |
| | MRU 6 | | 7.38 | 7.41 | 7.5 | 7.55 |
| | MRU 7 | | 7.44 | 7.03 | 7.61 | 7.46 |
| | MRU 8 | | 7.37 | 7.37 | 7.55 | 7.53 |
| | MRU 9 | | 7.38 | 6.94 | 7.6 | 7.46 |
| | MRU 10 | | 7.5 | 7.38 | 7.9 | 7.88 |
| | MRU 11 | | 7.63 | 7.41 | 7.65 | 7.76 |
| | MRU 12 | | 7.63 | 7.27 | 7.66 | 7.46 |

In a twelfth implementation, the parameters (23) and (24) are based on the LTF sequence corresponding to Table 4. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (23) or (24) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 20 below.

Table 20

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.45 | 8.32 | 8.18 | 8.36 | 8.45 |
| 5×996-tone (FIG. 6(b)) | MRU 1 | 9.16 | 9.01 | 8.72 | 8.96 | 9.01 |
| | MRU 2 | | 8.09 | 8.06 | 8.42 | 8.4 |
| | MRU 3 | | 8.53 | 8.43 | 8.44 | 8.58 |
| | MRU 4 | | 8.55 | 8.02 | 8.45 | 8.32 |
| | MRU 5 | | 8.08 | 8.28 | 8.26 | 8.45 |
| | MRU 6 | | 8.32 | 8.96 | 8.81 | 9.16 |
| 4×996-tone (FIG. 6(c)) | MRU 1 | 7.79 | 7.1 | 7.25 | 7.4 | 7.54 |
| | MRU 2 | | 7.29 | 7.39 | 7.62 | 7.79 |
| 3×996-tone (FIG. 6(d)) | MRU 1 | 8.15 | 7.85 | 7.82 | 7.89 | 7.97 |
| | MRU 2 | | 7.36 | 7.93 | 7.79 | 8.15 |
| | MRU 3 | | 7.64 | 7.41 | 7.89 | 7.78 |
| | MRU 4 | | 7.57 | 7.78 | 7.83 | 7.69 |
| | MRU 5 | | 7.58 | 7.85 | 7.78 | 7.79 |
| | MRU 6 | | 8.04 | 8 | 8.09 | 7.87 |
| | MRU 7 | | 7.98 | 7.61 | 7.84 | 7.89 |
| 2×996-tone (FIG. 6(e)) | MRU 1 | 8.51 | 5.94 | 5.98 | 5.97 | 6.17 |
| | MRU 2 | | 8.23 | 8.32 | 8.39 | 8.51 |
| | MRU 3 | | 5.94 | 6.05 | 6.11 | 6.22 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.4 | 8.73 | 8.8 | 8.85 | 8.86 |
| | MRU 2 | | 8.75 | 9.02 | 9.29 | 9.48 |
| | MRU 3 | | 8.46 | 8.05 | 8.21 | 8.28 |
| | MRU 4 | | 8.49 | 8.51 | 8.9 | 8.91 |
| | MRU 5 | | 8.64 | 8.53 | 8.72 | 8.8 |
| | MRU 6 | | 8.19 | 7.99 | 8.19 | 8.21 |
| | MRU 7 | | 8.56 | 8.21 | 8.45 | 8.57 |
| | MRU 8 | | 8.33 | 8.28 | 8.69 | 8.67 |
| | MRU 9 | | 8.42 | 7.84 | 8.12 | 8.16 |
| | MRU 10 | | 8.32 | 8.12 | 8.22 | 8.29 |
| | MRU 11 | | 8.59 | 8.75 | 8.72 | 8.9 |
| | MRU 12 | | 8.65 | 8.85 | 8.9 | 9.08 |
| 3×996+484-tone (FIG. 6(f)) | MRU 1 | 8.9 | 7.43 | 7.6 | 7.75 | 7.77 |
| | MRU 2 | | 8.71 | 8.38 | 8.83 | 8.9 |
| | MRU 3 | | 6.33 | 6.75 | 6.58 | 6.8 |
| | MRU 4 | | 7.33 | 7.51 | 7.88 | 7.96 |
| | MRU 5 | | 6.6 | 7.08 | 7.18 | 7.45 |
| | MRU 6 | | 7.68 | 8.17 | 7.9 | 8.23 |
| | MRU 7 | | 7.16 | 7.28 | 7.48 | 7.53 |
| | MRU 8 | | 7.08 | 7.09 | 7.33 | 7.44 |
| | MRU 9 | | 7.14 | 7.23 | 7.38 | 7.43 |
| | MRU 10 | | 6.98 | 6.75 | 7.16 | 7.22 |
| | MRU 11 | | 7.08 | 6.81 | 6.97 | 6.91 |
| | MRU 12 | | 7.73 | 8.27 | 8.15 | 8.39 |
| | MRU 13 | | 6.28 | 6.88 | 6.97 | 7.29 |
| | MRU 14 | | 7.32 | 7.43 | 7.45 | 7.74 |
| | MRU 15 | | 7.48 | 7.45 | 7.59 | 7.67 |
| | MRU 16 | | 8.86 | 8.34 | 8.74 | 8.69 |
| 2×996+484-tone (FIG. 6(g)) | MRU 1 | 9.86 | 9.25 | 9.19 | 9.41 | 9.38 |
| | MRU 2 | | 6.97 | 7.04 | 7.29 | 7.34 |
| | MRU 3 | | 8.24 | 7.57 | 8.03 | 7.93 |
| | MRU 4 | | 6.04 | 6.28 | 6.54 | 6.65 |
| | MRU 5 | | 8.24 | 7.57 | 8.03 | 7.61 |
| | MRU 6 | | 7.23 | 7.12 | 7.29 | 7.15 |
| | MRU 7 | | 7.16 | 7.31 | 7.38 | 7.27 |
| | MRU 8 | | 7.39 | 7.36 | 7.27 | 7.56 |
| | MRU 9 | | 8.15 | 7.92 | 8.29 | 8.43 |
| | MRU 10 | | 7.89 | 8.19 | 8.26 | 8.4 |
| | MRU 11 | | 7.08 | 7.18 | 7.4 | 7.44 |
| | MRU 12 | | 7.52 | 7.24 | 7.45 | 7.54 |
| | MRU 13 | | 9.32 | 9.46 | 9.7 | 9.86 |
| | MRU 14 | | 7.18 | 7.19 | 7.39 | 7.1 |
| | MRU 15 | | 8.24 | 7.57 | 8.03 | 7.88 |
| | MRU 16 | | 6.04 | 6.46 | 6.54 | 6.65 |
| | MRU 17 | | 8.24 | 7.57 | 8.03 | 7.72 |
| | MRU 18 | | 6.73 | 7.16 | 6.93 | 7.24 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.9 | 7.38 | 6.94 | 7.6 | 7.46 |
| | MRU 2 | | 7.5 | 7.38 | 7.9 | 7.88 |
| | MRU 3 | | 7.63 | 7.41 | 7.65 | 7.76 |
| | MRU 4 | | 7.63 | 7.27 | 7.66 | 7.46 |
| | MRU 5 | | 7.67 | 7 | 7.71 | 7.45 |
| | MRU 6 | | 7.5 | 7.38 | 7.9 | 7.88 |
| | MRU 7 | | 7.7 | 7.07 | 7.7 | 7.44 |
| | MRU 8 | | 7.26 | 7.38 | 7.77 | 7.72 |
| | MRU 9 | | 7.64 | 7.34 | 7.65 | 7.71 |
| | MRU 10 | | 7.63 | 7.39 | 7.88 | 7.76 |
| | MRU 11 | | 7.44 | 7.03 | 7.61 | 7.46 |
| | MRU 12 | | 7.26 | 7.3 | 7.77 | 7.72 |

In a thirteenth implementation, the parameters (25) and (26) are based on the LTF sequence corresponding to Table 5. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (25) or (26) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 21 below.

Table 21

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.61 | 8.18 | 8.45 | 8.38 | 8.61 |
| 5×996-tone (FIG. 6(b)) | MRU 1 | 8.92 | 6.94 | 7.2 | 7.12 | 7.2 |
| | MRU 2 | | 8.35 | 8.54 | 8.68 | 8.87 |
| | MRU 3 | | 8.44 | 8.74 | 8.74 | 8.91 |
| | MRU 4 | | 7.76 | 8.04 | 8.2 | 8.35 |
| | MRU 5 | | 8.61 | 8.84 | 8.74 | 8.92 |
| | MRU 6 | | 8.46 | 8.51 | 8.55 | 8.69 |
| 4×996-tone (FIG. 6(c)) | MRU 1 | 8.83 | 8.07 | 8.33 | 8.41 | 8.55 |
| | MRU 2 | | 8.61 | 8.55 | 8.83 | 8.83 |
| 3×996-tone (FIG. 6(d)) | MRU 1 | 8.26 | 7.47 | 8.04 | 7.8 | 8.17 |
| | MRU 2 | | 7.83 | 7.79 | 7.9 | 7.84 |
| | MRU 3 | | 7.33 | 7.93 | 7.79 | 8.15 |
| | MRU 4 | | 7.69 | 7.96 | 7.98 | 8.13 |
| | MRU 5 | | 7.9 | 7.82 | 8.09 | 8.26 |
| | MRU 6 | | 7.6 | 7.57 | 7.82 | 7.87 |
| | MRU 7 | | 7.52 | 7.99 | 7.95 | 8.14 |
| 2×996-tone (FIG. 6(e)) | MRU 1 | 6.21 | 6.07 | 5.94 | 6.1 | 6.16 |
| | MRU 2 | | 6.07 | 5.94 | 6.1 | 6.16 |
| | MRU 3 | | 6 | 6.07 | 6.08 | 6.21 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.34 | 7.74 | 8.01 | 7.83 | 8.12 |
| | MRU 2 | | 8.22 | 8.31 | 8.49 | 8.56 |
| | MRU 3 | | 7.79 | 8.26 | 8.2 | 8.41 |
| | MRU 4 | | 8.61 | 8.75 | 8.8 | 9.05 |
| | MRU 5 | | 7.95 | 8.18 | 8.39 | 8.5 |
| | MRU 6 | | 8.29 | 8.47 | 8.67 | 8.76 |
| | MRU 7 | | 8.03 | 7.66 | 8.02 | 7.8 |
| | MRU 8 | | 8.67 | 8.77 | 8.91 | 9.12 |
| | MRU 9 | | 7.87 | 8.06 | 8.08 | 8.32 |
| | MRU 10 | | 8.7 | 9.19 | 9 | 9.34 |
| | MRU 11 | | 7.93 | 8.28 | 8.28 | 8.46 |
| | MRU 12 | | 8.5 | 8.26 | 8.9 | 8.84 |
| 3×996+484-tone (FIG. 6(f)) | MRU 1 | 9.23 | 8.21 | 8.22 | 8.43 | 8.32 |
| | MRU 2 | | 8.7 | 8.07 | 8.74 | 8.57 |
| | MRU 3 | | 7.86 | 8.27 | 8.12 | 8.28 |
| | MRU 4 | | 7.56 | 8.1 | 7.9 | 8.17 |
| | MRU 5 | | 7.84 | 7.84 | 8.24 | 8.05 |
| | MRU 6 | | 8.18 | 7.79 | 8.18 | 8.16 |
| | MRU 7 | | 8.08 | 8.57 | 8.39 | 8.66 |
| | MRU 8 | | 7.96 | 8.44 | 8.25 | 8.48 |
| | MRU 9 | | 9.03 | 9.05 | 9.15 | 9.12 |
| | MRU 10 | | 7.06 | 6.65 | 7.21 | 7.07 |
| | MRU 11 | | 9.22 | 8.88 | 9.23 | 9.12 |
| | MRU 12 | | 8.05 | 8.25 | 8.44 | 8.7 |
| | MRU 13 | | 9.22 | 8.88 | 9.23 | 9.12 |
| | MRU 14 | | 7.53 | 8 | 8.01 | 8.29 |
| | MRU 15 | | 9.03 | 9.02 | 9.12 | 9.11 |
| | MRU 16 | | 6.98 | 6.51 | 6.99 | 6.93 |
| 2×996+484-tone (FIG. 6(g)) | MRU 1 | 8.58 | 6.62 | 6.91 | 6.8 | 6.9 |
| | MRU 2 | | 7.15 | 7.12 | 7.05 | 7.09 |
| | MRU 3 | | 8.13 | 8.29 | 8.45 | 8.47 |
| | MRU 4 | | 7.89 | 8.19 | 8.26 | 8.4 |
| | MRU 5 | | 6.63 | 6.79 | 6.86 | 6.96 |
| | MRU 6 | | 6.55 | 6.92 | 6.99 | 6.85 |
| | MRU 7 | | 6.85 | 6.97 | 7.03 | 7.08 |
| | MRU 8 | | 6.98 | 7.04 | 7.21 | 7.13 |
| | MRU 9 | | 7.86 | 8.3 | 8.22 | 8.04 |
| | MRU 10 | | 8.17 | 7.72 | 8.01 | 7.87 |
| | MRU 11 | | 6.89 | 6.98 | 7.08 | 7.13 |
| | MRU 12 | | 7.23 | 7.12 | 7.29 | 7.15 |
| | MRU 13 | | 7.01 | 6.94 | 7.24 | 7.38 |
| | MRU 14 | | 6.87 | 7.1 | 7.23 | 7.37 |
| | MRU 15 | | 7.85 | 8.02 | 8.09 | 8.24 |
| | MRU 16 | | 7.94 | 8.58 | 8.14 | 8.46 |
| | MRU 17 | | 6.94 | 6.88 | 7.22 | 7.4 |
| | MRU 18 | | 7.03 | 6.93 | 7.33 | 7.47 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.74 | 7.53 | 7.24 | 7.74 | 7.34 |
| | MRU 2 | | 7.47 | 7.16 | 7.59 | 7.29 |
| | MRU 3 | | 7.7 | 7.07 | 7.7 | 7.44 |
| | MRU 4 | | 7.37 | 7.37 | 7.55 | 7.53 |
| | MRU 5 | | 7.53 | 7.24 | 7.74 | 7.34 |
| | MRU 6 | | 7.47 | 7.16 | 7.59 | 7.29 |
| | MRU 7 | | 7.7 | 7.07 | 7.7 | 7.44 |
| | MRU 8 | | 7.37 | 7.37 | 7.55 | 7.53 |
| | MRU 9 | | 7.67 | 7 | 7.71 | 7.45 |
| | MRU 10 | | 7.38 | 7.41 | 7.5 | 7.55 |
| | MRU 11 | | 7.54 | 7.3 | 7.74 | 7.35 |
| | MRU 12 | | 7.4 | 7.19 | 7.57 | 7.3 |

In a fourteenth implementation, the parameters (27) and (28) are based on the LTF sequence corresponding to Table 6. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (27) or (28) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 22 below.

Table 22

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 9.26 | 9.03 | 9.26 | 9.02 | 9.21 |
| 5×996-tone (FIG. 6(b)) | MRU 1 | 9.81 | 9.35 | 9.81 | 9.4 | 9.74 |
| | MRU 2 | | 8.6 | 8.77 | 8.91 | 8.84 |
| | MRU 3 | | 9.21 | 9.12 | 9.32 | 9.33 |
| | MRU 4 | | 8.05 | 8.18 | 8.1 | 8.07 |
| | MRU 5 | | 8.9 | 9.2 | 8.97 | 9.05 |
| | MRU 6 | | 8.94 | 8.64 | 9.04 | 9.07 |
| 4×996-tone (FIG. 6(c)) | MRU 1 | 9.2 | 7.32 | 7.31 | 7.42 | 7.59 |
| | MRU 2 | | 8.93 | 9.2 | 9.05 | 9.11 |
| 3×996-tone (FIG. 6(d)) | MRU 1 | 9.16 | 7.58 | 7.96 | 8 | 8.13 |
| | MRU 2 | | 7.97 | 7.8 | 8.05 | 8.15 |
| | MRU 3 | | 7.88 | 8.21 | 7.89 | 8.26 |
| | MRU 4 | | 7.42 | 7.88 | 7.47 | 7.8 |
| | MRU 5 | | 8.9 | 9.16 | 9.02 | 9.05 |
| | MRU 6 | | 8.9 | 9.16 | 9.02 | 9.05 |
| | MRU 7 | | 7.42 | 7.88 | 7.47 | 7.8 |
| 2×996-tone (FIG. 6(e)) | MRU 1 | 8.38 | 5.94 | 6.05 | 6.11 | 6.22 |
| | MRU 2 | | 8.2 | 8.38 | 8.38 | 8.33 |
| | MRU 3 | | 8.2 | 8.38 | 8.38 | 8.33 |
| 5×996+484- | MRU 1 | 10.16 | 8.89 | 9.02 | 9.02 | 9.2 |

(continued)

| RU/MRU type | RU/MRU pattern | Max PAPR (dB) | 0 degrees | 180 degrees | 60 degrees | 120 degrees |
|---|---|---|---|---|---|---|
| tone (FIG. 6(a)) | MRU 2 | | 9.82 | 10.16 | 9.97 | 10.05 |
| | MRU 3 | | 8.61 | 8.84 | 8.7 | 8.65 |
| | MRU 4 | | 8.66 | 8.75 | 8.78 | 9.02 |
| | MRU 5 | | 8.65 | 9.17 | 8.73 | 9.14 |
| | MRU 6 | | 9.53 | 9.21 | 9.68 | 9.55 |
| | MRU 7 | | 8.57 | 8.47 | 8.73 | 8.86 |
| | MRU 8 | | 8.66 | 8.5 | 8.67 | 8.67 |
| | MRU 9 | | 8.42 | 9.11 | 8.68 | 9.11 |
| | MRU 10 | | 9.32 | 9.3 | 9.5 | 9.48 |
| | MRU 11 | | 8.99 | 8.85 | 9.23 | 9.38 |
| | MRU 12 | | 8.66 | 8.5 | 8.6 | 8.67 |
| 3×996+484-tone (FIG. 6(f)) | MRU 1 | 9.49 | 7.31 | 7.32 | 7.63 | 7.79 |
| | MRU 2 | | 8.31 | 8.4 | 8.58 | 8.53 |
| | MRU 3 | | 6.75 | 6.59 | 6.86 | 6.88 |
| | MRU 4 | | 7.3 | 7.81 | 7.44 | 7.69 |
| | MRU 5 | | 6.93 | 7.26 | 6.87 | 7.28 |
| | MRU 6 | | 8.28 | 8.06 | 8.44 | 8.49 |
| | MRU 7 | | 7.21 | 7.49 | 7.67 | 7.9 |
| | MRU 8 | | 7.13 | 7.02 | 7.28 | 7.22 |
| | MRU 9 | | 8.11 | 8.57 | 8.22 | 8.35 |
| | MRU 10 | | 8.31 | 8.4 | 8.58 | 8.53 |
| | MRU 11 | | 8.7 | 9.15 | 9.06 | 9.25 |
| | MRU 12 | | 9.31 | 8.73 | 9.18 | 8.93 |
| | MRU 13 | | 9 | 9.13 | 9.27 | 9.13 |
| | MRU 14 | | 8.88 | 9.49 | 9.09 | 9.35 |
| | MRU 15 | | 7.97 | 8.48 | 8.34 | 8.5 |
| | MRU 16 | | 8.51 | 8.14 | 8.58 | 8.45 |
| 2×996+484-tone (FIG. 6(g)) | MRU 1 | 9.86 | 9.32 | 9.46 | 9.7 | 9.86 |
| | MRU 2 | | 7.18 | 7.19 | 7.39 | 7.1 |
| | MRU 3 | | 8.24 | 7.57 | 8.03 | 7.88 |
| | MRU 4 | | 6.04 | 6.46 | 6.54 | 6.65 |
| | MRU 5 | | 8.24 | 7.57 | 8.03 | 7.72 |
| | MRU 6 | | 6.73 | 7.16 | 6.93 | 7.24 |
| | MRU 7 | | 6.85 | 7.03 | 7.02 | 7.19 |
| | MRU 8 | | 7.26 | 6.69 | 7.16 | 6.92 |
| | MRU 9 | | 7.86 | 8.3 | 8.22 | 8.04 |
| | MRU 10 | | 7.94 | 8.58 | 8.14 | 8.46 |
| | MRU 11 | | 7.02 | 7.02 | 7.25 | 7.39 |
| | MRU 12 | | 7.1 | 6.94 | 7.03 | 6.96 |
| | MRU 13 | | 6.63 | 7.52 | 6.92 | 7.27 |
| | MRU 14 | | 7.18 | 7.19 | 7.39 | 7.1 |
| | MRU 15 | | 7.85 | 8.02 | 8.09 | 8.24 |
| | MRU 16 | | 8.17 | 7.72 | 8.01 | 7.87 |
| | MRU 17 | | 6.82 | 7.09 | 7.3 | 7.09 |
| | MRU 18 | | 6.81 | 7.53 | 7.13 | 7.35 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.88 | 7.64 | 7.34 | 7.65 | 7.71 |
| | MRU 2 | | 7.63 | 7.39 | 7.88 | 7.76 |
| | MRU 3 | | 7.44 | 7.03 | 7.61 | 7.46 |
| | MRU 4 | | 7.26 | 7.38 | 7.77 | 7.72 |
| | MRU 5 | | 7.53 | 7.24 | 7.74 | 7.34 |
| | MRU 6 | | 7.63 | 7.39 | 7.88 | 7.76 |
| | MRU 7 | | 7.54 | 7.3 | 7.74 | 7.35 |
| | MRU 8 | | 7.63 | 7.27 | 7.66 | 7.46 |
| | MRU 9 | | 7.53 | 7.24 | 7.74 | 7.34 |
| | MRU 10 | | 7.63 | 7.39 | 7.88 | 7.76 |
| | MRU 11 | | 7.54 | 7.3 | 7.74 | 7.35 |
| | MRU 12 | | 7.63 | 7.27 | 7.66 | 7.46 |

In a fifteenth implementation, the parameters (29) and (30) are based on the LTF sequence corresponding to Table 7. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (29) or (30) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 23 below.

Table 23

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.81 | 8.4 | 8.17 | 8.64 | 8.81 |
| 5×996-tone (FIG. 6(b)) | MRU 1 | 9.81 | 8.88 | 8.77 | 9.21 | 9.39 |
| | MRU 2 | | 8.71 | 8.48 | 8.69 | 8.57 |
| | MRU 3 | | 8.08 | 8.29 | 8.41 | 8.64 |
| | MRU 4 | | 9.81 | 9.19 | 9.6 | 9.46 |
| | MRU 5 | | 7.73 | 7.88 | 7.78 | 7.76 |
| | MRU 6 | | 7.29 | 7.97 | 7.82 | 8.12 |
| 4×996-tone (FIG. 6(c)) | MRU 1 | 8.74 | 5.8 | 5.74 | 5.88 | 6.1 |
| | MRU 2 | | 8.2 | 8.64 | 8.32 | 8.74 |
| 3×996-tone (FIG. 6(d)) | MRU 1 | 9.1 | 7.58 | 7.96 | 8 | 8.13 |
| | MRU 2 | | 7.76 | 8.02 | 8.1 | 8.18 |
| | MRU 3 | | 7.57 | 7.78 | 7.83 | 7.69 |
| | MRU 4 | | 7.89 | 7.57 | 8.02 | 8.15 |
| | MRU 5 | | 7.88 | 8.04 | 7.81 | 8.12 |
| | MRU 6 | | 8.9 | 9.16 | 9.02 | 9.05 |
| | MRU 7 | | 7.69 | 7.96 | 7.98 | 8.13 |
| 2×996-tone (FIG. 6(e)) | MRU 1 | 8.68 | 7.83 | 8.46 | 8.39 | 8.68 |
| | MRU 2 | | 8.2 | 8.38 | 8.38 | 8.33 |
| | MRU 3 | | 5.94 | 6.05 | 6.11 | 6.22 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.71 | 7.59 | 7.73 | 7.78 | 8 |
| | MRU 2 | | 9.33 | 9.17 | 9.53 | 9.71 |
| | MRU 3 | | 8.97 | 8.73 | 9.03 | 9.12 |
| | MRU 4 | | 8.32 | 8.41 | 8.48 | 8.53 |
| | MRU 5 | | 8.59 | 8.74 | 8.75 | 8.81 |
| | MRU 6 | | 8.7 | 8.86 | 9.17 | 9.3 |
| | MRU 7 | | 8.14 | 7.98 | 8.45 | 8.59 |
| | MRU 8 | | 9.34 | 9.5 | 9.37 | 9.4 |
| | MRU 9 | | 7.76 | 7.62 | 7.89 | 8.08 |
| | MRU 10 | | 8.5 | 8.48 | 8.67 | 8.66 |
| | MRU 11 | | 8.59 | 8.74 | 8.75 | 8.81 |
| | MRU 12 | | 8.26 | 7.9 | 8.25 | 8.16 |
| 3×996+484-tone (FIG. 6(f)) | MRU 1 | 9.49 | 7.51 | 8.12 | 7.99 | 7.99 |
| | MRU 2 | | 7.29 | 7.33 | 7.39 | 7.45 |
| | MRU 3 | | 6.75 | 6.59 | 6.86 | 6.88 |
| | MRU 4 | | 8.09 | 8.2 | 8.27 | 8.33 |
| | MRU 5 | | 7.73 | 8.41 | 8 | 8.41 |
| | MRU 6 | | 6.32 | 6.78 | 6.71 | 6.83 |
| | MRU 7 | | 7.6 | 7.16 | 7.73 | 7.52 |
| | MRU 8 | | 7.59 | 8.27 | 7.91 | 8.27 |
| | MRU 9 | | 7.4 | 8.02 | 7.6 | 8 |
| | MRU 10 | | 8.46 | 8.14 | 8.65 | 8.71 |
| | MRU 11 | | 8.22 | 8.13 | 8.36 | 8.46 |
| | MRU 12 | | 7.85 | 7.58 | 7.89 | 7.82 |
| | MRU 13 | | 8.19 | 8.41 | 8.31 | 8.51 |
| | MRU 14 | | 8.88 | 9.49 | 9.09 | 9.35 |
| | MRU 15 | | 7.39 | 7.94 | 7.5 | 7.9 |
| | MRU 16 | | 8.16 | 8.37 | 8.32 | 8.31 |
| 2×996+484-tone (FIG. 6(g)) | MRU 1 | 9.86 | 8.24 | 7.57 | 8.03 | 7.58 |
| | MRU 2 | | 6.87 | 7.1 | 7.23 | 7.37 |
| | MRU 3 | | 8.24 | 7.57 | 8.03 | 7.88 |
| | MRU 4 | | 5.81 | 5.8 | 5.84 | 6.16 |
| | MRU 5 | | 9.25 | 9.23 | 9.45 | 9.4 |
| | MRU 6 | | 7.52 | 7.24 | 7.45 | 7.54 |
| | MRU 7 | | 6.85 | 7.03 | 7.02 | 7.19 |
| | MRU 8 | | 9.55 | 9.12 | 9.69 | 9.58 |
| | MRU 9 | | 5.95 | 6.26 | 6.12 | 6.16 |
| | MRU 10 | | 7.89 | 7.92 | 8.31 | 8.32 |
| | MRU 11 | | 6.82 | 6.87 | 7.27 | 7.44 |
| | MRU 12 | | 7.83 | 7.98 | 8.31 | 8.38 |
| | MRU 13 | | 9.32 | 9.46 | 9.7 | 9.86 |
| | MRU 14 | | 7.18 | 7.19 | 7.39 | 7.1 |
| | MRU 15 | | 8.24 | 7.57 | 8.03 | 7.88 |
| | MRU 16 | | 6.04 | 6.46 | 6.54 | 6.65 |
| | MRU 17 | | 8.24 | 7.57 | 8.03 | 7.72 |
| | MRU 18 | | 6.73 | 7.16 | 6.93 | 7.24 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.88 | 7.38 | 6.94 | 7.6 | 7.46 |
| | MRU 2 | | 7.38 | 7.41 | 7.5 | 7.55 |
| | MRU 3 | | 7.44 | 7.03 | 7.61 | 7.46 |
| | MRU 4 | | 7.37 | 7.37 | 7.55 | 7.53 |
| | MRU 5 | | 7.53 | 7.24 | 7.74 | 7.34 |
| | MRU 6 | | 7.63 | 7.39 | 7.88 | 7.76 |
| | MRU 7 | | 7.54 | 7.3 | 7.74 | 7.35 |
| | MRU 8 | | 7.63 | 7.27 | 7.66 | 7.46 |
| | MRU 9 | | 7.64 | 7.34 | 7.65 | 7.71 |
| | MRU 10 | | 7.63 | 7.39 | 7.88 | 7.76 |
| | MRU 11 | | 7.44 | 7.03 | 7.61 | 7.46 |
| | MRU 12 | | 7.2 | 7.38 | 7.77 | 7.72 |

In a sixteenth implementation, the parameters (31) and (32) are based on the LTF sequence corresponding to Table 8. An LTF sequence corresponding to the last 480 MHz is extracted and used as the LTF sequence of the 480 MHz PPDU. PAPR results of the 480 MHz RU/MRU at different pilot phase rotation angles (for example, 0 degrees, 180 degrees, 60 degrees, and 120 degrees) may be obtained based on the parameter (31) or (32) and the RU/MRU shown in FIG. 6(a) to FIG. 6(h). The PAPR results of the RU/MRU at different pilot phase rotation angles are in a one-to-one correspondence with the RU/MRU patterns shown in FIG. 6(a) to FIG. 6(h), as shown in Table 24 below.

Table 24

| RU/MRU type | RU/MRU pattern | Max PAPR (dB) | 0 degrees | 180 degrees | 60 degrees | 120 degrees |
|---|---|---|---|---|---|---|
| 6×996-tone (FIG. 6(a)) | MRU 1 | 8.32 | 7.8 | 8.02 | 8.09 | 8.32 |
| 5×996-tone (FIG. 6(b)) | MRU 1 | 8.65 | 7.24 | 7.2 | 7.32 | 7.34 |
| | MRU 2 | | 8.02 | 7.92 | 8.31 | 8.51 |
| | MRU 3 | | 7.68 | 7.4 | 7.57 | 7.5 |
| | MRU 4 | | 7.46 | 7.33 | 7.55 | 7.54 |
| | MRU 5 | | 8.32 | 8.54 | 8.46 | 8.65 |
| | MRU 6 | | 7.54 | 7.64 | 7.6 | 7.69 |
| 4×996-tone (FIG. 6(c)) | MRU 1 | 7.85 | 7.62 | 7.53 | 7.71 | 7.68 |
| | MRU 2 | | 7.27 | 7.45 | 7.67 | 7.85 |
| 3×996-tone (FIG. 6(d)) | MRU 1 | 8.15 | 7.95 | 7.76 | 8.05 | 8.15 |
| | MRU 2 | | 7.47 | 7.28 | 7.49 | 7.5 |
| | MRU 3 | | 7.42 | 7.88 | 7.47 | 7.8 |
| | MRU 4 | | 7.98 | 7.61 | 7.84 | 7.89 |
| | MRU 5 | | 7.69 | 7.6 | 7.96 | 7.9 |
| | MRU 6 | | 7.62 | 7.85 | 7.8 | 7.96 |
| | MRU 7 | | 7.72 | 7.7 | 7.82 | 7.87 |
| 2×996-tone (FIG. 6(e)) | MRU 1 | 8.68 | 8.2 | 8.38 | 8.38 | 8.33 |
| | MRU 2 | | 6 | 6.07 | 6.08 | 6.21 |
| | MRU 3 | | 7.83 | 8.46 | 8.39 | 8.68 |

(continued)

| RU/MRU type | RU/MRU pattern | Max PAPR (dB) | 0 degrees | 180 degrees | 60 degrees | 120 degrees |
|---|---|---|---|---|---|---|
| 5×996+484-tone (FIG. 6(a)) | MRU 1 | 9.3 | 7.75 | 7.43 | 7.7 | 7.6 |
| | MRU 2 | | 8 | 8.22 | 8.17 | 8.44 |
| | MRU 3 | | 8.4 | 8.49 | 8.75 | 9.03 |
| | MRU 4 | | 7.91 | 8.1 | 8.34 | 8.42 |
| | MRU 5 | | 7.92 | 7.53 | 7.89 | 7.77 |
| | MRU 6 | | 7.89 | 8.01 | 7.97 | 8.09 |
| | MRU 7 | | 8.12 | 8.01 | 8.23 | 8.36 |
| | MRU 8 | | 7.69 | 7.68 | 7.82 | 7.81 |
| | MRU 9 | | 7.76 | 7.81 | 7.69 | 7.78 |
| | MRU 10 | | 8.96 | 8.8 | 9.08 | 9.3 |
| | MRU 11 | | 8.5 | 8.26 | 8.58 | 8.54 |
| | MRU 12 | | 7.99 | 7.66 | 8.07 | 7.91 |
| 3×996+484-tone (FIG. 6(f)) | MRU 1 | 8.85 | 6.89 | 6.83 | 7.07 | 7.03 |
| | MRU 2 | | 7.36 | 7.36 | 7.62 | 7.71 |
| | MRU 3 | | 8.17 | 8.21 | 8.49 | 8.71 |
| | MRU 4 | | 6.55 | 6.98 | 6.68 | 6.85 |
| | MRU 5 | | 7.08 | 7.2 | 7.29 | 7.53 |
| | MRU 6 | | 7.05 | 6.79 | 7.12 | 7.04 |
| | MRU 7 | | 7.97 | 8.48 | 8.34 | 8.5 |
| | MRU 8 | | 7.4 | 7.72 | 7.59 | 7.62 |
| | MRU 9 | | 7.52 | 7.29 | 7.52 | 7.65 |
| | MRU 10 | | 8.85 | 8.43 | 8.78 | 8.73 |
| | MRU 11 | | 6.41 | 6.76 | 6.97 | 7.23 |
| | MRU 12 | | 7.23 | 7.16 | 7.39 | 7.52 |
| | MRU 13 | | 7.08 | 6.99 | 6.97 | 6.95 |
| | MRU 14 | | 7.77 | 8.25 | 8.22 | 8.47 |
| | MRU 15 | | 7.37 | 7.35 | 7.66 | 7.82 |
| | MRU 16 | | 7.08 | 7.01 | 7.05 | 7.22 |
| 2×996+484-tone (FIG. 6(g)) | MRU 1 | 9.61 | 6.63 | 7.52 | 6.92 | 7.27 |
| | MRU 2 | | 7.18 | 7.19 | 7.39 | 7.1 |
| | MRU 3 | | 7.85 | 8.02 | 8.09 | 8.24 |
| | MRU 4 | | 8.17 | 7.72 | 8.01 | 7.87 |
| | MRU 5 | | 6.82 | 7.09 | 7.3 | 7.09 |
| | MRU 6 | | 6.81 | 7.53 | 7.13 | 7.35 |
| | MRU 7 | | 6.75 | 6.88 | 7.02 | 7.19 |
| | MRU 8 | | 8.32 | 7.62 | 8.3 | 7.99 |
| | MRU 9 | | 5.96 | 5.85 | 6.32 | 6.42 |
| | MRU 10 | | 8.32 | 7.59 | 8.3 | 7.95 |
| | MRU 11 | | 7.02 | 7.02 | 7.25 | 7.39 |
| | MRU 12 | | 9.52 | 9.06 | 9.61 | 9.36 |
| | MRU 13 | | 8.24 | 7.57 | 8.03 | 7.58 |
| | MRU 14 | | 6.87 | 7.1 | 7.23 | 7.37 |
| | MRU 15 | | 8.24 | 7.57 | 8.03 | 7.88 |
| | MRU 16 | | 5.81 | 5.8 | 5.84 | 6.16 |
| | MRU 17 | | 9.25 | 9.23 | 9.45 | 9.4 |
| | MRU 18 | | 7.52 | 7.24 | 7.45 | 7.54 |

(continued)

| RU/MRU type | RU/MRU pattern | Max PAPR (dB) | 0 degrees | 180 degrees | 60 degrees | 120 degrees |
|---|---|---|---|---|---|---|
| 996+484-tone (FIG. 6(h)) | MRU 1 | 7.88 | 7.53 | 7.24 | 7.74 | 7.34 |
| | MRU 2 | | 7.63 | 7.39 | 7.88 | 7.76 |
| | MRU 3 | | 7.54 | 7.3 | 7.74 | 7.35 |
| | MRU 4 | | 7.63 | 7.27 | 7.66 | 7.46 |
| | MRU 5 | | 7.67 | 7 | 7.71 | 7.45 |
| | MRU 6 | | 7.38 | 7.41 | 7.5 | 7.55 |
| | MRU 7 | | 7.54 | 7.3 | 7.74 | 7.35 |
| | MRU 8 | | 7.4 | 7.19 | 7.57 | 7.3 |
| | MRU 9 | | 7.38 | 6.94 | 7.6 | 7.46 |
| | MRU 10 | | 7.38 | 7.41 | 7.5 | 7.55 |
| | MRU 11 | | 7.44 | 7.03 | 7.61 | 7.46 |
| | MRU 12 | | 7.37 | 7.37 | 7.55 | 7.53 |

The MRU patterns and LTF sequences that correspond to 640 MHz and 480 MHz are described in detail above. A specific bandwidth value is not limited in embodiments. For example, a future bandwidth value may be 2×480 MHz. For a design of an MRU pattern and an LTF sequence that correspond to the 2×480 MHz bandwidth, refer to the foregoing implementations. Examples are not enumerated herein again.

S420: The transmit end sends the PPDU to the receive end, and correspondingly, the receive end receives the PPDU from the transmit end.

For example, if the transmit end may be an AP and the receive end may be a STA, the STA may be any one of one or more STAs. A transmission manner of the PPDU is not limited in embodiments. For details, refer to descriptions of a transmission manner that is of the PPDU between the AP and the STA and that is specified in an existing protocol or a future protocol. Details are not described herein.

In an example, if the transmit end is an AP and the receive end is a STA, the AP may send downlink information (for example, downlink data) to the STA based on frequency resource.

In another example, if the transmit end is a STA and the receive end is an AP, the STA may send uplink information (for example, uplink data) to the AP based on frequency resource.

Optionally, the transmit end is an AP, and the receive end is an AP; or the transmit end is a STA, and the receive end is a STA. This is not limited in this application.

It should be noted that, in embodiments, for ease of description, two communication parties are referred to as an AP and a STA. However, it should be understood that a name of a communication device is not limited in embodiments, provided that a corresponding function can be implemented. For example, the AP may be replaced with an access point, a base station, a terminal device, or the like, and the STA may be replaced with a non-AP station, a non-AP STA, a user, a terminal device, or the like. Examples are not described herein again.

S430: The receive end performs channel estimation based on the first sequence that passes through a wireless channel and a preset first sequence.

It should be understood that the preset first sequence is the first sequence in step S410. After receiving and parsing the PPDU, the receive end obtains the first sequence that passes through the wireless channel, and compares the first sequence with the preset first sequence, to complete channel estimation. For a specific implementation of channel estimation, refer to an existing solution. Details are not described herein.

According to the foregoing technical solutions, the LTF sequence with the low PAPR applicable to a larger bandwidth (for example, 640 MHz or 480 MHz) are designed, so that the low PAPR in the entire bandwidth and the low PAPR on the RU/MRU can be ensured. In addition, the LTF sequence has the low PAPR on a plurality of spatial streams in the multi-spatial stream transmission scenario, so that signal transmission quality can be improved, and communication performance of a user can be improved.

It should be understood that sequence numbers of the processes do not mean an execution sequence. The execution sequence of the processes should be determined according to functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, an AP and a STA) may alternatively be implemented by a component (for example, a chip or a circuit) that can be used in the device.

It may be further understood that, in embodiments of this application, interaction between the AP and the STA is mainly used as an example for description. This application is not limited thereto. The AP may be replaced with a transmit end device, and the transmit end device may be a network device or a terminal device. The STA may be replaced with a receive end device, and the receive end device may be a network device or a terminal device.

It may be further understood that some optional features in embodiments of this application may be independent of other features in some scenarios, or may be combined with other features in some scenarios. This is not limited.

The foregoing describes the method embodiments in embodiments of this application, and the following briefly describes corresponding apparatus embodiments. It should be understood that descriptions of the apparatus embodiments correspond to the descriptions of the method embodiments, and therefore for a part that is not described in detail, refer to the foregoing method embodiments.

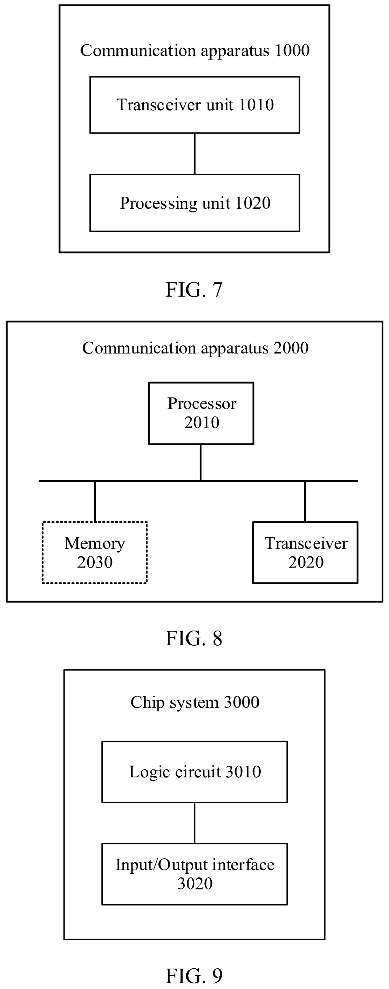

FIG. 7 is a diagram of a communication apparatus according to an embodiment of this application. As shown in FIG. 7, the communication apparatus 1000 may include a transceiver unit 1010 and/or a processing unit 1020. The transceiver unit 1010 may communicate with the outside, and the processing unit 1020 is configured to process data/information. The transceiver unit 1010 may also be referred to as a communication interface or a communication unit.

In a possible implementation, the communication apparatus 1000 may be the transmit end in the method 400, or may be a chip configured to implement a function of the transmit end in the method 400. The communication apparatus 1000 may implement the procedure performed by the transmit end in the method 400. The processing unit 1020 is configured to perform a processing-related operation of the transmit end in the method 400, and the transceiver unit 1010 is configured to perform a sending/receiving-related operation of the transmit end in the method 400.

For example, the processing unit 1020 is configured to generate a PPDU, where the PPDU includes a first field, the first field is used to carry a first sequence, the first sequence is used to perform channel estimation, the first sequence corresponds to a first bandwidth, and the first bandwidth is greater than 320 MHz. The transceiver unit 1010 is configured to send the PPDU.

It should be understood that the foregoing content is merely used as an example for understanding. The communication apparatus 1000 can further implement other steps, actions, or methods related to the transmit end in the method 400. Details are not described herein again.

In another possible implementation, the communication apparatus 1000 may implement the procedure performed by the receive end in the method embodiment. The transceiver unit 1010 is configured to perform a sending/receiving-related operation of the receive end in the method embodiment.

Optionally, in this implementation, the communication apparatus 1000 may further include the processing unit 1020. The processing unit 1020 is configured to perform a processing-related operation of the receive end in the method embodiment.

For example, the transceiver unit 1010 is configured to receive a physical layer protocol data unit PPDU, where the PPDU includes a first field, the first field carries a first sequence that passes through a wireless channel, the first sequence that passes through the wireless channel corresponds to a first bandwidth, and the first bandwidth is greater than 320 MHz. The processing unit 1020 is configured to perform channel estimation based on the first sequence that passes through the wireless channel and a preset first sequence.

It should be understood that the foregoing content is merely used an example for understanding. The communication apparatus 1000 can further implement other steps, actions, or methods related to the receive end in the method 400. Details are not described herein again.

In another possible implementation, the communication apparatus 1000 can implement steps, actions, or methods related to the transmit end in the method 400, or implement steps, actions, or methods related to the receive end in the method 400. Details about performing the method 400 by the communication apparatus 1000 are described in the foregoing method embodiments. For brevity, details are not described herein again.

It should be understood that the communication apparatus 1000 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The communication apparatus 1000 has a function of implementing a corresponding step performed by the transmit end in the foregoing method, or the communication apparatus 1000 has a function of implementing a corresponding step performed by the receive end in the foregoing method. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit like the processing unit may be replaced with a processor, to respectively perform a sending/receiving operation and a related processing operation in the method embodiments.

In addition, the transceiver unit may alternatively be a transceiver circuit (for example, may include a receiving circuit and a sending circuit), and the processing unit may be a processing circuit. In embodiments of this application, the communication apparatus 1000 may be the transmit end or the receive end in the foregoing embodiments, or may be a chip or a chip system, for example, a system-on-a-chip (system-on-a-chip, SoC). The transceiver unit may be an input/output circuit or a communication interface. The processing unit may be a processor, a microprocessor, or an integrated circuit that is integrated on the chip. This is not limited herein.

FIG. 8 is a diagram of another structure of a communication apparatus according to an embodiment of this application. As shown in FIG. 8, the communication apparatus 2000 includes at least one processor 2010 and at least one transceiver 2020. The processor 2010 is coupled to a memory, and is configured to execute instructions stored in the memory, to control the transceiver 2020 to send a signal and/or receive a signal. Optionally, the communication apparatus 2000 further includes the memory 2030, configured to store the instructions.

In an example, the processor 2010 is configured to generate a PPDU, where the PPDU includes a first field, the first field is used to carry a first sequence, the first sequence is used to perform channel estimation, the first sequence corresponds to a first bandwidth, and the first bandwidth is greater than 320 MHz. The transceiver 2020 is configured to send the PPDU.

In another example, the transceiver 2020 is configured to receive a PPDU, where the PPDU includes a first field, the first field carries a first sequence that passes through a wireless channel, the first sequence that passes through the wireless channel corresponds to a first bandwidth, and the first bandwidth is greater than 320 MHz. The processor 2010 is configured to perform channel estimation based on the first sequence that passes through the wireless channel and a preset first sequence.

It should be understood that the foregoing content is merely used as an example for understanding. The communication apparatus 2000 can further implement steps, actions, or methods related to the transmit end and receive end in the method 400, or other steps, actions, or methods related to the transmit end and receive end in the method 400. For brevity, details are not described herein again.

It should be understood that, in the communication apparatus 1000 or the communication apparatus 2000, the processor and the memory may be integrated into one processing apparatus, and the processor is configured to execute program code stored in the memory to implement the foregoing functions. During specific implementation, the memory may alternatively be integrated into the processor, or may be independent of the processor.

It should be further understood that the transceiver 2020 may include a receiver (or referred to as a receiver machine) and a transmitter (or referred to as a transmitter machine). The transceiver 2020 may further include an antenna, and there may be one or more antennas. The transceiver 2020 may be a communication interface or an interface circuit.

The processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include but not limited to these and any other appropriate types of memories.

FIG. 9 is a diagram of a chip system 3000 according to an embodiment of this application. As shown in FIG. 9, the chip system 3000 (or may be referred to as a processing system) includes a logic circuit 3010 and an input/output interface (input/output interface) 3020.

The logic circuit 3010 may be a processing circuit in the chip system 3000. The logic circuit 3010 invokes instructions in a storage unit, to enable the chip system 3000 to implement the method and the functions in embodiments of this application. The input/output interface 3020 may be an input/output circuit in the chip system 3000, and outputs information processed by the logic circuit 3010, or inputs to-be-processed data or signaling information to the logic circuit 3010 for processing.

For example, the logic circuit 3010 is configured to generate a PPDU, where the PPDU includes a first field, the first field is used to carry a first sequence, the first sequence is used by a receive end to perform channel estimation, the first sequence corresponds to a first bandwidth, and the first bandwidth is greater than 320 MHz. The input/output interface 3020 is configured to send the PPDU to the receive end.

For another example, the input/output interface 3020 is configured to receive a PPDU, where the PPDU includes a first field, the first field carries a first sequence that passes through a wireless channel, the first sequence that passes through the wireless channel corresponds to a first bandwidth, and the first bandwidth is greater than 320 MHz. The logic circuit 3010 is configured to perform channel estimation based on the first sequence that passes through the wireless channel and a preset first sequence.

It should be understood that details about performing the foregoing method by the input/output interface 3020 and the logic circuit 3010 are described in detail in the foregoing method embodiment. For brevity, details are not described herein again.

According to the method provided in embodiments of this application, this application further provides a computer program product. The computer program product includes computer program code. When the computer program code is run on a computer, the computer is enabled to perform the method in the foregoing method embodiment.

According to the method provided in embodiments of this application, this application further provides a computer-readable medium. The computer-readable medium stores program code. When the program code is run on a computer, the computer is enabled to perform the method in the foregoing method embodiment.

According to the method provided in embodiments of this application, this application further provides a system. The system includes the foregoing transmit end and/or receive end, namely, the AP and/or the STA.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiment. Details are not described herein again.

In several embodiments provided in this application, it should be understood that the disclosed system, apparatuses, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, applied to a transmit end, wherein the method comprises:

   generating a physical layer protocol data unit PPDU, wherein the PPDU comprises a first field, the first field is used to carry a first sequence, the first sequence is used by a receive end to perform channel estimation, the first sequence corresponds to a first bandwidth, and the first bandwidth is greater than 320 MHz; and
   sending the PPDU to the receive end.

2. The method according to claim 1, wherein the first sequence comprises N subsequences, and any one of the N subsequences is obtained based on a base sequence and a parameter corresponding to the subsequence.

3. The method according to claim 2, wherein when the first bandwidth is 640 MHz, parameters $[c_1, \cdots, c_{16}]$ corresponding to the N subsequences satisfy any one of the following:

$$[c_1, \cdots, c_{16}] = \pm[1, -1, 1, 1, 1, -1, -1, -1, -1, 1, -1, -1, -1, 1, 1, 1];$$

or

$$[c_1, \cdots, c_{16}] = \pm[1, 1, 1, -1, -1, -1, 1, -1, -1, -1, -1, 1, 1, 1, -1, 1];$$

or

$$[c_1, \cdots, c_{16}] = \pm[1, 1, -1, 1, -1, -1, -1, 1, -1, -1, 1, -1, 1, 1, 1, -1];$$

or

$$[c_1, \cdots, c_{16}] = \pm[-1, 1, 1, 1, -1, 1, -1, -1, 1, -1, -1, -1, 1, -1, 1, 1];$$

or

$$[c_1, \cdots, c_{16}] = \pm[1, 1, -1, 1, -1, -1, -1, 1, -1, 1, 1, -1, 1, 1, 1, -1];$$

or

$$[c_1, \cdots, c_{16}] = \pm[-1, 1, 1, 1, -1, 1, 1, -1, 1, -1, -1, -1, 1, -1, 1, 1];$$

or

$$[c_1, \cdots, c_{16}] = \pm[1, 1, -1, 1, -1, -1, -1, 1, 1, -1, 1, -1, -1, 1, -1, -1];$$

or

$$[c_1, \cdots, c_{16}] = \pm[-1, -1, 1, -1, -1, 1, -1, 1, 1, -1, -1, -1, 1, -1, 1, 1];$$

or

$$[c_1, \cdots, c_{16}] = \pm[1, -1, \ 1, \ 1, \ 1, -1, -1, -1, -1, \ 1, \ 1, \ 1, \ 1, \ 1, -1, \ 1];$$

or

$$[c_1, \cdots, c_{16}] = \pm[1, -1, \ 1, \ 1, \ 1, 1, 1, -1, -1, -1, -1, \ 1, \ 1, \ 1, -1, \ \mathbf{1}];$$

or

$$[c_1, \cdots, c_{16}] = \pm[1, -1, \ 1, -1, -1, \ 1, -1, -1, \ 1, \ 1, \ 1, \ 1, -1, -1, -1, -1];$$

or

$$[c_1, \cdots, c_{16}] = \pm[-1, -1, -1, -1, 1, \ 1, 1, 1, -1, -1, \ 1, -1, -1, 1, -1, 1];$$

or

$$[c_1, \cdots, c_{16}] = \pm[1, -1, -1, -1, -1, \ 1, \ 1, -1, \ 1, \ 1, \ 1, \ 1, -1, \ 1, -1, -1];$$

or

$$[c_1, \cdots, c_{16}] = \pm[-1, -1, 1, -1, 1, \ 1, \ 1, 1, -1, \ 1, \ 1, -1, -1, -1, -1, 1];$$

or

$$[c_1, \cdots, c_{16}] = \pm[1, -1, \ 1, -1, -1, -1, -1, -1, \ 1, \ 1, -1, \ 1, -1, \ 1, \ 1, -1];$$

or

$$[c_1, \cdots, c_{16}] = \pm[-1, 1, 1, -1, 1, -1, \ 1, 1, -1, -1, -1, -1, -1, \ 1, -1, 1].$$

**4.** The method according to claim 2, wherein when the first bandwidth is 480 MHz, parameters $[c_1, \ldots, c_{12}]$ corresponding to the N subsequences satisfy any one of the following:

$$[c_1, \cdots, c_{12}] = \pm[1, -1, \ 1, \ 1, \ 1, -1, -1, -1, -1, \ 1, -1, -1];$$

or

$$[c_1, \cdots, c_{12}] = \pm[-1, -1, \ 1, -1, -1, -1, -1, 1, \ 1, \ 1, -1, 1];$$

or

$$[c_1, \cdots, c_{12}] = \pm[1, \ 1, -1, \ 1, -1, -1, -1, \ 1, -1, -1, \ 1, -1];$$

or

$$[c_1, \cdots, c_{12}] = \pm[-1, 1, -1, -1, 1, -1, -1, -1, \ 1, -1, \ 1, 1];$$

or

$$[c_1, \cdots, c_{12}] = \pm[1,\ 1, -1,\ 1, -1, -1, -1,\ 1, -1,\ 1,\ 1, -1];$$

or

$$[c_1, \cdots, c_{12}] = \pm[-1, 1, 1, -1, 1, -1, -1, -1,\ 1, -1,\ 1, 1];$$

or

$$[c_1, \cdots, c_{12}] = \pm[1,\ 1, -1,\ 1, -1, -1, -1,\ 1,\ 1, -1,\ 1, -1];$$

or

$$[c_1, \cdots, c_{12}] = \pm[-1, 1, -1,\ 1,\ 1, -1, -1, -1, 1, -1, 1, 1];$$

or

$$[c_1, \cdots, c_{12}] = \pm[1, -1,\ 1,\ 1,\ 1, -1, -1, -1, -1,\ 1,\ 1,\ 1];$$

or

$$[c_1, \cdots, c_{12}] = \pm[1, 1, 1, -1, -1, -1, -1,\ 1,\ 1,\ 1, -1,\ 1];$$

or

$$[c_1, \cdots, c_{12}] = \pm[1, -1,\ 1, -1, -1,\ 1, -1, -1,\ 1,\ 1,\ 1,\ 1];$$

or

$$[c_1, \cdots, c_{12}] = \pm[1,\ 1, 1, 1, -1, -1,\ 1, -1, -1, 1, -1, 1];$$

or

$$[c_1, \cdots, c_{12}] = \pm[\ 1, -1, -1, -1, -1,\ 1,\ 1, -1,\ 1,\ 1,\ 1,\ 1];$$

or

$$[c_1, \cdots, c_{12}] = \pm[1,\ 1,\ 1, 1, -1,\ 1,\ 1, -1, -1, -1, -1, 1];$$

or

$$[c_1, \cdots, c_{12}] = \pm[1, -1,\ 1, -1, -1, -1, -1, -1,\ 1,\ 1, -1,\ 1];$$

or

$$[c_1, \cdots, c_{12}] = \pm[1, -1,\ 1, 1, -1, -1, -1, -1, -1,\ 1, -1, 1];$$

or

$$[c_1, \cdots, c_{12}] = \pm[1, -1, -1, -1, -1, 1, -1, -1, -1, 1, 1, 1];$$

or

$$[c_1, \cdots, c_{12}] = \pm[1, 1, 1, -1, -1, -1, 1, -1, -1, -1, -1, 1];$$

or

$$[c_1, \cdots, c_{12}] = \pm[-1, -1, -1, 1, -1, -1, 1, -1, 1, 1, 1, -1];$$

or

$$[c_1, \cdots, c_{12}] = \pm[-1, 1, 1, 1, -1, 1, -1, -1, 1, -1, -1, -1];$$

or

$$[c_1, \cdots, c_{12}] = \pm[-1, -1, -1, 1, -1, 1, 1, -1, 1, 1, 1, -1];$$

or

$$[c_1, \cdots, c_{12}] = \pm[-1, 1, 1, 1, -1, 1, 1, -1, 1, -1, -1, -1];$$

or

$$[c_1, \cdots, c_{12}] = \pm[-1, -1, -1, 1, 1, -1, 1, -1, -1, 1, -1, -1];$$

or

$$[c_1, \cdots, c_{12}] = \pm[-1, -1, 1, -1, -1, 1, -1, 1, 1, -1, -1, -1];$$

or

$$[c_1, \cdots, c_{12}] = \pm[1, -1, -1, -1, -1, 1, 1, 1, 1, 1, -1, 1];$$

or

$$[c_1, \cdots, c_{12}] = \pm[1, -1, 1, 1, 1, 1, 1, -1, -1, -1, -1, 1];$$

or

$$[c_1, \cdots, c_{12}] = \pm[-1, 1, -1, -1, 1, 1, 1, 1, -1, -1, -1, -1];$$

or

$$[c_1, \cdots, c_{12}] = \pm[-1, -1, -1, -1, 1, 1, 1, 1, -1, -1, 1, -1];$$

or

$$[c_1, \cdots, c_{12}] = \pm[-1,\ 1,\ 1, -1,\ 1,\ 1,\ 1,\ 1, -1,\ 1, -1, -1];$$

or

$$[c_1, \cdots, c_{12}] = \pm[-1, -1, 1, -1, 1,\ 1,\ 1, 1, -1,\ 1,\ 1, -1];$$

or

$$[c_1, \cdots, c_{12}] = \pm[-1, -1, -1, -1,\ 1,\ 1, -1,\ 1, -1,\ 1,\ 1, -1];$$

or

$$[c_1, \cdots, c_{12}] = \pm[-1, 1, 1, -1, 1, -1,\ 1, 1, -1, -1, -1, -1].$$

5. A communication method, applied to a receive end and comprising:

receiving a physical layer protocol data unit PPDU, wherein the PPDU comprises a first field, the first field carries a first sequence that passes through a wireless channel, the first sequence that passes through the wireless channel corresponds to a first bandwidth, and the first bandwidth is greater than 320 MHz; and
performing channel estimation based on the first sequence that passes through the wireless channel and a preset first sequence.

6. The method according to claim 5, wherein the preset first sequence comprises N subsequences, and any one of the N subsequences is obtained based on a base sequence and a parameter corresponding to the subsequence.

7. The method according to claim 6, wherein when the first bandwidth is 640 MHz, parameters $[c_1, \cdots, c_{14}]$ corresponding to the N subsequences satisfy any one of the following:

$$[c_1, \cdots, c_{16}] = \pm[1, -1,\ 1,\ 1,\ 1, -1, -1, -1, -1,\ 1, -1, -1, -1,\ 1,\ 1,\ 1];$$

or

$$[c_1, \cdots, c_{16}] = \pm[1,\ 1,\ 1, -1, -1, -1,\ 1, -1, -1, -1, -1, 1,\ 1,\ 1, -1, 1];$$

or

$$[c_1, \cdots, c_{16}] = \pm[1,\ 1, -1,\ 1, -1, -1, -1,\ 1, -1, -1,\ 1, -1,\ 1,\ 1,\ 1, -1];$$

or

$$[c_1, \cdots, c_{16}] = \pm[-1,\ 1, 1,\ 1, -1, 1, -1, -1, 1, -1, -1, -1,\ 1, -1,\ 1, 1];$$

or

$$[c_1, \cdots, c_{16}] = \pm[1,\ 1, -1,\ 1, -1, -1, -1,\ 1, -1,\ 1,\ 1, -1,\ 1,\ 1,\ 1, -1];$$

or

$$[c_1, \cdots, c_{16}] = \pm[-1,\ 1, 1,\ 1, -1, 1, 1, -1, 1, -1, -1, -1,\ 1, -1,\ 1, 1];$$

or

$$[c_1, \cdots, c_{16}] = \pm[1,\ 1, -1,\ 1, -1, -1, -1,\ 1,\ 1, -1,\ 1, -1, -1,\ 1, -1, -1];$$

or

$$[c_1, \cdots, c_{16}] = \pm[-1, -1, 1, -1, -1, 1, -1,\ 1,\ 1, -1, -1, -1, 1, -1, 1, 1];$$

or

$$[c_1, \cdots, c_{16}] = \pm[1, -1,\ 1,\ 1,\ 1, -1, -1, -1, -1,\ 1,\ 1,\ 1,\ 1, -1,\ 1];$$

or

$$[c_1, \cdots, c_{16}] = \pm[1, -1,\ 1,\ 1,\ 1, 1, 1, -1, -1, -1, -1,\ 1,\ 1,\ 1, -1,\ 1];$$

or

$$[c_1, \cdots, c_{16}] = \pm[1, -1,\ 1, -1, -1,\ 1, -1, -1,\ 1,\ 1,\ 1,\ 1, -1, -1, -1, -1];$$

or

$$[c_1, \cdots, c_{16}] = \pm[-1, -1, -1, -1, 1,\ 1, 1, 1, -1, -1,\ 1, -1, -1, 1, -1, 1];$$

or

$$[c_1, \cdots, c_{16}] = \pm[1, -1, -1, -1, -1,\ 1,\ 1, -1,\ 1,\ 1,\ 1,\ 1, -1,\ 1, -1, -1];$$

or

$$[c_1, \cdots, c_{16}] = \pm[-1, -1, 1, -1, 1,\ 1,\ 1, 1, -1,\ 1,\ 1, -1, -1, -1, -1, 1];$$

or

$$[c_1, \cdots, c_{16}] = \pm[1, -1,\ 1, -1, -1, -1, -1, -1,\ 1,\ 1, -1,\ 1, -1,\ 1,\ 1, -1];$$

or

$$[c_1, \cdots, c_{16}] = \pm[-1, 1, 1, -1, 1, -1,\ 1, 1, -1, -1, -1, -1, -1,\ 1, -1, 1].$$

8. The method according to claim 6, wherein when the first bandwidth is 480 MHz, parameters $[c_1, \ldots, c_{12}]$ corresponding to the N subsequences satisfy any one of the following:

$$[c_1, \cdots, c_{12}] = \pm[1, -1,\ 1,\ 1,\ 1, -1, -1, -1, -1,\ 1, -1, -1];$$

or

$$[c_1, \cdots, c_{12}] = \pm[-1, -1,\ 1, -1, -1, -1, -1, 1,\ 1,\ 1, -1, 1];$$

or

$$[c_1, \cdots, c_{12}] = \pm[1, \; 1, -1, \; 1, -1, -1, -1, \; 1, -1, -1, \; 1, -1];$$

or

$$[c_1, \cdots, c_{12}] = \pm[-1, 1, -1, -1, 1, -1, -1, -1, \; 1, -1, \; 1, 1];$$

or

$$[c_1, \cdots, c_{12}] = \pm[1, \; 1, -1, \; 1, -1, -1, -1, \; 1, -1, \; 1, \; 1, -1];$$

or

$$[c_1, \cdots, c_{12}] = \pm[-1, 1, 1, -1, 1, -1, -1, -1, \; 1, -1, \; 1, 1];$$

or

$$[c_1, \cdots, c_{12}] = \pm[1, \; 1, -1, \; 1, -1, -1, -1, \; 1, \; 1, -1, \; 1, -1];$$

or

$$[c_1, \cdots, c_{12}] = \pm[-1, 1, -1, \; 1, \; 1, -1, -1, -1, 1, -1, 1, 1];$$

or

$$[c_1, \cdots, c_{12}] = \pm[1, -1, \; 1, \; 1, \; 1, -1, -1, -1, -1, \; 1, \; 1, \; 1];$$

or

$$[c_1, \cdots, c_{12}] = \pm[1, 1, 1, -1, -1, -1, -1, \; 1, \; 1, \; 1, -1, \; 1];$$

or

$$[c_1, \cdots, c_{12}] = \pm[1, -1, \; 1, -1, -1, \; 1, -1, -1, \; 1, \; 1, \; 1, \; 1];$$

or

$$[c_1, \cdots, c_{12}] = \pm[1, \; 1, 1, 1, -1, -1, \; 1, -1, -1, 1, -1, 1];$$

or

$$[c_1, \cdots, c_{12}] = \pm[1, -1, -1, -1, -1, \; 1, \; 1, -1, \; 1, \; 1, \; 1, \; 1];$$

or

$$[c_1, \cdots, c_{12}] = \pm[1, \; 1, \; 1, 1, -1, \; 1, \; 1, -1, -1, -1, -1, 1];$$

or

$$[c_1, \cdots, c_{12}] = \pm[1, -1, \ 1, -1, -1, -1, -1, -1, \ 1, \ 1, -1, \ 1];$$

or

$$[c_1, \cdots, c_{12}] = \pm[1, -1, \ 1, 1, -1, -1, -1, -1, -1, \ 1, -1, 1];$$

or

$$[c_1, \cdots, c_{12}] = \pm[1, -1, -1, -1, -1, \ 1, -1, -1, -1, \ 1, \ 1, \ 1];$$

or

$$[c_1, \cdots, c_{12}] = \pm[1, \ 1, \ 1, -1, -1, -1, \ 1, -1, -1, -1, -1, 1];$$

or

$$[c_1, \cdots, c_{12}] = \pm[-1, -1, -1, \ 1, -1, -1, \ 1, -1, \ 1, \ 1, \ 1, -1];$$

or

$$[c_1, \cdots, c_{12}] = \pm[-1, \ 1, 1, \ 1, -1, 1, -1, -1, 1, -1, -1, -1];$$

or

$$[c_1, \cdots, c_{12}] = \pm[-1, -1, -1, \ 1, -1, \ 1, \ 1, -1, \ 1, \ 1, \ 1, -1];$$

or

$$[c_1, \cdots, c_{12}] = \pm[-1, \ 1, 1, \ 1, -1, 1, 1, -1, 1, -1, -1, -1];$$

or

$$[c_1, \cdots, c_{12}] = \pm[-1, -1, -1, \ 1, \ 1, -1, \ 1, -1, -1, \ 1, -1, -1];$$

or

$$[c_1, \cdots, c_{12}] = \pm[-1, -1, 1, -1, -1, 1, -1, \ 1, \ 1, -1, -1, -1];$$

or

$$[c_1, \cdots, c_{12}] = \pm[1, -1, -1, -1, -1, \ 1, \ 1, \ 1, \ 1, \ 1, -1, \ 1];$$

or

$$[c_1, \cdots, c_{12}] = \pm[1, -1, \ 1, \ 1, \ 1, 1, 1, -1, -1, -1, -1, \ 1];$$

or

$$[c_1, \cdots, c_{12}] = \pm[-1,\ 1, -1, -1,\ 1,\ 1,\ 1,\ 1, -1, -1, -1, -1];$$

or

$$[c_1, \cdots, c_{12}] = \pm[-1, -1, -1, -1, 1,\ 1, 1, 1, -1, -1,\ 1, -1];$$

or

$$[c_1, \cdots, c_{12}] = \pm[-1,\ 1,\ 1, -1,\ 1,\ 1,\ 1,\ 1, -1,\ 1, -1, -1];$$

or

$$[c_1, \cdots, c_{12}] = \pm[-1, -1, 1, -1, 1,\ 1,\ 1, 1, -1,\ 1,\ 1, -1];$$

or

$$[c_1, \cdots, c_{12}] = \pm[-1, -1, -1, -1,\ 1,\ 1, -1,\ 1, -1,\ 1,\ 1, -1];$$

or

$$[c_1, \cdots, c_{12}] = \pm[-1, 1, 1, -1, 1, -1,\ 1, 1, -1, -1, -1, -1].$$

9. A communication apparatus, comprising a unit or a module configured to perform the method according to any one of claims 1 to 4.

10. A communication apparatus, comprising a unit or a module configured to perform the method according to any one of claims 5 to 8.

11. A communication apparatus, comprising a processor, wherein the processor is configured to execute a computer program or instructions stored in a memory, to enable the communication apparatus to perform the method according to any one of claims 1 to 4.

12. A communication apparatus, comprising a processor, wherein the processor is configured to execute a computer program or instructions stored in a memory, to enable the communication apparatus to perform the method according to any one of claims 5 to 8.

13. A computer-readable storage medium, wherein the computer-readable storage medium stores a computer program or instructions, and when the computer program or instructions are run on a communication apparatus, the communication apparatus is enabled to perform the method according to any one of claims 1 to 4, or perform the method according to any one of claims 5 to 8.

14. A computer program product, wherein the computer program product comprises a computer program or instructions for performing the method according to any one of claims 1 to 4, or comprises a computer program or instructions for performing the method according to any one of claims 5 to 8.

FIG. 1

FIG. 2

One spatial stream  Two spatial streams

| $1*\text{LTF}_k$ 0 ns | $-1*\text{LTF}_k$ 0 ns | $1*\text{LTF}_k$ 0 ns | $1*\text{LTF}_k$ 0 ns |
|---|---|---|---|
| $1*\text{LTF}_k$ $-400$ ns | $1*\text{LTF}_k$ $-400$ ns | $-1\times\text{LTF}_k$ $-400$ ns | $1*\text{LTF}_k$ $-400$ ns |
| $1*\text{LTF}_k$ $-200$ ns | $1*\text{LTF}_k$ $-200$ ns | $1*\text{LTF}_k$ $-200$ ns | $-1*\text{LTF}_k$ $-200$ ns |
| $-1*\text{LTF}_k$ $-600$ ns | $1*\text{LTF}_k$ $-600$ ns | $1*\text{LTF}_k$ $-600$ ns | $1*\text{LTF}_k$ $-600$ ns |

Three spatial streams

Four spatial streams

$\longrightarrow$ Time $\longrightarrow$

FIG. 3

400

Transmit end

Receive end

S410: Generate a PPDU

S420: PPDU $\longrightarrow$

S430: Perform channel estimation based on a first sequence that passes through a wireless channel and a preset first sequence

FIG. 4

FIG. 5(a)

FIG. 5(b)

FIG. 5(c)

FIG. 5(d)

FIG. 5(e)

FIG. 5(f)

FIG. 5(g)

FIG. 5(h)

FIG. 5(i)

FIG. 6(a)

Null subcarriers

DC

Null subcarriers

5×996-tone MRU 1

996   2×996   2×996

5×996-tone MRU 2

996   2×996   2×996

5×996-tone MRU 3

2×996   996   2×996

5×996-tone MRU 4

2×996   996   2×996

5×996-tone MRU 5

2×996   2×996   996

5×996-tone MRU 6

2×996   2×996   996

FIG. 6(b)

Null subcarriers

DC

Null subcarriers

2×996-tone RUs

2×996   2×996   2×996

4×996-tone MRU 1

2×996   2×996

4×996-tone MRU 2

2×996   2×996

FIG. 6(c)

FIG. 6(d)

FIG. 6(e)

FIG. 6(f)

FIG. 6(g)

FIG. 6(h)

Communication apparatus 1000

Transceiver unit 1010

Processing unit 1020

FIG. 7

Communication apparatus 2000

Processor 2010

Memory 2030

Transceiver 2020

FIG. 8

Chip system 3000

Logic circuit 3010

Input/Output interface 3020

FIG. 9

## INTERNATIONAL SEARCH REPORT

| International application No. |
|---|
| **PCT/CN2024/106501** |

| A. | CLASSIFICATION OF SUBJECT MATTER |
|---|---|

H04L 25/02(2006.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, EPTXT, USTXT, WOTXT: 带宽, 大于, 超过, 字段, 序列, 信道估计, PPDU, bandwidth, BW, bigger, than, longer, LTF, STF, channel estimation, sequence, 320M, 480M, 640M, 400M

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022007870 A1 (HUAWEI TECHNOLOGIES CO., LTD.) 13 January 2022 (2022-01-13) entire document | 1-14 |
| A | US 2023179461 A1 (HUAWEI TECHNOLOGIES CO., LTD.) 08 June 2023 (2023-06-08) entire document | 1-14 |
| A | WO 2021093858 A1 (HUAWEI TECHNOLOGIES CO., LTD.) 20 May 2021 (2021-05-20) entire document | 1-14 |
| A | WO 2023136596 A1 (LG ELECTRONICS INC.) 20 July 2023 (2023-07-20) entire document | 1-14 |
| PX | CN 117714252 A (MEDIATEK INC.) 15 March 2024 (2024-03-15) claim 1 | 1, 5, 9-14 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 September 2024** | **19 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 742 602 A1

## INTERNATIONAL SEARCH REPORT
### Information on patent family members

International application No.

**PCT/CN2024/106501**

| Patent document cited in search report | | | Publication date (day/month/year) | Patent family member(s) | | | Publication date (day/month/year) |
|---|---|---|---|---|---|---|---|
| WO | 2022007870 | A1 | 13 January 2022 | BR | 112023000445 | A2 | 28 March 2023 |
| | | | | EP | 4167534 | A1 | 19 April 2023 |
| | | | | EP | 4167534 | A4 | 13 December 2023 |
| US | 2023179461 | A1 | 08 June 2023 | BR | 112023002081 | A2 | 18 April 2023 |
| | | | | WO | 2022028370 | A1 | 10 February 2022 |
| WO | 2021093858 | A1 | 20 May 2021 | | None | | |
| WO | 2023136596 | A1 | 20 July 2023 | | None | | |
| CN | 117714252 | A | 15 March 2024 | US | 2024089160 | A1 | 14 March 2024 |
| | | | | TW | 202412483 | A | 16 March 2024 |
| | | | | EP | 4340309 | A1 | 20 March 2024 |

Form PCT/ISA/210 (patent family annex) (July 2022)

**REFERENCES CITED IN THE DESCRIPTION**

**Patent documents cited in the description**

- CN 202310952235X